# EUROPEAN PATENT SPECIFICATION

(11) **EP 2 178 340 B1**
(45) Date of publication and mention of the grant of the patent: **29.06.2016**
(21) Application number: 10152767.9
(22) Date of filing: 31.05.2007
(51) Int. Cl.: H05B 6/68

(54) **Power Control Unit for High-Frequency Dielectric Heating**
Einheit zur Leistungssteuerung für Hochfrequenz Dielektrik Heizung
Unité de régulation de puissance destinée au chauffage diélectrique hautes fréquences

(30) Priority: 02.06.2006 JP 2006154275; 07.06.2006 JP 2006158196; 07.06.2006 JP 2006158197; 07.06.2006 JP 2006158198
(43) Date of publication of application: 21.04.2010
(62) Divisional of application: 07744522.9
(73) Proprietor: Panasonic Corporation, Kadoma-shi Osaka 571-8501 (JP)
(72) Inventor: Suenaga, Haruo, Osaka-shi, Osaka 540-6207 (JP); Yasui, Kenji, Osaka-shi Osaka 540-6207 (JP); Sakai, Shinichi, Osaka-shi Osaka 540-6207 (JP); Shirokawa, Nobuo, Osaka-shi Osaka 540-6207 (JP); Moriya, Hideaki, Osaka-shi Osaka 540-6207 (JP); Kinoshita, Manabu, Osaka-shi Osaka 540-6207 (JP)
(74) Representative: Grünecker Patent- und Rechtsanwälte PartG mbB

(56) References cited:
- WO-A1-2005/099309
- JP-A- H0 583 950
- JP-A- 2002 359 065
- JP-A- 2003 257 604
- JP-A- 2005 044 670
- US-A1- 2004 074 900

## Description

This invention relates to high-frequency dielectric heating power control using a magnetron and in particular to high-frequency dielectric heating not affected by characteristic variations in magnetrons, the magnetron type, or the difference of the anode temperature of a magnetron.

Hitherto, a power supply installed in a high-frequency heating apparatus has been heavy and large and therefore there has been a demand for miniaturization and weight reduction of the power supply. Thus, miniaturization, weight reduction, and cost reduction by switching the power supply have been advanced aggressively in current various fields. In a high-frequency heating apparatus for cooking food by a microwave generated in a magnetron, miniaturization and weight reduction of the power supply for driving the magnetron have been required and have been accomplished by a switching inverter.
Examples of power supplies in a high-frequency apparatus can be found in patent documents 1 to 5. Patent document 3 represents the closest prior art [0003] Particularly, a high-frequency inverter for which the invention is intended is a bridge resonant-type circuit using one pair or two pairs of bridge arms each made up of two switching elements connected in series (for example, refer to patent document 1).

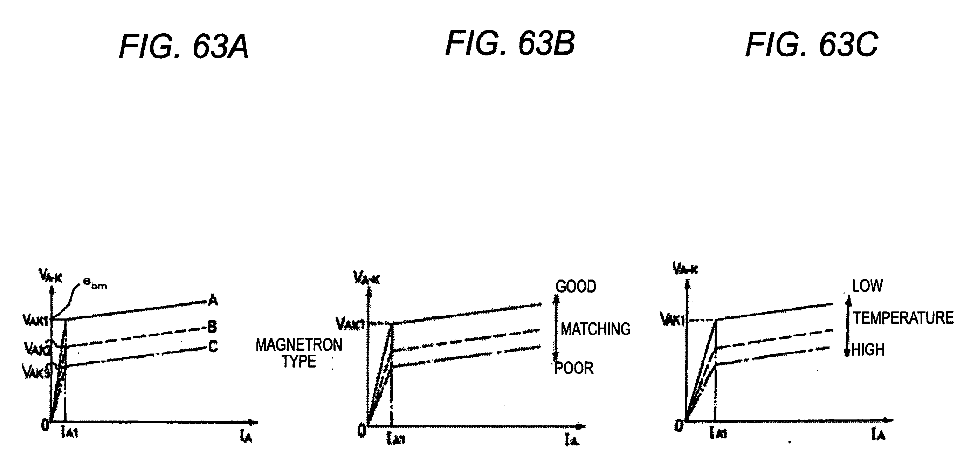

The switching mentioned above still involves a problem such that the current waveform of a commercial power supply supplied to the magnetron driving power supply becomes a waveform much containing a harmonic component combined with the fact that the magnetron is a nonlinear load indicated by the VAK (anode cathode voltage) - lb characteristic in FIG. 63.

On the other hand, the absolute value of the harmonic component becomes higher with an increase in power consumption of the magnetron driving power supply to satisfy the requirement for shortening the cooking time of a microwave oven and it is made more difficult to suppress the power supply harmonic current.

Various control methods to suppress the harmonic current are proposed (for example, refer to patent document 2).

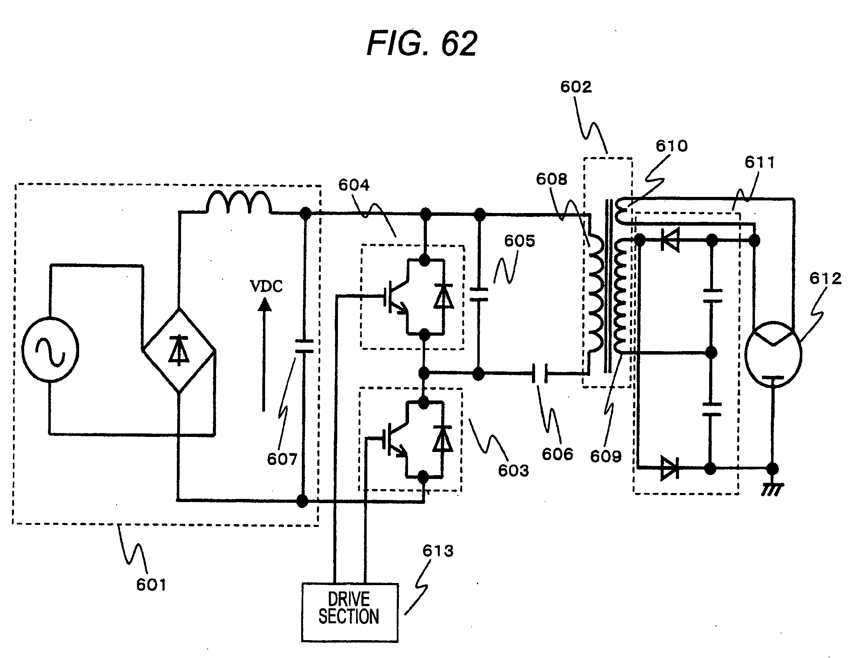

FIG. 62 shows an example of a magnetron driving power supply (inverter power supply) of a high-frequency heating apparatus. The high-frequency heating apparatus is made up of a DC power supply 601, a leakage transformer 602, a first semiconductor switching element 603, a second semiconductor switching element 604, a first capacitor 605 (snubber capacitor), a second capacitor 606 (resonant capacitor), a third capacitor 607 (smoothing capacitor), a drive section 613, a full-wave voltage-doubling rectifier 611, and a magnetron 612.

The DC power supply 601 full-wave-rectifies a commercial power supply and applies DC voltage VDC to a series circuit of the second capacitor 606 and a primary winding 608 of the leakage transformer 602. The first semiconductor switching element 603 and the second semiconductor switching element 604 are connected in series, and the series circuit (resonance circuit) of the primary winding 608 of the leakage transformer 602 and the second capacitor 606 is connected in parallel to the second semiconductor switching element 604.

The first capacitor 605 is connected in parallel to the second semiconductor switching element 604 and has a role like a snubber for suppressing a rush current (voltage) occurring in switching. AC high-voltage output occurring in a secondary winding 609 of the leakage transformer 602 is converted into a high DC voltage by the voltage-doubling rectifier 611 and the voltage is applied to between an anode and a cathode of the magnetron 612. A tertiary winding 610 of the leakage transformer 602 supplies a current to the cathode of the magnetron 612.

Each of the first semiconductor switching element 603 and the second semiconductor switching element 604 is made up of an IGBT and a free-wheeling diode connected in parallel thereto. Of course, the first, second semiconductor switching element 603, 604 is not limited to this type and a thyristor or a GTO switching element can also be used.

The drive section 613 contains an oscillation section for producing a drive signal of the first semiconductor switching element 603 and the second semiconductor switching element 604 and this oscillation section generates a square wave of a predetermined frequency and gives a DRIVE signal to the first semiconductor switching element 603 and the second semiconductor switching element 604. Just after either the first semiconductor switching element 603 or the second semiconductor switching element 604 is turned off, the voltage across the other semiconductor switching element is high and thus if the semiconductor switching element is turned off at this point in time, an overcurrent shaped like a spike flows and an unnecessary loss and noise occur. However, a dead time is provided, whereby turning off the semiconductor switching element is delayed until the voltage across the semiconductor switching element decreases to about 0 V, so that the unnecessary loss and noise can be prevented. Of course, at the inverse switching operation, similar operation is also performed.

The detailed operation of the DRIVE signal given by the drive section 613 and both the semiconductor switching elements in each operation mode is described in patent document 1 and therefore will not be discussed again.

As the feature of the circuit configuration in FIG. 62, the applied voltage to the first semiconductor switching element 603, the second semiconductor switching element 604 becomes equal to DC power supply voltage VDC, namely, 240√2 = 339 V even at European 240 V, the highest voltage in a family power supply. Therefore, if an abnormal time such as the recovery time from indirect lightning stroke surge or instantaneous power interruption is assumed, an inexpensive element having withstand voltage of about 600 V can be used as the first semiconductor switching element 603 and the second semiconductor switching element 604.

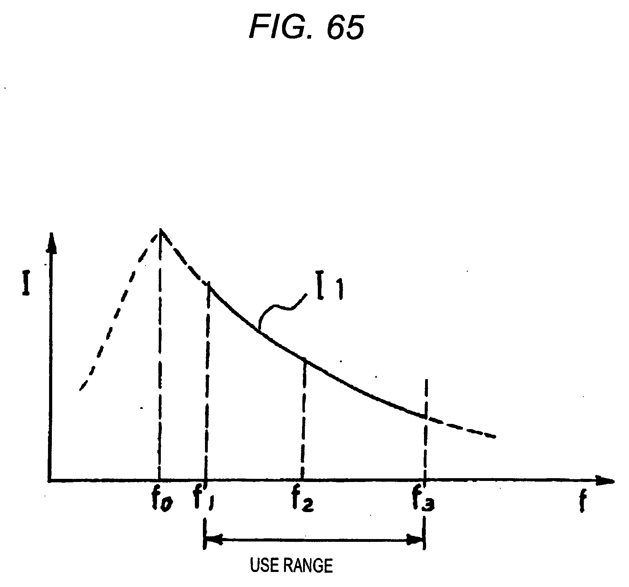

Next, FIG. 65 shows the resonance characteristic in this kind of inverter power supply circuit (a series resonance circuit made up of inductance L and capacitance C).

FIG. 65 is a drawing to show the frequency - current characteristic when a given voltage is applied; the horizontal axis corresponds to a switching frequency and the vertical axis corresponds to the current flowing into the primary side of a leakage transformer.

The impedance of the series resonance circuit becomes the minimum at a resonance frequency f0 and increases as it is brought away from the resonance frequency. Thus, as shown in the figure, a current I1 becomes the maximum at the resonance frequency f0 and decreases as the frequency range becomes higher from f1 to f3.

In the actual inverter operation, the frequency range of f1 to f3 (solid line part I1) higher than the resonance frequency f0 is used and further if the input power supply is AC like the commercial power supply, the switching frequency is changed in response to the phase of the commercial power supply conforming to the nonlinear load characteristic of a magnetron as described later.

Using the resonance characteristic in FIG. 65, in the phase in the proximity of 90 degrees and 270 degrees at which the instantaneous voltage of the commercial power supply for which the boosting ratio of the magnetron applied voltage to the commercial power supply voltage is not comparatively required becomes the highest, the switching frequency is set the highest in high-frequency output.

For example, to use a microwave oven in 200 W, the frequency becomes in the proximity of f3; to use the microwave oven in 500 W, the frequency becomes lower; to use the microwave oven in 1000 W, the frequency becomes further lower.

Of course, since the input power or the input current is controlled, the frequency changes with change in the commercial power supply voltage or the magnetron temperature.

In the phase in the vicinity of 0 degrees and 180 degrees at which the instantaneous voltage of the commercial power supply becomes the lowest, the switching frequency is lowered to the proximity of the resonance frequency f0, the boosting ratio of the magnetron applied voltage to the commercial power supply voltage is increased, and the phase width of the commercial power supply for emitting a radio wave from the magnetron is widened conforming to the characteristic of the magnetron which does not execute high-frequency oscillation unless a high voltage is applied.

Thus, the inverter operation frequency is changed for each power supply phase, whereby a current waveform containing much a basic wave (commercial power supply frequency) component and containing a small harmonic component can be realized.

However, the nonlinear characteristic of the magnetron varies from one magnetron type to another and also fluctuates due to the magnetron temperature and a heated substance (load) in a microwave oven.

FIGs. 63A to 63C are anode cathode applied voltage - anode current characteristic drawing of magnetrons; FIG. 63A is a drawing to show the difference based on the magnetron type; FIG. 63B is a drawing to show the difference based on good or poor matching with magnetron feeding; and FIG. 63D is a drawing to show the difference based on the magnetron temperature. In FIG. 63A to FIG. 63C, the vertical axis is the anode-to-cathode voltage and the horizontal axis is the anode current.

In FIG. 63A, A, B, and C are characteristic drawings of three types of magnetrons; for the magnetron A, only a slight current of IA1 or less flows until VAK becomes VAK1 (=ebm). However, when VAK exceeds VAK1, the current IA rapidly starts to increase. In this region, IA largely changes due to a slight difference of VAK. Next, for the magnetron B, VAK2 (=ebm) is lower than becomes VAK1; further for the magnetron C, VAK3 (=ebm) is further lower than VAK2. Since the nonlinear characteristic of the magnetron thus varies depending on the magnetron type A, B, C, in the modulation waveform matched with a magnetron with low ebm, when a magnetron with high ebm is used, the input current waveform is distorted. The apparatus in the prior art cannot deal with the problems. Then, producing a high-frequency dielectric heating circuit not affected by the magnetron type is a problem.

In FIG. 63B, the characteristic drawings of the three types of magnetrons show good, poor impedance matching of a heating chamber when viewed from the magnetron. If the impedance matching is good, VAK1 (=ebm) is the maximum; as the impedance matching worsens, VAK1 (=ebm) lessens. Since the nonlinear characteristic of the magnetron also thus varies largely depending on whether the impedance matching is good or poor, producing a high-frequency dielectric heating circuit not affected by the magnetron type is a problem.

In FIG. 63C, the characteristic drawings of the three types of magnetrons show high and low magnetron temperatures. If the temperature is low, VAK1 (=ebm) is the maximum; as the temperature becomes gradually higher, ebm becomes lower. Therefore, if the magnetron temperature is matched with a low temperature, when the magnetron temperature becomes high, the input current waveform is distorted.

Since the nonlinear characteristic of the magnetron also thus varies largely due to the magnetron temperature difference, producing a high-frequency dielectric heating circuit not affected by the magnetron type is a problem.

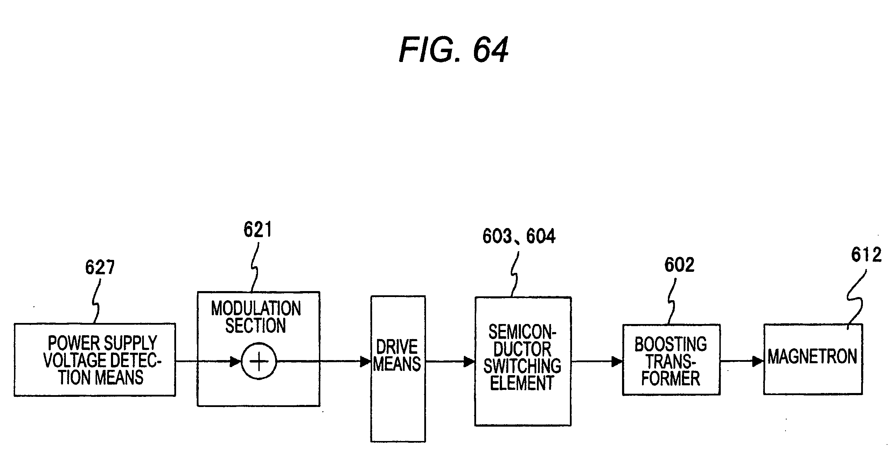

Then, to solve the problems, as shown in FIG. 64, a system is proposed wherein a modulation waveform provided as a modulation section 621 processes and shapes a commercial power supply voltage waveform detected by power supply voltage detection means 627 is used to modulate a drive pulse frequency of a semiconductor switching element 603, 604 and waveform shaping is executed according to a "prospective control system" so that an input current waveform approaches a sine wave to drive the semiconductor switching element 603, 604.
Patent document 1: Japanese Patent Publication No. 2000-58252
Patent document 2: Japanese Patent Publication No. 2004-6384
Patent document 3: Japanese Patent Publication No. 2002-359065
Patent document 4: WO 2005/099309
Patent document 5: US 2004/074900

However, it turned out that even if the "prospective control system" is adopted, the waveform shaping cannot follow the characteristic variations in magnetrons, the variations in the magnetron type, ebm (anode-to-cathode voltage) fluctuation according to the magnetron anode temperature or a load in a microwave oven, or power supply voltage fluctuation.

Further, the output voltage waveform of a smoothing circuit just before the first on operation start of the semiconductor switching element 603 becomes a direct current independently of the phase of the commercial power supply. Thus, as the modulation waveform provided by processing and shaping the commercial power supply voltage waveform is adopted, it is necessary to control the phase of the commercial power supply at the on operation start to the phase where the on time width (1/frequency) determined from the modulation waveform becomes the minimum, namely, the vicinity of 90 degrees, 270 degrees for preventing an overvoltage from being applied to the magnetron. Therefore, there is a problem of complicity of control adjustment for the purpose.

To realize the power supply current waveform shaping following the magnetron characteristic fluctuation described above, a system of creating a waveform reference signal and performing modulation control of the drive pulse frequency of a semiconductor switching element so that the input current waveform follows the waveform is also available, but involves a problem of complicity and upsizing of the circuit configuration.

Since the magnetron is a kind of vacuum tube as known, a delay time until oscillation output of an electromagnetic wave from supply of a current to a heater of the magnetron (which will be hereinafter referred to simply as start time) occurs. Although the start time is shortened by increasing the heater current, the impedance between the anode and the cathode of the magnetron is infinite and thus it is feared that the voltage applied to both the ends will become excessively high, and there is a problem of necessity for taking measures for preventing the detriment.

It is therefore an object of the invention to simplify the configuration of a unit to miniaturize the unit and provide a power control unit for a high-frequency dielectric heating and its control method not affected by variations in the magnetron type or characteristic, ebm (anode-to-cathode voltage) fluctuation according to the magnetron anode temperature or a load in a microwave oven, or power supply voltage fluctuation if present.

It is an object of the invention to provide a high-frequency dielectric heating method and unit for preventing the applied voltage to a magnetron from becoming excessive for the withstand voltage of each section and shortening the start time. Further, when power control to a small value is performed, the effect of the nonlinear load of a magnetron becomes large and it is an object of the invention to provide a power control unit for a high-frequency dielectric heating and its control method capable of suppressing degradation of the power factor at the time.

It is an object of the invention to provide a power control unit for a high-frequency dielectric heating and its control method not affected by variations in the magnetron type or characteristic, ebm (anode-to-cathode voltage) fluctuation according to the magnetron anode temperature or a load in a microwave oven, or power supply voltage fluctuation if present and capable of improving the running efficiency while preventing the applied voltage from becoming excessive for the withstand voltage of each section and shortening the start time at the non-oscillation time within the start time of the magnetron.
This is achieved by the features of independent claim 1.

According to the invention, the input current waveform information of the inverter for rectifying the AC power supply voltage into an alternating current of a predetermined frequency is converted into a drive signal of the semiconductor switching element of the inverter so as to suppress instantaneous fluctuation. For example, the input current waveform information is converted into the on and off drive signals of the semiconductor switching element of the inverter according to the frequency modulation system for use. Therefore, the control loop for correcting the input current by raising the switching frequency in the portion where the input current is large and lowering the switching frequency in the portion where the input current is small is formed. Therefore, if variations in the magnetron type or characteristic, ebm (anode-to-cathode voltage) fluctuation according to the magnetron anode temperature or a load in a microwave oven, or power supply voltage fluctuation exists, input current waveform shaping not affected by the variations or the fluctuation can be carried out according to the simple configuration and stable output of the magnetron can be accomplished according to the simple configuration.

Since the input voltage waveform information is also input to the correction loop, the start time of the magnetron is shortened and the power factor at the low input current time is improved.

FIG. 1 is a configuration diagram of a power control unit for a high-frequency dielectric heating according to embodiments 1 to 3. .
FIG. 2 is a configuration diagram of the power control unit for a high-frequency dielectric heating with an input current detection section implemented as an amplifier according to embodiments 1 to 3.
FIG. 3 is a circuit diagram to show the details of a sawtooth wave generator shown in FIG 1.
FIGs. 4A and 4B are circuit diagrams to show the details of the amplifier shown in FIG. 2.
FIGs. 5A, 5B and 5C are circuit diagrams of a mixer according to embodiment 4.
FIGs. 6A and 6B are waveform charts of parts of the power control unit for a high-frequency dielectric heating shown in FIG. 1.
FIGs. 7A, 7B and 7C are configuration diagrams of a mixer according to embodiment 5.
FIG. 8 is a configuration diagram of a mixer according to embodiment 6 .
FIG. 9 is a configuration diagram of a switching frequency limitation circuit and a slice control signal creation circuit concerning embodiments 7 and 8 .
FIG. 10 is a power control characteristic drawing concerning embodiment 8.
FIG. 11 is a drawing to show the relationship among various signals concerning embodiments 7 and 8.
FIG. 12 is a drawing visualizing changes in some of the signals shown in FIG. 11.
FIG. 13 is a configuration diagram of a power control unit for a high-frequency dielectric heating according to embodiment 9.
FIG. 14 is a configuration diagram of a power control unit for a high-frequency dielectric heating according to embodiment 10.
FIG. 15 is a configuration diagram of a power control unit for a high-frequency dielectric heating according to embodiment 11.
FIG. 16 is a configuration diagram of a power control unit for a high-frequency dielectric heating according to embodiments 12 to 14 of the invention.
FIG. 17 is a configuration diagram of the power control unit for a high-frequency dielectric heating having an input current detection section according to embodiments 12 to 14 of the invention.
FIG. 18 is a circuit diagram to show the details of a sawtooth wave generator shown in FIG. 16.
FIGs. 19A and 19B are detailed diagrams of the input current detection section shown in FIG. 17.
FIGs. 20A, 20B and 20C are circuit diagrams of a mixer according to embodiment 15 of the invention.
FIGs. 21 A and 21 B are charts to show the basic waveforms of parts of the power control unit for a high-frequency dielectric heating shown in FIG. 16.
FIGs. 22A and 22B are waveform charts of parts of the power control unit for a high-frequency dielectric heating shown in FIG. 16 when input voltage waveform information is added.
FIG. 23 is a diagram to show an example of a comparison and selection circuit shown in FIG. 20.
FIG. 24 is a detailed circuit diagram of a shaping circuit shown in FIG. 16.
FIGs. 25A, 25B and 25C are configuration diagrams of a mixer according to embodiment 16 of the invention.
FIG. 26 is a configuration diagram of a mixer according to embodiment 17 of the invention.
FIG. 27 is a diagram to show a switching circuit of input voltage waveform information according to embodiment 18 of the invention.
FIG. 28 is a time-series chart relevant to oscillation detection of a magnetron.
FIG. 29 is a configuration diagram of a switching frequency limitation circuit and a slice control signal creation circuit concerning embodiments 19 and 20 of the invention.
FIG. 30 is a power control characteristic drawing concerning embodiment 20 of the invention.
FIG. 31 is a drawing to show the relationship among various signals concerning embodiments 19 and 20 of the invention.
FIG. 32 is a drawing visualizing changes in some of the signals shown in FIG. 31.
FIG. 33 is a configuration diagram of a power control unit for a high-frequency dielectric heating according to embodiment 21 of the invention.
FIG. 34 is a configuration diagram of a power control unit for a high-frequency dielectric heating according to embodiment 22 of the invention.
FIG. 35 is a configuration diagram of a power control unit for a high-frequency dielectric heating according to embodiment 23 of the invention.
FIG. 36 is a configuration diagram of a power control unit for a high-frequency dielectric heating according to embodiments 24 to 26 of the invention.
FIG. 37 is a configuration diagram of the power control unit for a high-frequency dielectric heating having an input current detection section according to embodiments 24 to 26 of the invention.
FIG. 38 is a circuit diagram to show the details of a sawtooth wave generator shown in FIG. 36.
FIGs. 39A and 39B are detailed diagrams of the input current detection section shown in FIG. 37.
FIGs. 40A, 40B and 40C are circuit diagrams of a mixer according to embodiment 27 of the invention.
FIGs. 41A and 41B are charts to show the basic waveforms of parts of the power control unit for a high-frequency dielectric heating shown in FIG. 36.
FIGs. 42A and 42B are waveform charts of parts of the power control unit for a high-frequency dielectric heating shown in FIG. 36 when input voltage waveform information is added.
FIG. 43 is a diagram to show an example of an addition inversion circuit shown in FIG. 40.
FIG. 44 is a detailed circuit diagram of a shaping circuit shown in FIG. 36.
FIGs. 45A, 45B and 45C are configuration diagrams of a mixer according to embodiment 28 of the invention.
FIG. 46 is a configuration diagram of a mixer according to embodiment 29 of the invention.
FIG. 47 is a time-series chart relevant to oscillation detection of a magnetron.
FIG. 48 is a configuration diagram of a switching frequency limitation circuit and a slice control signal creation circuit concerning embodiments 30 and 31 of the invention.
FIG. 49 is a power control characteristic drawing concerning embodiment 31 of the invention.
FIG. 50 is a drawing to show the relationship among various signals concerning embodiments 30 and 31 of the invention.
FIG. 51 is a drawing visualizing changes in some of the signals shown in FIG. 50.
FIG. 52 is a configuration diagram of a power control unit for a high-frequency dielectric heating according to embodiment 32 of the invention.
FIG. 53 is a configuration diagram of a power control unit for a high-frequency dielectric heating according to embodiment 33 of the invention.
FIG. 54 is a configuration diagram of a power control unit for a high-frequency dielectric heating according to embodiment 34 of the invention.
FIG. 55 is a configuration diagram of a power control unit for a high-frequency dielectric heating according to embodiment 35 of the invention.
FIG. 56 is a configuration diagram of a power control unit for a high-frequency dielectric heating having an input current detection section according to embodiment 37 of the invention.
FIG. 57 is a circuit diagram to show the details of a sawtooth wave generator shown in FIG 55.
FIGs. 58A, 58B and 58C are circuit diagrams of a mixer according to embodiment 37 of the invention.
FIGs. 59A and 59B are charts to show the basic waveforms of parts of the power control unit for a high-frequency dielectric heating shown in FIG. 55.
FIGs. 60A and 60B are waveform charts of parts of the power control unit for a high-frequency dielectric heating shown in FIG. 55 when input voltage waveform information is added.
FIG. 61 is a diagram to show an example of an addition inversion circuit shown in FIG. 58.
FIG. 62 is a configuration diagram of a high-frequency heating apparatus in a prior art.
FIGs. 63A, 63B and 63C are characteristic diagrams for anode cathode applied voltage - anode current of magnetrons;
FIG. 64 is a configuration diagram of a power control unit for a high-frequency dielectric heating in a prior art.
FIG. 65 is a characteristic drawing of a resonance circuit of a power control unit for a high-frequency dielectric heating.

3, 203, 303, 403 First semiconductor switching element
4, 204, 304, 404 Second semiconductor switching element
5, 205, 305, 405 First capacitor
6, 206, 306, 406 Second capacitor
7, 207, 307, 407 Third capacitor
8, 208, 308, 408 Primary winding
9, 209, 309, 409 Secondary winding
10, 209, 309, 409 Tertiary winding
11, 211, 311, 411 Voltage-doubling rectifier
12, 212, 312, 412 Magnetron
40, 240, 340, 440 Inverter
41, 241, 341, 441 Transformer
42, 242, 342, 442 Resonance circuit voltage information
45, 245, 345, 445 Controller
46, 246, 346, 446 Diode (input voltage detection section)
47, 247, 347, 447 Shaping circuit (input voltage detection section)
50, 250, 350, 450 AC power supply
51, 251, 351, 451 DC power supply
60, 260, 360, 460 Diode bridge type rectifier
61, 261, 361, 461 Smoothing circuit
62, 262, 362, 462 Resonance circuit
63, 263, 363, 463 Diode
64, 264, 364, 464 Inductor
65, 265, 365, 465 Capacitor
66, 266, 366, 466 Diode
67, 267, 367, 467 Capacitor
68, 268, 368, 468 Diode
69, 269, 369, 469 Anode
70, 270, 370, 470 Cathode
71, 271, 371, 471 Current detection section (input current detection section)
72, 272, 372, 472 Rectifier (input current detection section)
73, 273, 373, 473 Smoothing circuit
74, 274, 374, 474 Comparator
75, 275, 375, 475 Output setting section
81, 281, 381, 481 Mixer (conversion section)
82, 282, 382, 482 Comparator (conversion section)
83, 283, 383, 483 Sawtooth wave generator (conversion section)
84, 284, 384, 484 Sawtooth wave
85, 285, 385, 485 Amplifier
86, 286, 386, 486 Shunt resistor
87, 287, 387, 487 Slice control signal
90, 290, 390, 490 Input current waveform information
91, 291, 391, 491 Power control information
92, 292, 392, 492 Switching frequency control signal
93, 293, 393, 493 Resonance voltage control information
94, 294, 394, 494 Frequency modulation signal
95, 295, 395, 495 First limitation circuit
96, 296, 396, 496 Second limitation circuit
97, 297, 397, 497 Slice control signal creation circuit
98, 298, 398, 498 Resonance circuit
99, 299, 399, 499 First series circuit
100, 300, 400 Second series circuit
163, 2163, 3163, 4163 Capacitor
164, 2164, 3164, 4164 Comparator
165, 2165, 3165, 4165 Comparator
166, 2166, 3166, 4166 SR flip-flop
248, 348 Oscillation detector
249, 349, 449 Input voltage waveform information

Embodiments will be discussed below in detail with the accompanying drawings:

### (Embodiment 1)

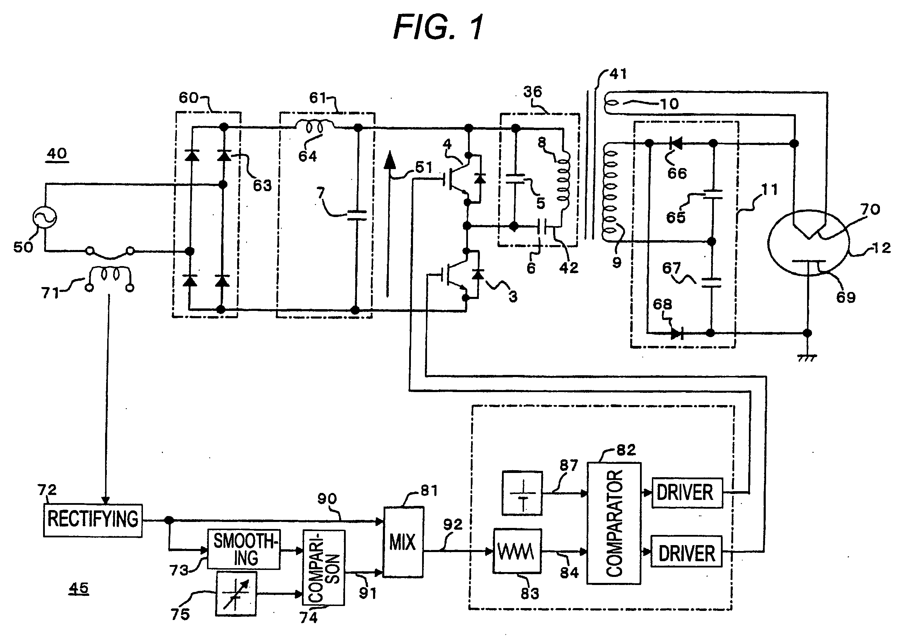

FIG. 1 is a block diagram to describe a high-frequency heating apparatus according to embodiment 1. In FIG. 1, the high-frequency heating apparatus is made up of an inverter 40, a controller 45 for controlling first and second semiconductor switching elements 3 and 4 of the inverter, and a magnetron 12. The inverter 40 contains an AC power supply 50, a diode bridge type rectifier 60, a smoothing circuit 61, a resonance circuit 36, the first and second semiconductor switching elements 3 and 4, and a voltage-doubling rectifier 11.

An AC voltage of the AC power supply 50 is rectified in the diode bridge type rectifier 60 made up of four diodes 63 and is converted into a DC power supply 51 through the smoothing circuit 61 made up of an inductor 64 and a third capacitor 7. Then, it is converted into a high-frequency AC by the resonance circuit 36 made up of a first capacitor 5, a second capacitor 6, and a primary winding 8 of a transformer 41 and the first and second semiconductor switching elements 3 and 4, and a high frequency high voltage is induced in a secondary winding 9 through the transformer 41.

The high frequency high voltage is induced in the secondary winding 9 is applied to between an anode 69 and a cathode 70 of the magnetron 12 through the voltage-doubling rectifier 11 made up of a capacitor 65, a diode 66, a capacitor 67, and a diode 68. The transformer 41 also includes a tertiary winding 10 for heating the heater (cathode) 70 of the magnetron 12. The inverter 40 has been described.

Next, the controller 45 for controlling the first and second semiconductor switching elements 3 and 4 of the inverter 40 will be discussed. To begin with, a current detection section made up of a CT (Current Transformer) 71 provided between the AC power supply 50 and the diode bridge type rectifier 60 is connected to a rectifier 72 and the CT 71, and an input current detection section for detecting an input current input to the inverter is made up. The input current to the inverter is insulated and detected in the CT 71 and the output is rectified in the rectifier 72 to generate input current waveform information 90.

A current signal provided by the rectifier 72 is smoothed in the smoothing circuit 73 and a comparator 74 makes a comparison between the current signal and a signal from an output setting section 75 for outputting an output setting signal corresponding to the other heating output setting. To control the magnitude of the power, the comparator 74 makes a comparison between the input current signal smoothed in the smoothing circuit 73 and the setting signal from the output setting section 75. Therefore, an anode current signal of the magnetron 12, a collector current signal of the first, second semiconductor switching element 3, 4 can also be used as an input signal in place of the input current signal smoothed in the smoothing circuit 73. That is, the comparator 74 outputs power control information 91 for controlling so that the output of the input current detection section becomes a predetermined value, but the comparator 74 and the power control information 91 are not indispensable for the invention as described later.

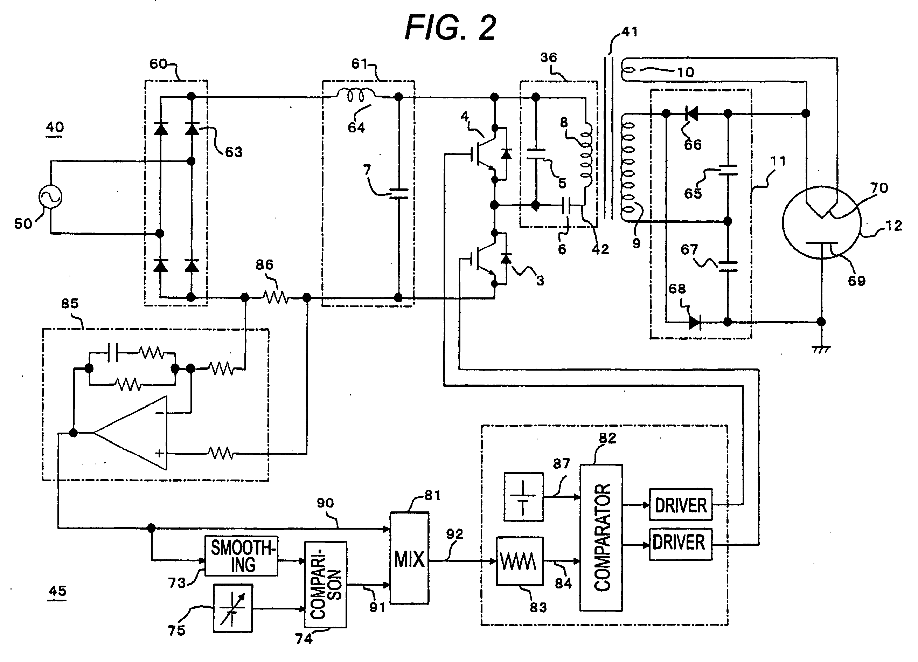

Likewise, as in an example shown in FIG. 2, a current detection section made of a shunt resistor 86 provided between the diode bridge type rectifier 60 and the smoothing circuit 61 and an amplifier 85 for amplifying a voltage across the current detection section may make up an input current detection section and output thereof may be used as the input current waveform information 90. The shunt resistor 86 detects an input current after rectified in a signal direction by the diode bridge type rectifier 60.

In the embodiment, a mixer 81 mixes and filters the input current waveform information 90 and the power control information 91 from the comparator 74 and outputs a switching frequency control signal 92. A sawtooth wave 84 output by a sawtooth wave generator 83 is frequency-modulated by the switching frequency control signal 92.

A comparator 82 makes a comparison between the sawtooth wave 84 and a slice control signal 87 described later, converts into a square wave, and feeds the provided square wave to a gate of the first, second semiconductor switching element 3, 4 through a driver.

In this case, the sawtooth wave from the sawtooth wave generator 83 frequency-modulated by the switching frequency control signal 92 is compared by the comparator 82 and turning on/off control of the semiconductor switching element of the inverter is performed for simplifying the input current waveform information detection system. Particularly, in the embodiment, the simplified configuration wherein the input current waveform information 90 is directly input to the mixer 81 is adopted.

The portion for generating a drive signal of the first, second semiconductor switching element 3, 4 from the switching frequency control signal 92 may be configured as a conversion section for converting the switching frequency control signal 92 into a drive signal of the semiconductor switching element of the inverter so that the switching frequency becomes high in a part where the input current from the AC power supply 50 is large and the switching frequency becomes low in a part where the input current is small, and the embodiment is not limited to the configuration.

To control turning on/off the semiconductor switching element 3, 4 relative to the input current waveform information 90, it is converted at a polarity to raise the switching frequency when the input current is large and to lower the switching frequency when the input current is small. Therefore, to make such a waveform, the input current waveform information is subjected to inversion processing in the mixer 81 for use.

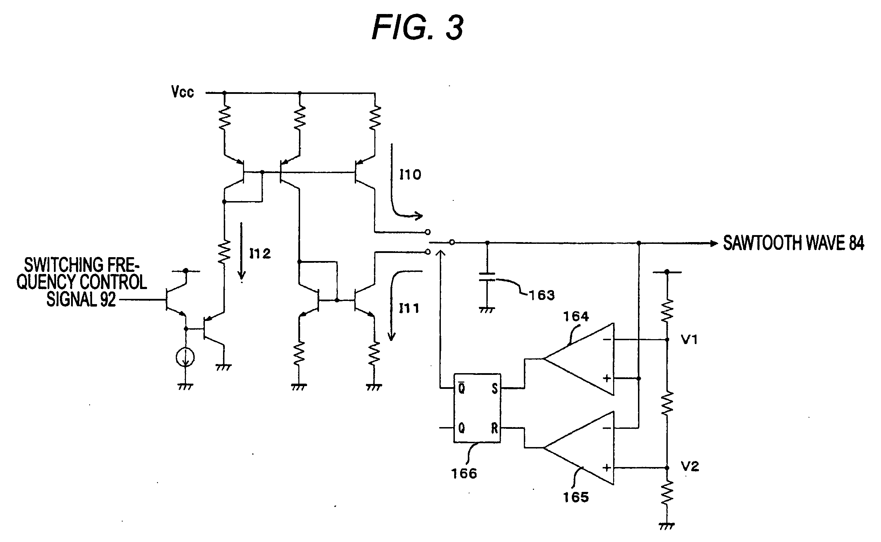

FIG. 3 is a detailed circuit diagram of the sawtooth wave (carrier wave) generator 83. Outputs of comparators 164 and 165 are input to an S terminal and an R terminal of an SR flip-flop 166. Charge and discharge of a capacitor 163 are switched according to the output polarity of a non-Q terminal of the SR flip-flop 166; when the terminal is high, the capacitor 163 is charged in a current I10 and when the terminal is low, the capacitor 163 is discharged in a current I11. When the potential of the capacitor 163 exceeds V1, the non-Q terminal of the SR flip-flop 166 is set to low upon reception of output high of the comparator 164; when the potential of the capacitor 163 falls below V2, the non-Q terminal is reset to high upon reception of output high of the comparator 165.

According to the configuration, the potential of the capacitor 163 becomes like a sawtooth wave (triangular wave) and the signal is transported to the comparator 82.

The charge and discharge currents I10 and I11 of the capacitor 163 are determined as a current I12 resulting from dividing the potential difference between the voltage of the switching frequency control signal 92 and Vcc by a resistance value is reflected, and the gradient of the triangular wave changes with the magnitude of the current. Therefore, the switching frequency is determined by the magnitude of I10, I11 on which the switching frequency control signal is reflected.

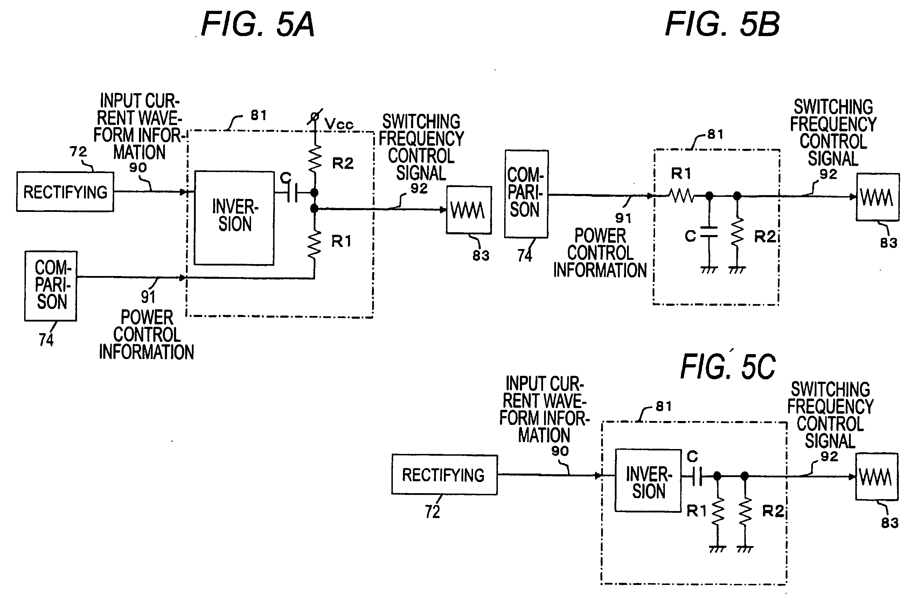

FIG. 5A shows an example of the mixer 81. The mixer 81 has two input terminals; the power control information 91 is added to one terminal and the input current waveform information 90 is added to the other terminal and they are mixed in an internal circuit as shown in the figure. The input current waveform information 90 is input to the mixer 81 and is inverted in an inversion circuit to generate a correction signal.

As in FIG. 5B, a high-cut filter is formed between outputs from the power control information 91 as shown in an AC equivalent circuit in the mixer 81. Accordingly, a high-frequency component contained in power control as an obstacle to the input current waveform information 90 to shape the input current waveform is cut through the filter.

As in FIG. 5C, a low-cut filter is formed between outputs from the input current waveform information 90 as shown in an AC equivalent circuit in the mixer 81. Therefore, the power control information 91 is converted into a DC component of output of the mixer 81 and the input current waveform information 90 is converted into an AC component.

In embodiment 1, as described above, the input current waveform information is converted into the switching frequency of the semiconductor switching elements 3 and 4 of the inverter for use. The inverter generally used with a microwave oven is known; a commercial AC power supply of 50 to 60 cycles is rectified to a direct current, the provided DC power supply is converted into a high frequency of about 20 to 50 KHz, for example, by the inverter, and a high voltage provided by boosting the provided high frequency by a transformer and further rectifying it in a voltage-doubling rectifier is applied to a magnetron.

There are two types of inverter systems, for example, of an on time modulation system using a so-called single-ended voltage resonant-type circuit for using one semiconductor switching element for switching and changing the on time of a switching pulse for changing output, often used in a region where the commercial power supply is 100 V and a (half) bridge type voltage resonant-type circuit system for alternately turning on two semiconductor switching elements 3 and 4 connected in series and controlling the switching frequency for changing output, as shown in FIG. 1. The bridge type voltage resonant-type circuit system is a system capable of adopting a simple configuration and control in such a manner that if the switching frequency is raised, output lowers and if the switching frequency is lowered, output increases.

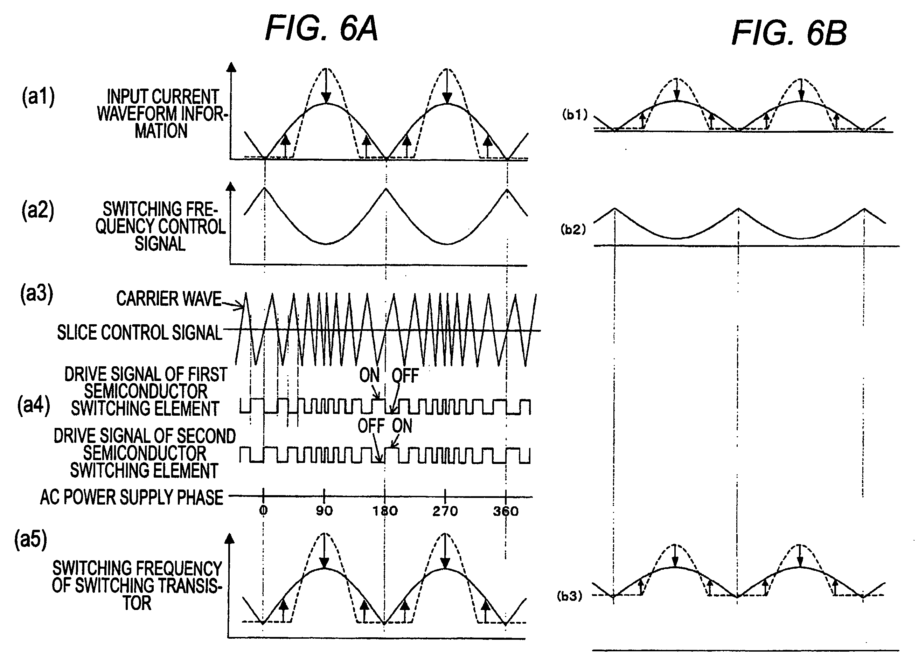

FIGs. 6A and 6B are drawings to describe waveforms provided according to embodiment 1; FIG. 6A is the case where input current is large and FIG. 6B is the case where input current is small. The solid line represents the signal shape after correction by the power control unit of the invention mainly used in the description to follow, and the dashed line represents the signal shape of instantaneously fluctuating output before correction from the AC power supply 50, as described later.

In FIG. 6A, the waveform of the input current waveform information in (a1) from the top is the input current waveform information 90 output by the rectifier 72 in FIG. 1 and output by the amplifier 85 in FIG. 2, and the dotted line shows a waveform before correction, caused by the nonlinear load characteristic of the magnetron. (a2) of FIG. 6A shows the switching frequency control signal 92 of correction output of the mixer 81. The switching frequency control signal 92 has the size changed following the input current waveform information 90 and the power control information 91 and further is output as an inversion waveform of (a1) to complement and correct the distortion component of the input current.
(a3) of FIG. 6A shows the sawtooth wave (carrier wave) frequency-modulated according to the switching frequency control signal shown in (a2) and slice control signal, and drive signals of on and off signals of the first and second semiconductor switching elements 3 and 4 shown in (a4) are generated.

The drive signals of the first and second semiconductor switching elements provided by inputting the sawtooth wave 84 (carrier wave) frequency-modulated and the slice control signal 87 to the comparator 82 and making a comparison therebetween by the comparator 82 undergo frequency modulation like the sawtooth wave as in (a4) of FIG. 6A. The two drive signals have on and off complementary relationship to each other.

That is, as shown in the figure, the frequency of the sawtooth wave is low in a portion where the amplitude value of the switching frequency control signal is large (in the proximity of 0 degrees, 180 degrees; the input current is small) and thus is corrected to the polarity to raise the input current from the resonance characteristic described above. Since the frequency of the sawtooth wave is high in a portion where the amplitude value of the switching frequency control signal is small (in the proximity of 90 degrees, 270 degrees; the input current is large), a pulse string of a frequency as in (a4) to correct to the polarity to lower the input current from the resonance characteristic described above is output as the drive signal of the semiconductor switching element. That is, since the switching frequency control signal (a2) is inverted as a correction waveform relative to the input current waveform information (a1), conversion is executed to inversion output opposite to (a1) in such a manner that the frequency is raised like the pulse string signal in (a4) in a portion where input of the input current waveform information (a1) is large (in the proximity of 90 degrees, 270 degrees) and the frequency is lowered in a portion where input of the input current waveform information (a1) is small (in the proximity of zero cross at 0 degrees, 180 degrees). Accordingly, the correction effect of the input waveform is provided; this effect is large particularly in the proximity of zero cross.

The waveform in (a5) at the bottom stage shows the switching frequency of the first, second semiconductor switching element 3, 4. A high-frequency sawtooth wave is frequency-modulated according to the switching frequency control signal (a2) of the correction waveform provided by inverting the input current waveform information shown in (a1) and a comparison is made between the frequency-modulated sawtooth wave and the slice control signal, whereby inverter conversion into a high frequency of 20 KHz to 50 KHz is executed and the drive signal in (a4) is generated. A semiconductor switching element 39 is turned on and off in response to the drive signal (a4) and high-frequency power is input to the primary side of the transformer and a boosted high voltage is generated on the secondary side of the transformer. In (a5), to visualize how the frequency of each pulse of the on and off signals (a4) changes within the period of the commercial power supply, frequency information is plotted on the Y axis and the points are connected.

The description given above shows the same signals as in the state in which the input current from the AC power supply 50 is provided in an identical state (for example, sine wave). However, generally the input current from the AC power supply 50 deviates from the ideal sine wave and fluctuates from the instantaneous viewpoint. The dashed line signal indicates such an actual state. Generally, the actual signal deviates from the state of the ideal signal and instantaneous fluctuation occurs from the viewpoint of an instantaneous time period of a half period of the commercial power supply (0 to 180 degrees) as indicated by the dashed line. Such a signal shape occurs due to the boosting action of a transformer and a voltage-doubler circuit, the smoothing characteristic of a voltage-doubler circuit, the magnetron characteristic that an anode current flows only when the voltage is ebm or more. That is, it can be that the fluctuation is indispensable in the inverter for the magnetron.

In the power control unit, the input current detection section provides the input current waveform information indicated by the dashed line on which the fluctuation state of the input current is reflected (see FIG 6A (a1)) and the later control is performed based on the input current waveform information. This control is performed so that the instantaneous fluctuation of the input current waveform information occurring in a time period such as a half period, for example, is suppressed so as to approach an ideal signal as indicated by the arrow. This suppression is accomplished by adjusting the drive signal of the first, second semiconductor switching element 3, 4. Specifically, if the input current waveform information 90 is smaller than the ideal signal, the above-described frequency becomes lower and a correction is made for increasing the input current. If the input current waveform information is larger than the ideal signal, the above-described frequency becomes higher and a correction is made for decreasing the input current. Also in the instantaneous fluctuation in a shorter time period, the fluctuating waveform is reflected on frequency information and a similar correction to that described above is made.

A correction as indicated by the arrow is made to the input current waveform information 90 by the instantaneous fluctuation suppression action of the first, second semiconductor switching element 3, 4 to which the drive signal is given, and input close to the ideal wave is given to the magnetron at all times. The signals in (a2) and (a3) after the correction are omitted in the figure. The ideal signal is a virtual signal and the signal becomes a sine wave.

That is, in a short time period such as a half period of the commercial power supply, the sum total of instantaneous error or correction amount between the ideal signal waveform and the input current waveform information is roughly zero because the magnitude of the input current is controlled (power control) by another means. The portion wherein the input current does not flow due to a nonlinear load is corrected in the direction in which the input current is allowed to flow and thus the portion wherein the input current is large is decreased and the above-mentioned roughly zero is accomplished. This means that a correction is made so that the current waveform of even a nonlinear load can be assumed to be a linear load and since the commercial power supply voltage waveform is a sine wave, the ideal waveform becomes a sine wave like the current waveform flowing into a linear load.

Thus, to cancel out a change in the input current waveform and excess and deficiency relative to the ideal waveform, the input current is corrected at the opposite polarity to the waveform. Therefore, a rapid current change in the commercial power supply period caused by a nonlinear load of the magnetron, namely, distortion is canceled out in the control loop and input current waveform shaping is performed.

Further, since the control loop thus operates according to the input current waveform information following the instantaneous value of the input current, even if there are variations in the magnetron type or the magnetron characteristic or even if ebm (anode-to-cathode voltage) fluctuation caused by the magnetron anode temperature or the load in the microwave oven or power supply voltage fluctuation occurs, input current waveform shaping can be performed independently of the effects.

Particularly, in the invention, the semiconductor switching element is controlled inter alia based on instantaneously fluctuating input current waveform information. Instantaneous fluctuation of the input current is input directly to the mixer 81 in the form of the input current waveform information and is also reflected on the switching frequency control signal 92, so that the drive signal of the semiconductor switching element excellent in the tracking performance for suppression of input current waveform distortion and instantaneous fluctuation can be provided.

The subject of the invention is to convert the input current waveform information having the information for suppressing distortion of the input current waveform and instantaneous fluctuation into the drive signal of the semiconductor switching element of the inverter. The power control information 91 is not indispensable for accomplishing the purpose, because the power control information 91 is information to control power fluctuation in a long time period, namely, in a period longer than the commercial power supply period or so and is not information for correcting instantaneous fluctuation in a short time period such as a half period of AC that the invention aims at. Therefore, adoption of the mixer 81, the comparator 82, and the sawtooth wave generator 83 is also only one example of the embodiment and an equivalent to the conversion section for performing the conversion described above may exist between the input current detection section and the semiconductor switching element.

To use the power control information, it is not indispensable whether to input the power control information 91 for controlling so that the output of the input current detection section becomes a predetermined value into the mixer 81 as in the embodiment described above. That is, in the embodiment described above, the power control information 91 originates from the current detection section 71 for detecting the input current and the rectifier 72 (in FIG. 1) or the shunt resistor 86 and the amplifier 85 (in FIG. 2), but information for controlling so that the current or the voltage at an arbitrary point of the inverter 40 becomes a predetermined value can be input to the mixer 81 as the power control information. For example, resonance circuit voltage information 42 of the resonance circuit 62 as shown in FIGs. 1 and 2 can be used intact as the power control information or information provided after undergoing smoothing by the smoothing circuit 73 and comparison with the output setting signal in the comparator 74 can be used as the power control information.

Next, FIG. 6B shows the case where the input current is small relative to FIG. 6A by comparison; (b1) shows the input current waveform information when input is small and corresponds to (a1) of FIG. 6A, (b2) shows the switching frequency control signal and corresponds to (a2) of FIG. 6A, and (b3) shows the switching frequency of the semiconductor switching element and corresponds to (a5) of FIG. 6A. Although not shown in the figure, the same processing is also performed as comparison processing of sawtooth wave shown in (a3) and (a4) of FIG. 6A, of course.

### (Embodiment 2)

Next, embodiment 2 will be discussed. Embodiment 2 relates to the configuration of a controller and has the configuration wherein in FIG. 1, the input current waveform information 90 and the power control information 91 from the comparator 74 are mixed and filtered and converted into on and off drive signals of the semiconductor switching element 3, 4 of the inverter for use. Accordingly, it is not necessary to process commercial power supply voltage waveform information conforming to the nonlinear load characteristic of a magnetron, a frequency modulation signal generator is simplified, and the commercial power supply voltage waveform information also becomes unnecessary as compared with the prior art example in FIG. 64, so that practical miniaturization of the machine configuration is facilitated, the control procedure is simplified, and the processing time can be shortened and thus the reliability of the machine can also be improved.

The configuration as described above is adopted, whereby a control loop using the input current waveform information 90 is specialized for waveform shaping of input current and a control loop using the power control information 91 is specialized for power control and they do not interfere with each other in the mixer 81 for holding the conversion efficiency.

### (Embodiment 3)

Embodiment 3 relates to an input current detection section. In FIG. 1, the input current detection section detects the input current of the inverter with the CT 71 and performs rectification output from the rectifier 72. According to the configuration, the input current is detected using the CT and thus a large signal can be taken out while insulating property is maintained, so that the effect of input current waveform shaping is large and the quality of the input current is improved.

In the example shown in FIG. 2, the input current detection section detects the unidirectional current after rectified in the rectifier 61 of the inverter through the shunt resistor 86 placed between the rectifier 60 and the smoothing circuit 61, amplifies the voltage occurring across the shunt resistor 86 by the amplifier (amplifier) 85, and outputs the voltage. The configuration has the advantage that the input current detection section can be configured at a low cost because the detection section need not be insulated from electronic circuitry and rectification need not be performed either.

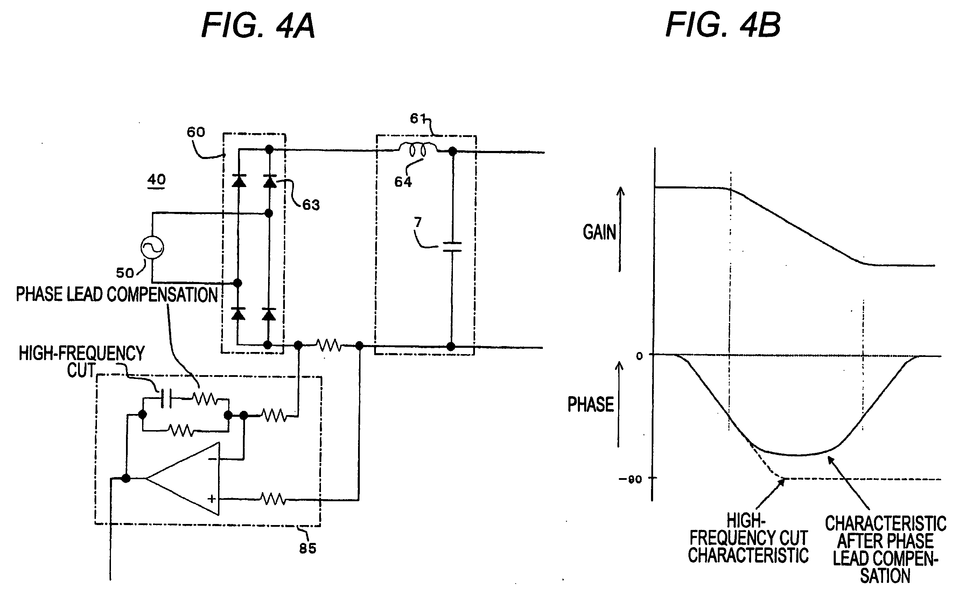

The amplifier 85 of the input current detection section shown in FIG. 2 attenuates the high frequency spectral region of the commercial power supply and the high frequency portion of a high-frequency switching frequency for preventing unnecessary resonance. Specifically, as shown in the detailed diagram of the input current detection section of FIG 4, the amplifier 85 attenuates the high frequency spectral region of the commercial power supply and the high frequency portion of a high-frequency switching frequency using a high-cut capacitor, as In FIG. 4A.

Further, for a phase delay occurring as shown in the phase characteristic drawing of FIG. 4B by inserting the high-cut capacitor of the amplifier 85, a resistor is inserted in series with the capacitor and phase lead compensation is added for preventing a transient time delay to ensure the stability of a control loop. Also in the rectifier 72 in FIG 1, the configuration to attenuate the high frequency portion and the configuration to add phase lead compensation for preventing a transient time delay can be used.

### (Embodiment 4)

Embodiment 4 relates to the mixer 81 shown in FIGs. 1 and 2. The input waveform information 90 and the power control information 91 are input to two terminals of the mixer 81 as shown in the configuration diagram of the mixer 81 in FIG. 5A. The input current waveform information 90 is inverted in an inversion circuit for correction output. Both signals are input to a filter circuit made up of C, R1, and R2 and are filtered and then are output to a sawtooth wave generator as a switching frequency control signal 92. The filter circuit cuts the high-frequency component of the power control output 91 as shown in the equivalent circuit diagram of FIG. 5B. Such a configuration is adopted, whereby the high-frequency component hindering input current waveform shaping is cut, so that the quality of the input current waveform improves. On the other hand, a low-cut filter is formed for the input current waveform information 90 to preserve the waveform, as shown in the equivalent circuit diagram of FIG. 5C.

### (Embodiment 5)

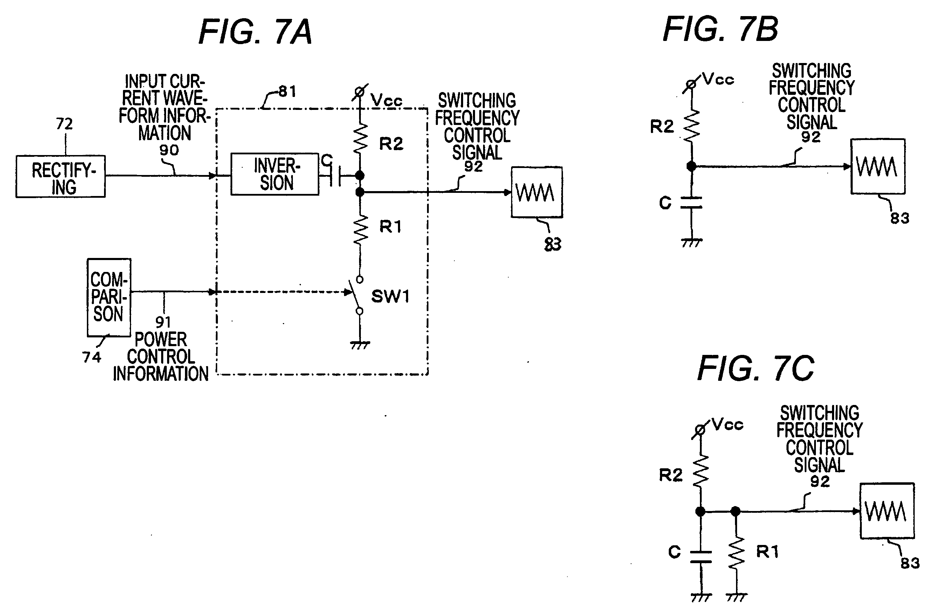

Embodiment 5 controls the characteristic of a mixer for combining input current waveform information of an input current detection section and power control information to control so that output of the input current detection section becomes a predetermined value by providing a difference between the input current increase control time and decrease control time, as shown in a configuration diagram of the mixer concerning embodiment 5 in FIGs. 7A to 7C.

In the configuration diagram of FIG. 7A, an SW1 is turned on/off according to power control information 91 for lowering/raising a switching frequency control signal 92. At the input current increase control time, the SW1 is turned off and the switching frequency control signal is gradually raised according to a time constant of C*R2 for lowering the switching frequency of a semiconductor switching element, as shown in an equivalent circuit in FIG. 7B.

At the input current decrease control time, the SW1 is turned on and the switching frequency control signal is rapidly lowered according to a time constant of C*{R1*R2/(R1+R2)} for raising the switching frequency of the semiconductor switching element, as shown in an equivalent circuit in FIG. 7C. That is, the circuit configuration of the mixer 81 is switched between the input current increase control time and the input current decrease control time. Particularly, at the input current increase control time, the time constant is set large and at the input current decrease control time, the time constant is set small.

The difference is thus provided, whereby the control characteristic for moderately responding usually and the control characteristic for decreasing the input current in a prompt response for preventing component destruction, if the input current transiently rises for some reason can be realized. Safety of the control characteristic for a nonlinear load of a magnetron can also be ensured.

### (Embodiment 6)

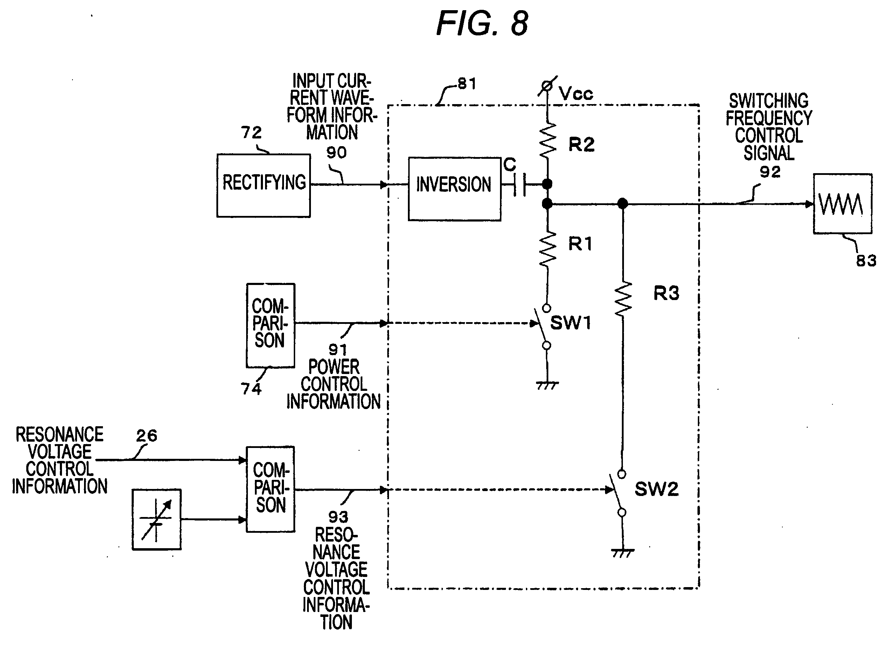

Embodiment 6 inputs resonance voltage control information 93 for controlling resonance circuit voltage information 26 of a resonance circuit to a predetermined circuit to a mixer 81, as shown in a configuration diagram of the mixer concerning embodiment 6 in FIG. 8.

As shown in FIG. 8, an SW2 is turned on/off according to the resonance voltage control information 93 provided by making a comparison between the resonance voltage of the resonance circuit and a reference value. If the resonance voltage is low, the SW2 is turned off and a switching frequency control signal is gradually raised according to a time constant of C*R2 for lowering the switching frequency of a semiconductor switching element. If the resonance voltage is high, the SW2 is turned on and the switching frequency control signal is rapidly lowered according to a time constant of C*{R2*R3/(R2+R3)} for raising the switching frequency of the semiconductor switching element. That is, the circuit configuration of the mixer 81 is switched in response to the magnitude of the resonance voltage of the resonance circuit. Particularly, if the resonance voltage is low, the time constant increases and if the resonance voltage is high, the time constant decreases.

This control is effective for preventing an excessive voltage from being applied to a magnetron when the magnetron does not oscillate, namely, the power control does not function.

### (Embodiment 7)

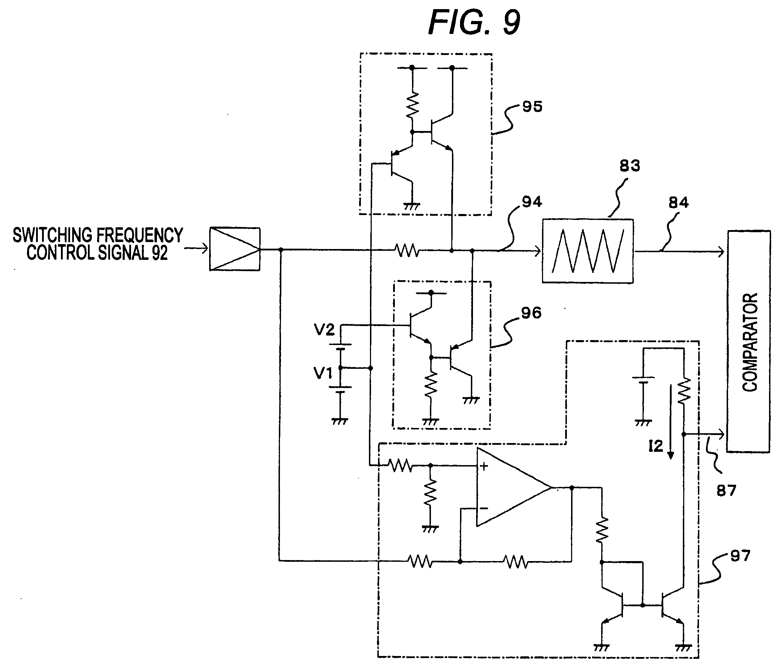

Embodiment 7 imposes a limitation on a switching frequency, as shown in a configuration diagram of a switching frequency limitation circuit concerning embodiment 7 in FIG. 9.

A frequency modulation signal 94 input to a sawtooth wave generator 83 is created as a switching frequency control signal 92 receives limitations of the lowest potential and the highest potential through a first limitation circuit 95 depending on a fixed voltage V1 and a second limitation circuit 96 depending on a fixed voltage V2.

As the potential limitations, in the former, the highest switching frequency is limited and in the latter, the lowest switching frequency is limited from the relationship between the switching frequency control signal 92 and the switching frequency.

The first limitation circuit 95 limits the highest frequency for preventing a switching loss increase of semiconductor switching elements 3 and 4 when the switching frequency raises.

If the switching frequency approaches a resonance frequency, a resonance circuit 62 abnormally resonates and the semiconductor switching element is destroyed. The second limitation circuit 96 has a function of limiting the lowest frequency for preventing the phenomenon.

### (Embodiment 8)

Embodiment 8 complements the range in which the highest frequency is limited by a first limitation circuit 95 by power control of on duty control of a semiconductor switching element (transistor), as shown in a configuration diagram of a slice control signal creation circuit concerning embodiment 8 in FIG. 9.

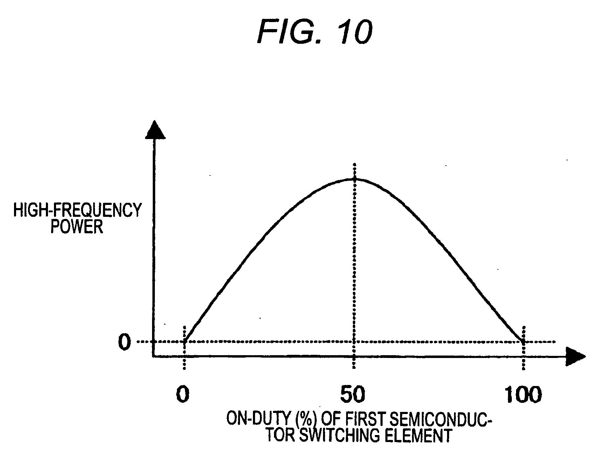

FIG. 10 is a drawing to show the relationship between the on duty of a first semiconductor switching element (transistor) 3 and high-frequency power of a bridge resonant-type inverter. When the on duty is 50%, the high-frequency power becomes a peak and as the on duty falls below or exceeds 50%, the high-frequency power decreases.

The on duty of a second semiconductor switching element and the on duty of the first semiconductor switching element are complementary to each other and therefore 0 and 100 of X axis numeric values in FIG. 10 are replaced in read.

To lessen high-frequency output, namely, to lessen the input current, a switching frequency control signal 92 is changed in a direction for increasing a switching frequency as described above, but this power control does not function in a time period during which a frequency limitation is imposed on a frequency modulation signal 94 by the first limitation circuit 95. Upon reception of the same fixed voltage V1 and switching frequency control signal 92 as the first limitation circuit 95, a slice control signal creation circuit 97 allows a current I20 to flow during the above-mentioned time period so that a slice control signal 87 changes.

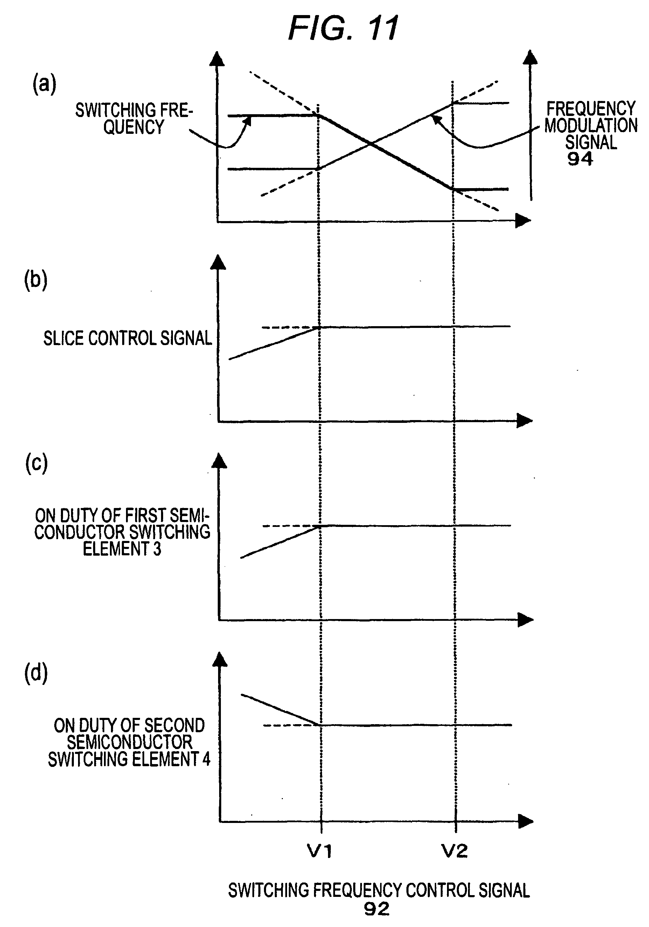

In FIG. 11, the potential of the switching frequency control signal 92 is taken on an X axis and various signals affected by the signal are taken on a Y axis. (a) shows the switching frequency and the frequency modulation signal 94; the highest frequency is limited at the voltage V1 or less and the lowest frequency is limited at V2 or more. (b) shows that the slice control signal 87 changes in the range of the voltage V1 or less. (c) and (d) show the on duties of first and second semiconductor switching elements 3 and 4 changing upon reception of the slice control signal 87 as described later.

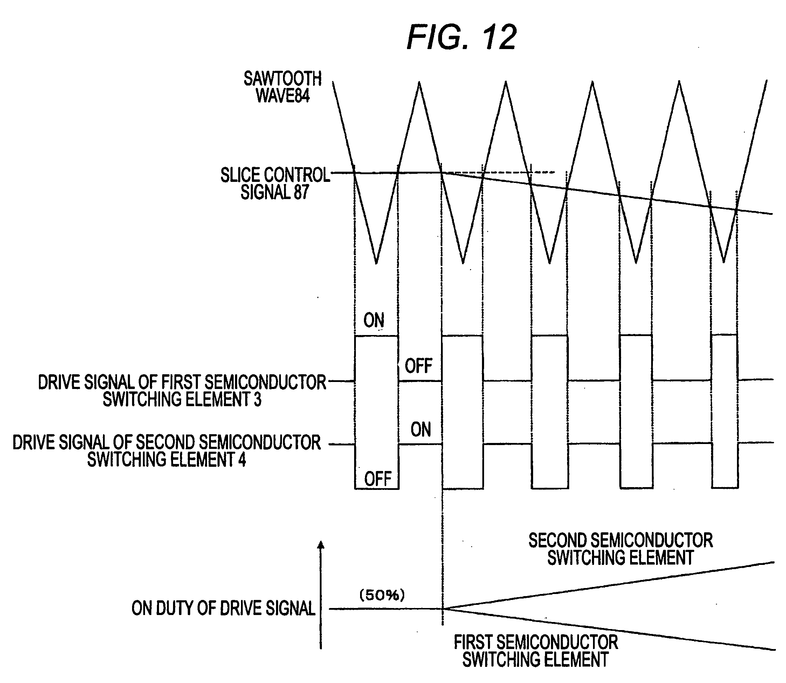

FIG. 12 visualizes the duty changes in FIG. 11 (c) and (d); following change in the slice control signal 87, the on duties of the first and second semiconductor switching elements 3 and 4 derived through a comparator 82 from the signal and a sawtooth wave 84 change.

Since the slice control signal 87 does not change either in a time period during which a frequency limitation is not imposed by the first limitation circuit 95 mentioned above, the on duty is kept in the proximity of 50%; the high-frequency power is lowered by lowering the on duty in the range in which the frequency limitation is imposed, namely, the range in which the power control based on frequency modulation does not function for complementing.

To complete the complementing, the change start point of the slice control signal 87 relative to the potential of the switching frequency control signal 92 may include above-mentioned V1 at which the power control based on frequency modulation does not function, and is not limited to V1.

Although a reference potential newly becomes necessary, if change is made from a potential higher than V1, the percentage of high switching frequencies decreases and thus the switching loss of the semiconductor switching element can be lightened.

### (Embodiment 9)

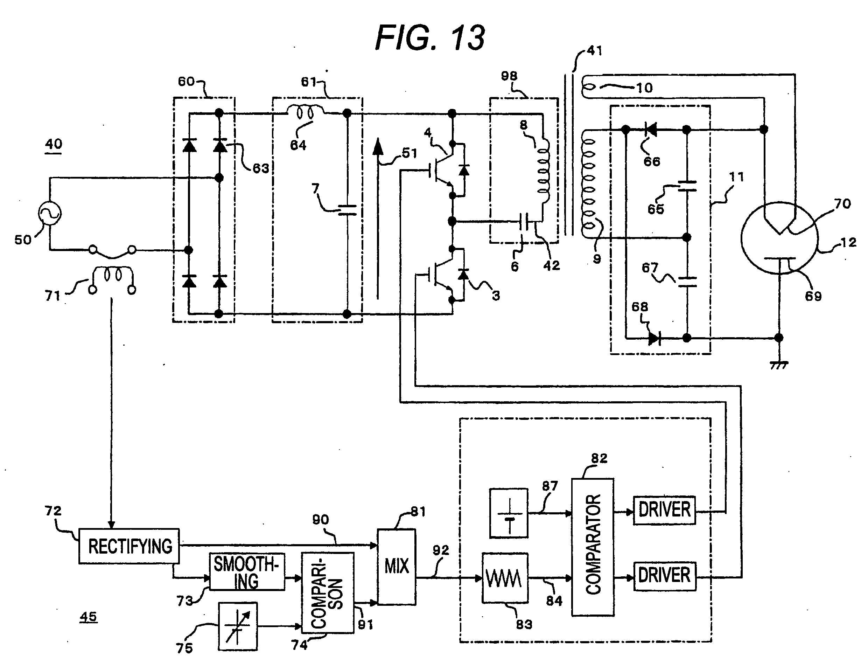

Embodiment 9 relates to a resonance circuit; a resonance circuit 98 is provided by eliminating a first capacitor 5 from a resonance circuit 36 made up of the first capacitor 5, a second capacitor 6, and a primary winding 8 of a transformer 41, as shown in a configuration diagram of FIG. 13.

Also in the embodiment, as in the embodiment described above, input current waveform information is converted into a switching frequency control signal and the switching frequency of a semiconductor switching element of an inverter is modulated, whereby it is made possible to suppress a power supply harmonic current.

### (Embodiment 10)

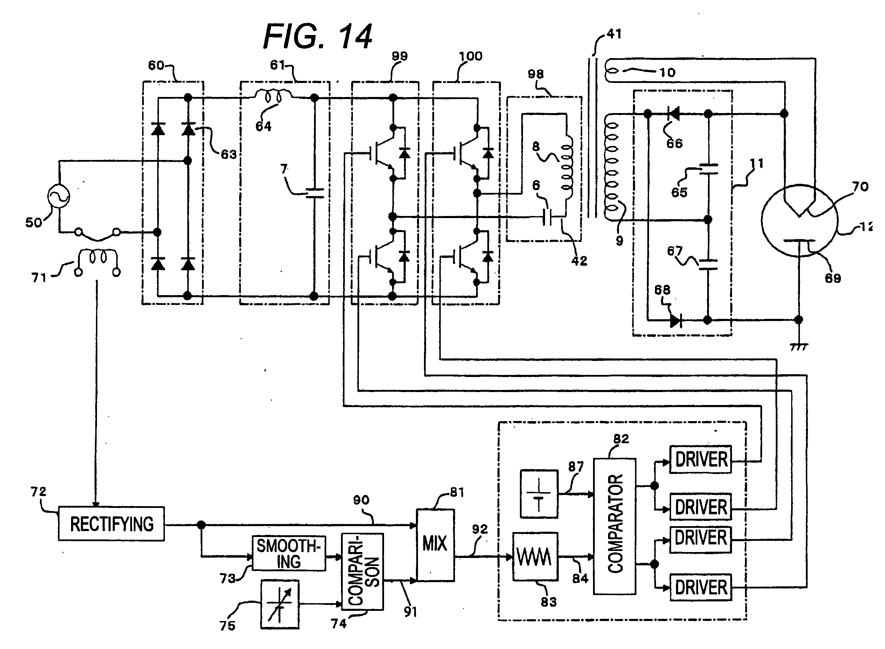

Embodiment 10 relates to the configuration of an inverter; first and second series circuits 99 and 100 each made up of two semiconductor switching elements are connected in parallel to a DC power supply provided by rectifying a commercial power supply and a resonance circuit 98 wherein a primary winding 8 of a transformer 41 and a second capacitor 6 are connected has one end connected to the midpoint of one series circuit and an opposite end connected to the midpoint of the other series circuit, as shown in FIG. 14.

Also in the embodiment, as in the embodiment described above, input current waveform information is converted into a switching frequency control signal and the switching frequency of the semiconductor switching element of the inverter is modulated, whereby it is made possible to suppress a power supply harmonic current.

### (Embodiment 11)

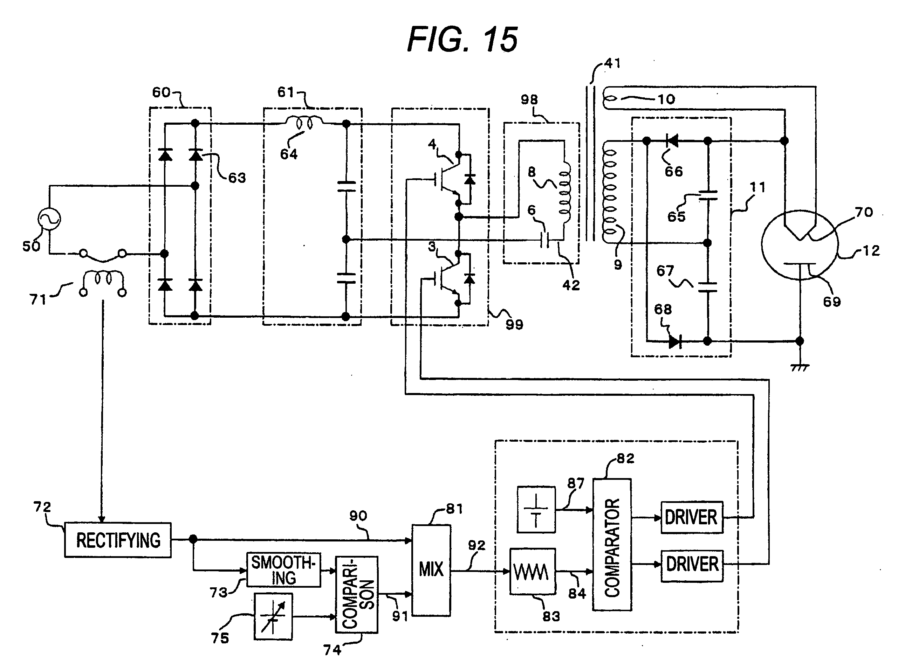

Embodiment 11 relates to the configuration of an inverter; a first series circuit 99 made up of two semiconductor switching elements is connected in parallel to a DC power supply provided by rectifying a commercial power supply and a resonance circuit 98 wherein a primary winding 8 of a transformer 41 and a second capacitor 6 are connected has one end connected to the midpoint of the first series circuit 99 and an opposite end connected to one end of the DC power supply in an AC equivalent circuit, as shown in FIG. 15.

Also in the embodiment, as in the embodiment described above, input current waveform information is converted into a switching frequency control signal and the switching frequency of the semiconductor switching element of the inverter is modulated, whereby it is made possible to suppress a power supply harmonic current.

### (Embodiment 12)

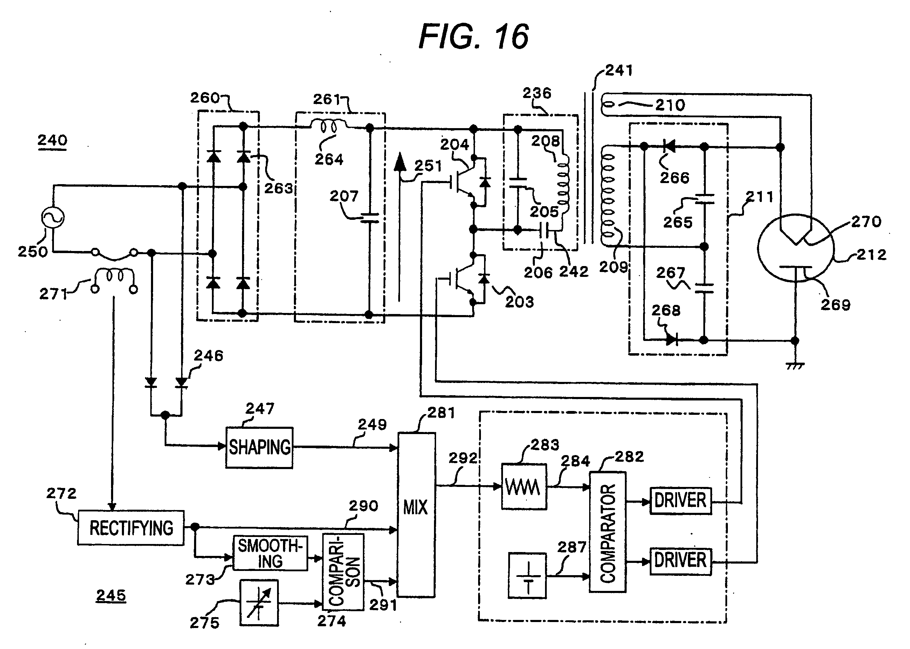

FIG. 16 is a block diagram to describe a high-frequency heating apparatus according to embodiment 12 having a power control unit in accordance with the invention. In FIG. 16, the high-frequency heating apparatus is made up of an inverter 240, a controller 245 for controlling first and second semiconductor switching elements 203 and 204 of the inverter, and a magnetron 212. The inverter 240 contains an AC power supply 250, a diode bridge type rectifier 260, a smoothing circuit 261, a resonance circuit 236, the first and second semiconductor switching elements 203 and 204, and a voltage-doubling rectifier 211.

An AC voltage of the AC power supply 250 is rectified in the diode bridge type rectifier 260 made up of four diodes 263 and is converted into a DC power supply 251 through the smoothing circuit 261 made up of an inductor 264 and a third capacitor 207. Then, it is converted into a high-frequency AC by the resonance circuit 236 made up of a first capacitor 205, a second capacitor 206, and a primary winding 208 of a transformer 241 and the first and second semiconductor switching elements 203 and 204, and a high frequency high voltage is induced in a secondary winding 209 of the transformer through the transformer 241.

The high frequency high voltage is induced in the secondary winding 209 is applied to between an anode 269 and a cathode 270 of the magnetron 212 through the voltage-doubling rectifier 11 made up of a capacitor 265, a diode 266, a capacitor 267, and a diode 268. The transformer 241 also includes a tertiary winding 210 for heating the heater (cathode) 270 of the magnetron 212. The inverter 240 has been described.

Next, the controller 245 for controlling the first and second semiconductor switching elements 203 and 204 of the inverter 240 will be discussed. To begin with, a current detection section made up of a CT (Current Transformer) 271 provided between the AC power supply 250 and the diode bridge type rectifier 260 is connected to a rectifier 272 and the CT 271 and the rectifier 272 make up an input current detection section for detecting an input current to the inverter. The input current to the inverter is insulated and detected in the CT 271 and output is rectified in the rectifier 272 to generate input current waveform information 290.

A current signal provided by the rectifier 272 is smoothed in the smoothing circuit 273 and a comparator 274 makes a comparison between the current signal and a signal from an output setting section 275 for outputting an output setting signal corresponding to the other heating output setting. To control the magnitude of the power, the comparator 274 makes a comparison between the input current signal smoothed in the smoothing circuit 273 and the setting signal from the output setting section 275. Therefore, an anode current signal of the magnetron 212, a collector current signal of the first, second semiconductor switching element 203, 204 can also be used as an input signal in place of the input current signal smoothed in the smoothing circuit 273. That is, the comparator 274 outputs power control information 291 for controlling so that the output of the input current detection section becomes a predetermined value, but the comparator 274 and the power control information 291 are not indispensable for the invention as described later.

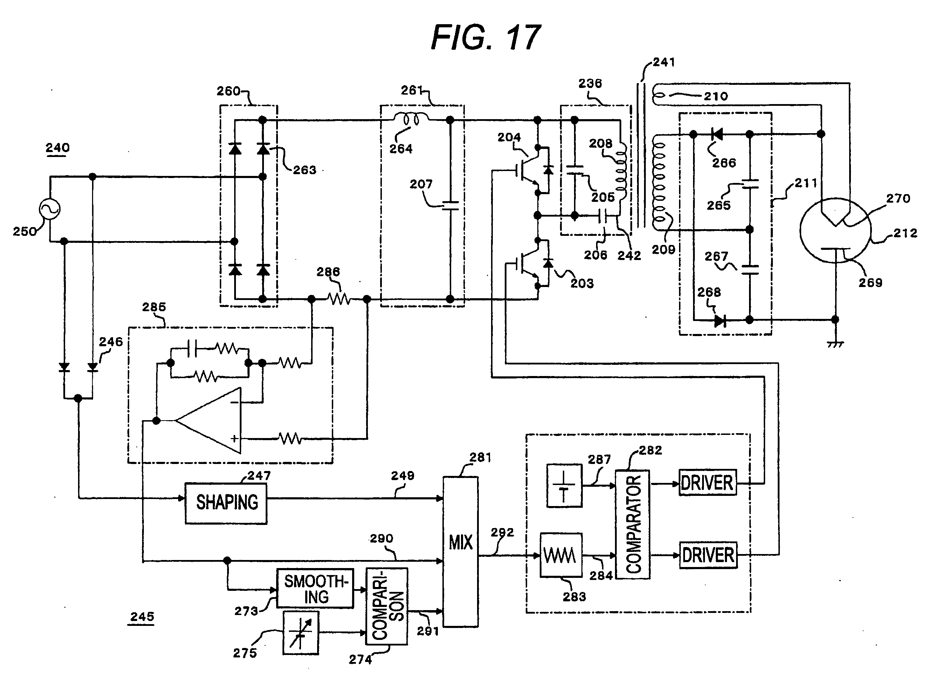

Likewise, as in an example shown in FIG. 17, a current detection section made of a shunt resistor 286 provided between the diode bridge type rectifier 260 and the smoothing circuit 261 and an amplifier 285 for amplifying a voltage across the current detection section may make up an input current detection section and output thereof may be used as the input current waveform information 290. The shunt resistor 286 detects an input current after rectified in a signal direction by the diode bridge type rectifier 260.

On the other hand, in the embodiment, the controller 245 also includes an input voltage detection section made up of a pair of diodes 246 for detecting voltage of the AC power supply 250 and rectifying the voltage and a shaping circuit 247 for shaping the waveform of the rectified voltage to generate input voltage waveform information 249.

In the embodiment, a mixer 281 selects the input current waveform information 290 or the input voltage waveform information 249, whichever is larger, and mixes and filters the selected information and the power control information 291 from the comparator 274 and outputs a switching frequency control signal 292. A sawtooth wave 284 output by a sawtooth wave generator 283 is frequency-modulated by the switching frequency control signal 292.

A comparator 282 makes a comparison between the sawtooth wave 284 and a slice control signal 287 described later, converts into a square wave, and feeds the provided square wave to a gate of the first, second semiconductor switching element 203, 204 through a driver.

In this case, the sawtooth wave from the sawtooth wave generator 283 frequency-modulated by the switching frequency control signal 292 is compared by the comparator 282 and turning on/off control of the semiconductor switching element of the inverter is performed for simplifying the input current waveform information detection system. Particularly, in the embodiment, the simplified configuration wherein the input current waveform information 290 is directly input to the mixer 281 is adopted.

The portion for generating a drive signal of the first, second semiconductor switching element 203, 204 from the switching frequency control signal 292 may be configured as a conversion section for converting the switching frequency control signal 292 into a drive signal of the semiconductor switching element of the inverter so that the switching frequency becomes high in a part where the input current from the AC power supply 250 is large and the switching frequency becomes low in a part where the input current is small, and the embodiment is not limited to the configuration.

To control turning on/off the semiconductor switching element 203, 204 relative to the input current waveform information 290, it is converted at a polarity to raise the switching frequency when the input current is large and to lower the switching frequency when the input current is small. Likewise, the input voltage waveform information 249 is also converted at a polarity to raise the switching frequency when the input voltage is large and to lower the switching frequency when the input voltage is small. Therefore, to make such waveforms, the input current waveform information and the input voltage waveform information are subjected to inversion processing in the mixer 281 for use.

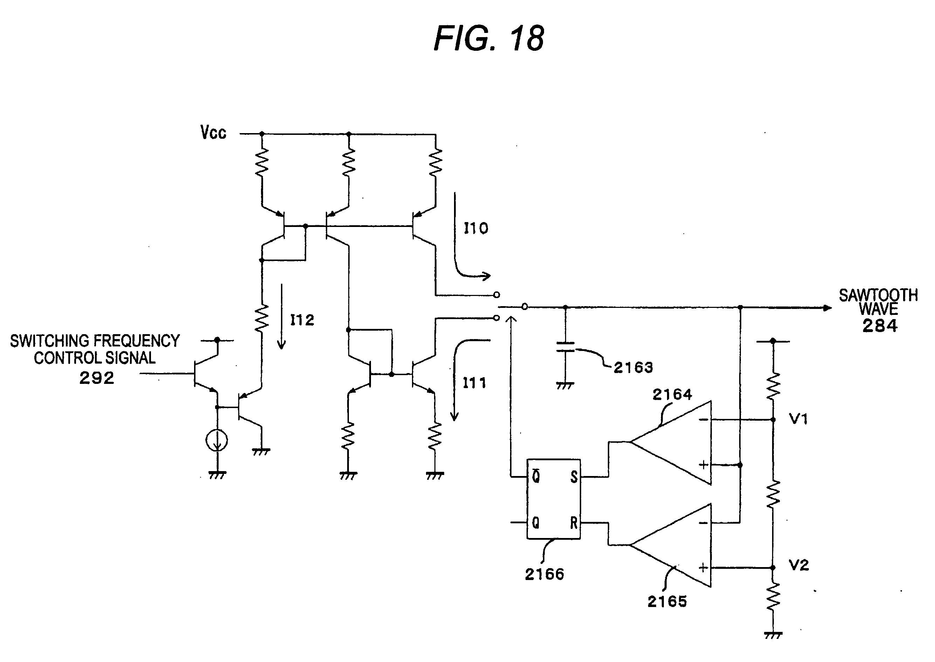

FIG. 18 is a detailed circuit diagram of the sawtooth wave (carrier wave) generator 283. Outputs of comparators 2164 and 2165 are input to an S terminal and an R terminal of an SR flip-flop 2166. Charge and discharge of a capacitor 2163 are switched according to the output polarity of a non-Q terminal of the SR flip-flop 2166; when the terminal is high, the capacitor 2163 is charged in a current I10 and when the terminal is low, the capacitor 2163 is discharged in a current I11. When the potential of the capacitor 2163 exceeds V1, the non-Q terminal of the SR flip-flop 2166 is set to low upon reception of output high of the comparator 2164; when the potential of the capacitor 2163 falls below V2, the non-Q terminal is reset to high upon reception of output high of the comparator 2165.

According to the configuration, the potential of the capacitor 2163 becomes like a sawtooth wave (triangular wave) and the signal is transported to the comparator 282.

The charge and discharge currents I10 and I11 of the capacitor 2163 are determined as a current I12 resulting from dividing the potential difference between the voltage of the switching frequency control signal 292 and Vcc by a resistance value is reflected, and the gradient of the triangular wave changes with the magnitude of the current. Therefore, the switching frequency is determined by the magnitude of I10, I11 on which the switching frequency control signal is reflected.

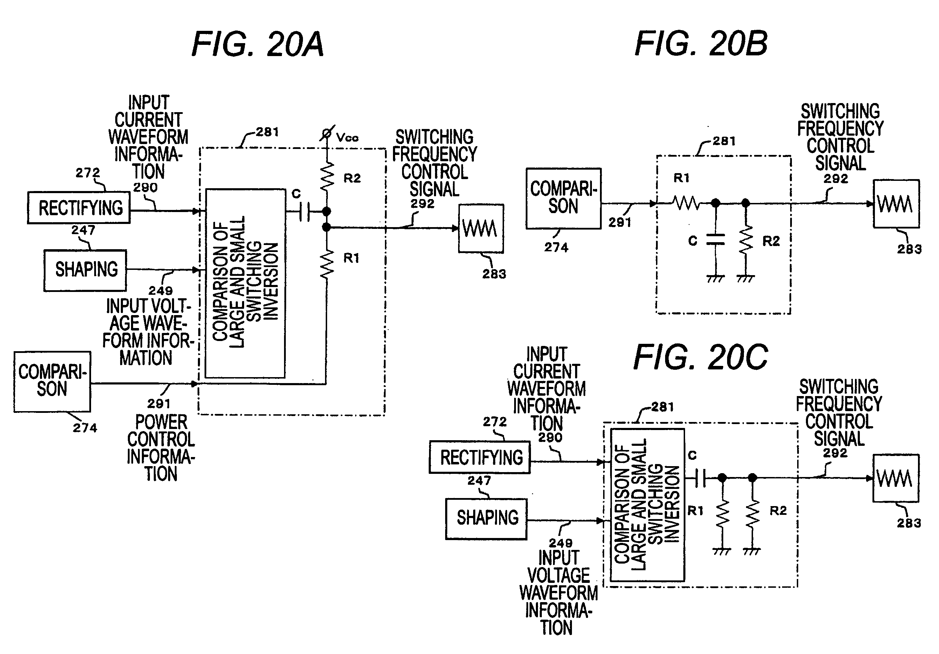

FIG. 20A shows an example of the mixer 281. The mixer 281 has three input terminals; the power control information 291, the input current waveform information 290, and the input voltage waveform information 249 are added to the three terminals and are mixed in an internal circuit as shown in the figure.

As in FIG. 20B, a high-cut filter is formed between outputs from the power control information 291 as shown in an AC equivalent circuit in the mixer 281. Accordingly, a high-frequency component contained in power control as an obstacle to the input current waveform information 290 to shape the input current waveform is cut through the filter.

As in FIG. 20C, a low-cut filter is formed between outputs from the input current waveform information 290 and the input voltage waveform information 249 as shown in an AC equivalent circuit in the mixer 281. Therefore, the power control information 291 is converted into a DC component of output of the mixer 281 and the input current waveform information 290 and the input voltage waveform information 249 are each converted into an AC component.

In embodiment 12, as described above, the signal of the input current waveform information 290 or the input voltage waveform information 249, whichever is larger, is selected and is converted into the switching frequency of the semiconductor switching elements 203 and 204 of the inverter for use. The inverter generally used with a microwave oven is known; a commercial AC power supply of 50 to 60 cycles is rectified to a direct current, the provided DC power supply is converted into a high frequency of about 20 to 50 KHz, for example, by the inverter, and a high voltage provided by boosting the provided high frequency by a transformer and further rectifying it in a voltage-doubling rectifier is applied to a magnetron.

There are two types of inverter systems, for example, of an on time modulation system using a so-called single-ended voltage resonant-type circuit for using one semiconductor switching element for switching and changing the on time of a switching pulse for changing output, often used in a region where the commercial power supply is 100 V and a (half) bridge type voltage resonant-type circuit system for alternately turning on two semiconductor switching elements 203 and 204 connected in series and controlling the switching frequency for changing output, as shown in FIG. 16 of the invention. The bridge type voltage resonant-type circuit system is a system capable of adopting a simple configuration and control in such a manner that if the switching frequency is raised, output lowers and if the switching frequency is lowered, output increases.

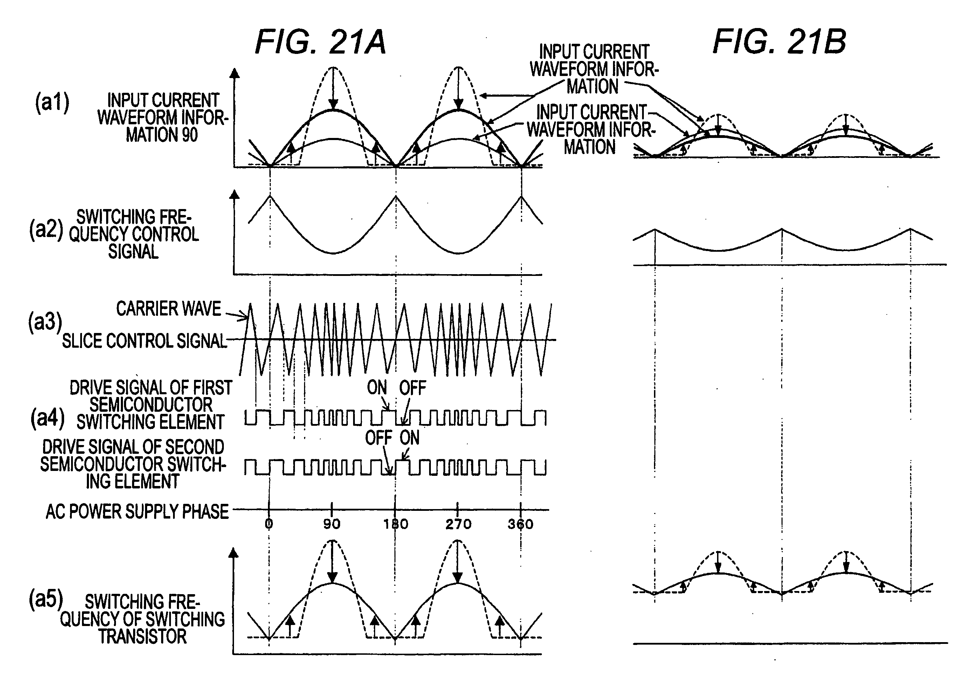

FIGs. 21 A and 21 B are drawings to describe waveforms provided according to embodiment 12 of the invention. This example is applied when the magnetron oscillates normally, namely, shows the state at the ordinary running time and both the input current waveform information and the input voltage waveform information are converted into drive signals of the semiconductor switching elements (switching transistors) 203 and 204 for use.

In FIGs. 21A and 21B, FIG. 21A shows the case where input current is large and FIG. 21 B shows the case where input current is small. The solid line represents the signal shape after correction by the power control unit of the invention mainly used in the description to follow, and the dashed line represents the signal shape of instantaneously fluctuating output before correction from the AC power supply 250, as described later.

In FIG. 21A, the waveform of the input current waveform information in (a1) from the top is the input current waveform information 290 output by the rectifier 272 in FIG. 16 and output by the amplifier 285 in FIG. 17, and the dotted line shows a waveform before correction, caused by the nonlinear load characteristic of the magnetron. The waveform of the input voltage waveform information in (a1) is the input voltage waveform information 294 output from the shaping circuit 262. (a2) of FIG. 21A shows the switching frequency control signal 292 of correction output of the mixer 281. The switching frequency control signal 292 has the size changed following the input current waveform information 290, the input voltage waveform information 294, and the power control information 291 and further is output as an inversion waveform of (a1) to complement and correct the distortion component of the input current.
(a3) of FIG. 21A shows the sawtooth wave (carrier wave) frequency-modulated according to the switching frequency control signal shown in (a2) and slice control signal, and drive signals of on and off signals of the first and second semiconductor switching elements 203 and 204 shown in (a4) are generated. The two drive signals have on and off complementary relationship to each other.

The drive signals of the first and second semiconductor switching elements provided by inputting the sawtooth wave 284 (carrier wave) frequency-modulated and the slice control signal 287 to the comparator 282 and making a comparison therebetween by the comparator 282 undergo frequency modulation like the sawtooth wave as in (a4) of FIG. 21A.

That is, as shown in the figure, the frequency of the sawtooth wave is low in a portion where the amplitude value of the switching frequency control signal is large (in the proximity of 0 degrees, 180 degrees; the input current is small) and thus is corrected to the polarity to raise the input current from the resonance characteristic described above. Since the frequency of the sawtooth wave is high in a portion where the amplitude value of the switching frequency control signal is small (in the proximity of 90 degrees, 270 degrees; the input current is large), a pulse string of a frequency as in (a4) to correct to the polarity to lower the input current from the resonance characteristic described above is output as the drive signal of the semiconductor switching element. That is, since the switching frequency control signal (a2) is inverted as a correction waveform relative to the input current waveform information and the input voltage waveform information (a1), conversion is executed to inversion output opposite to (a1) in such a manner that the frequency is raised like the pulse string signal in (a4) in a portion where input of the input current waveform information and the input voltage waveform information (a1) is large (in the proximity of 90 degrees, 270 degrees) and the frequency is lowered in a portion where input of the input current waveform information and the input voltage waveform information (a1) is small (in the proximity of zero cross at 0 degrees, 180 degrees). Accordingly, the correction effect of the input waveform is provided; this effect is large particularly in the proximity of zero cross.

The waveform in (a5) at the bottom stage shows the switching frequency of the first, second semiconductor switching element 203, 204. A high-frequency sawtooth wave is frequency-modulated according to the switching frequency control signal (a2) of the correction waveform provided by inverting the input current waveform information and the input voltage waveform information shown in (a1) and a comparison is made between the frequency-modulated sawtooth wave and the slice control signal, whereby inverter conversion into a high frequency of 20 KHz to 50 KHz is executed and the drive signal in (a4) is generated. The semiconductor switching element 203, 204 is turned on and off in response to the drive signal (a4) and high-frequency power is input to the primary side of the transformer and a boosted high voltage is generated on the secondary side of the transformer. In (a5), to visualize how the frequency of each pulse of the on and off signals (a4) changes within the period of the commercial power supply, frequency information is plotted on the Y axis and the points are connected.

The description given above shows the same signals as in the state in which the input current from the AC power supply 250 is provided in an identical state (for example, sine wave). However, generally the input current from the AC power supply 250 deviates from the ideal sine wave and fluctuates from the instantaneous viewpoint. The dashed line signal indicates such an actual state. Generally, the actual signal deviates from the state of the ideal signal and instantaneous fluctuation occurs from the viewpoint of an instantaneous time period of a half period of the commercial power supply (0 to 180 degrees) as indicated by the dashed line. Such a signal shape occurs due to the boosting action of a transformer and a voltage-doubler circuit, the smoothing characteristic of a voltage-doubler circuit, the magnetron characteristic that an anode current flows only when the voltage is ebm or more. That is, it can be the that the fluctuation is indispensable in the inverter for the magnetron.

In the power control unit of the invention, when the input current detection section provides the input current waveform information indicated by the dashed line on which the fluctuation state of the input current is reflected (see FIG. 21A (a1)) and the input current waveform information is selected, the later control is performed based on the input current waveform information. This control is performed so that the instantaneous fluctuation of the input current waveform information occurring in a time period such as a half period, for example, is suppressed so as to approach an ideal signal as indicated by the arrow. This suppression is accomplished by adjusting the drive signal of the first, second semiconductor switching element 203, 204. Specifically, if the input current waveform information 290 is smaller than the ideal signal, the above-described frequency becomes lower and a correction is made for increasing the input current. If the input current waveform information is larger than the ideal signal, the above-described frequency becomes higher and a correction is made for decreasing the input current. Also in the instantaneous fluctuation in a shorter time period, the fluctuating waveform is reflected on frequency information and a similar correction to that described above is made.

A correction as indicated by the arrow is made to the input current waveform information 290 by the instantaneous fluctuation suppression action of the first, second semiconductor switching element 203, 204 to which the drive signal is given, and input close to the ideal wave is given to the magnetron at all times. The signals in (a2) and (a3) after the correction are not shown in the figure. The ideal signal is a virtual signal and the signal becomes a sine wave.

That is, in a short time period such as a half period of the commercial power supply, the sum total of instantaneous error or correction amount between the ideal signal waveform and the input current waveform information is roughly zero because the magnitude of the input current is controlled (power control) by another means. The portion wherein the input current does not flow due to a nonlinear load is corrected in the direction in which the input current is allowed to flow and thus the portion wherein the input current is large is decreased and the above-mentioned roughly zero is accomplished. This means that a correction is made so that the current waveform of even a nonlinear load can be assumed to be a linear load and since the commercial power supply voltage waveform is a sine wave, the ideal waveform becomes a sine wave like the current waveform flowing into a linear load.

Thus, to cancel out a change in the input current waveform and excess and deficiency relative to the ideal waveform, the input current is corrected at the opposite polarity to the waveform. Therefore, a rapid current change in the commercial power supply period caused by a nonlinear load of the magnetron, namely, distortion is canceled out in the control loop and input current waveform shaping is performed.

Further, since the control loop thus operates according to the input current waveform information following the instantaneous value of the input current, even if there are variations in the magnetron type or the magnetron characteristic or even if ebm (anode-to-cathode voltage) fluctuation caused by the magnetron anode temperature or the load in the microwave oven or power supply voltage fluctuation occurs, input current waveform shaping can be performed independently of the effects.

Particularly, in the invention, the semiconductor switching element is controlled based on instantaneously fluctuating input current waveform information. Instantaneous fluctuation of the input current is input directly to the mixer 281 in the form of the input current waveform information and is also reflected on the switching frequency control signal 292, so that the drive signal of the semiconductor switching element excellent in the tracking performance for suppression of input current waveform distortion and instantaneous fluctuation can be provided.

The subject of the invention is to convert the input current waveform information or the input voltage waveform information having the information into the drive signal of the semiconductor switching element of the inverter so as to suppress distortion of the input current waveform and instantaneous fluctuation. The power control information 291 is not indispensable for accomplishing the purpose, because the power control information 291 is information to control power fluctuation in a long time period, namely, in a period longer than the commercial power supply period or so and is not information for correcting instantaneous fluctuation in a short time period such as a half period of AC that the invention aims at. Therefore, adoption of the mixer 281, the comparator 282, and the sawtooth wave generator 283 is also only one example of the embodiment and as the mixer 281, at least equivalents to the selection section for selecting the input current waveform information or the input voltage waveform information, whichever is larger, and the conversion section for performing the conversion described above may exist between the input current detection section and the semiconductor switching element.

To use the power control information, it is not indispensable either to input the power control information 291 for controlling so that the output of the input current detection section becomes a predetermined value into the mixer 281 as in the embodiment described above. That is, in the embodiment described above, the power control information 291 originates from the current detection section 271 for detecting the input current and the rectifier 272 (in FIG. 16) or the shunt resistor 286 and the amplifier 285 (in FIG. 17), but information for controlling so that the current or the voltage at an arbitrary point of the inverter 240 becomes a predetermined value can be input to the mixer 281 as the power control information. For example, resonance circuit voltage information 242 of the resonance circuit 262 as shown in FIGs. 16 and 17 can be used intact as the power control information or information provided after undergoing smoothing by the smoothing circuit 273 and comparison with the output setting signal in the comparator 274 can be used as the power control information.

Next, FIG. 21 B shows the case where the input current is small relative to FIG. 21A by comparison; (b1) shows the input current waveform information when input is small and corresponds to (a1) of FIG. 21A, (b2) shows the switching frequency control signal and corresponds to (a2) of FIG. 21A, and (b3) shows the switching frequency of the semiconductor switching element and corresponds to (a5) of FIG. 21A. Although not shown in the figure, the same processing is also performed as comparison processing of sawtooth wave shown in (a3) and (a4) of FIG. 21A, of course.

By the way, if the input current is comparatively small as in FIG. 21 B, the value of the input current waveform information also becomes small and thus the waveform shaping performance of the input current degrades. Then, in the invention, if the input voltage waveform information (dotted line) is larger than the input current waveform information, the input voltage waveform information is used for waveform shaping, as in FIG 21B. In the embodiment, the input voltage is attenuated and the input voltage waveform information is provided and the input current is converted into a voltage and the input current waveform information is provided, whereby a direct comparison can be made between the magnitudes of both.

Thus, when the input current is controlled small, the input current waveform information becomes small and the input current waveform shaping performance degrades. However, the input voltage waveform information larger than the current waveform is selected and input current waveform shaping is performed, so that degradation of the input current waveform shaping performance is suppressed. Therefore, if the input current is small, drastic degradation of the power factor can also be prevented. The amplitude of the input voltage waveform information (a threshold value to determine whether or not the input current is small) can be realized by setting the attenuation factor from the commercial power supply voltage waveform (voltage dividing ratio) so that the amplitude becomes about the amplitude of the input current waveform information at the time of 50% to 20% of the maximum input current, for example.

The description based on FIGs. 21A and 21 B given above concerns the ordinary running time of the magnetron. Next, the operation at the starting time of the magnetron will be discussed. The starting time refers to the state of the preparation stage before the magnetron starts to oscillate although a voltage is applied to the magnetron (corresponding to the non-oscillation time). At this time, unlike the ordinary running time, the impedance between the anode and the cathode of the magnetron becomes equal to infinity.

By the way, in the invention, the voltage from the commercial AC power supply 250 is multiplied by power control based on the switching frequency control system, namely, the commercial AC power supply voltage is amplitude-modulated under the power control based on the switching frequency control system and is applied to the primary side of the transformer 241. The peak value of the applied voltage to the primary side is associated with the applied voltage to the magnetron 212 and the area defined from the applied voltage and the elapsed time is associated with the supplied power to the heater.

In the invention, at the starting time at which the input current waveform information 290 is small, the input voltage waveform information 249 is also input to the mixer 281. That is, the mode in which the input voltage makes up for a shortage of the input current as a reference signal particularly at the starting time is adopted.

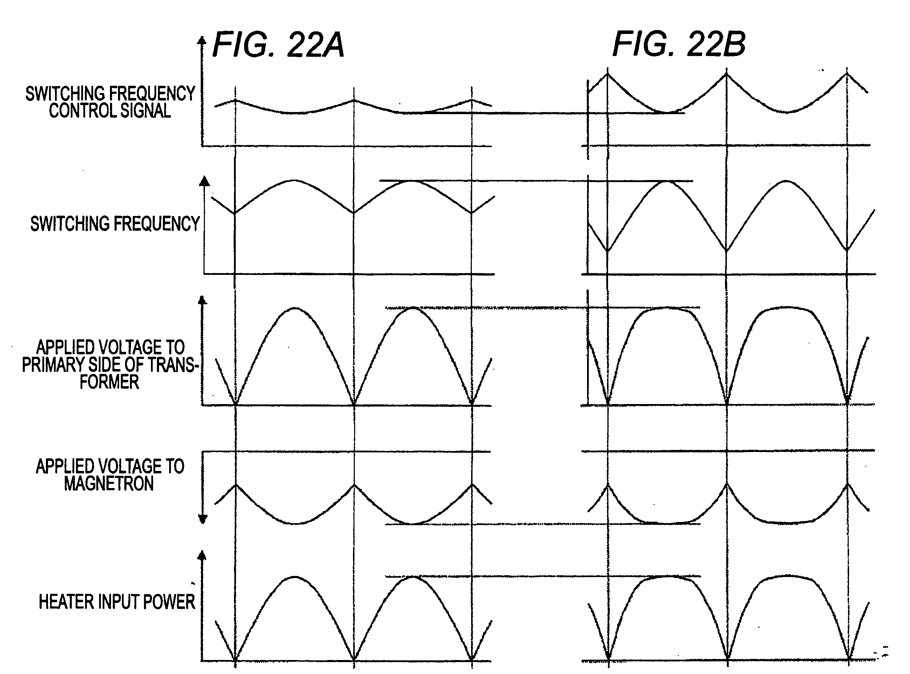

FIGs. 22A and 22B are drawings to describe by comparison the operation when the input voltage waveform information is added and the operation when the input voltage waveform information is not added; FIG. 22A shows the waveforms of the switching frequency control signal, the switching frequency, the applied voltage to the primary side of the transformer, the applied voltage to the magnetron, and the heater input power in order from the top when the input voltage waveform information is not added.

FIG. 22B describes the operation when the input voltage waveform information is added (at the starting time). Both FIGs. 22A and 22B show the case where the peak value of the applied voltage to the primary side of the transformer is limited according to the configuration of embodiment 18 described later. Further, in FIG. 22B, the peaks of the applied voltage to the primary side of the transformer and the applied voltage to the magnetron are suppressed by the action of the added input voltage waveform information and the waveforms show trapezoids. Like FIG. 21A, FIG. 22B also shows the waveforms of the switching frequency control signal, the switching frequency, the slice control signal, the applied voltage to the primary side of the transformer, the applied voltage to the magnetron, and the heater input power in order from the top.

As shown in FIGs. 22A and 22B, the switching frequency of the semiconductor switching element is low in the vicinity of phases of 0 degrees and 180 degrees, and thus the amplification widths of the applied voltage to the primary side of the transformer and the applied voltage to the magnetron become comparatively large. On the other hand, since the switching frequency of the semiconductor switching element is high in the vicinity of phase 90 degrees, 270 degrees, the amplitude width is comparatively suppressed and the whole figure of the waveform becomes a trapezoid and a shape with a peak suppressed is shown from the relative relationship with the amplitude width at phases of 0 degrees and 180 degrees.

Making a comparison between the applied voltage to the magnetron in FIG. 22A and that in FIG. 22B, if the applied voltage to the magnetron is the same, the waveform area indicating the heater input power in FIG. 22B is larger. That is, the heater input power in FIG. 22B grows as compared with that in FIG. 22A, so that the heater is heated in a short time and it is made possible to shorten the start time.

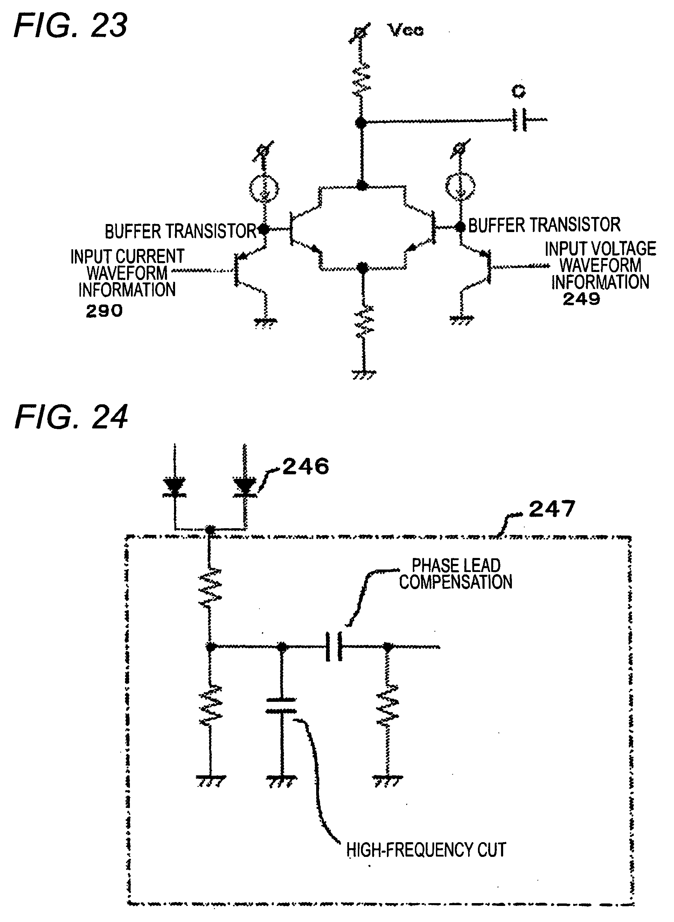

FIG. 23 is a drawing to show an example of a comparison inversion circuit (comparison selection circuit; larger-than, equal-to, less-than relation comparison, switching, inversion circuit) for selecting and inverting the input current waveform information or the input voltage waveform information, whichever is larger, used in embodiment 12 of the invention. This comparison selection circuit is provided in the mixer 281 as shown in FIGs. 20, 25, and 26.

The input current waveform information 290 and the input voltage waveform information 249 are input to buffer transistors and outputs thereof are input to two transistors having a common emitter resistor and a common collector resistor. The buffer transistors are provided for preventing interference of the input current waveform information 290 and the input voltage waveform information 249. According to the diode characteristic of the transistor, the larger input signal is selected and output to the common connection point of the common emitter resistor of the two transistors, and the transistor to which the selected signal is input conducts. The emitter current and the collector current of the conducting transistor reflect the magnitude of the input signal. The magnitude of the collector current is reflected on the potential of the common connection point of the common collector resistor.

When the emitter voltage becomes high, the collector current increases and the voltage drop of the common collector resistor increases. That is, the collector voltage lowers and thus has the polarity inverted relative to the input signal. The signal conversion coefficient also changes according to the resistance value ratio between the collector resistor and the emitter resistor. From the viewpoint of interference with the power control signal, it is more effective to execute impedance conversion of the signal of the common collector resistor through a buffer and then connect the signal to a capacitor. Thus, in the circuit, magnitude determination of the two signals and selection of either signal are performed automatically and the selected signal is inverted and output.

### (Embodiment 13)

Embodiment 13 of the invention relates to the configuration of a controller (conversion section) and has the configuration wherein in FIG. 16, the signal of the input current waveform information 290 or the input voltage waveform information 249, whichever is larger, is selected and the selected signal and the power control information from the comparator 274 are mixed and filtered and converted into on and off drive signals of the semiconductor switching element 203, 204 of the inverter for use.

According to the configuration, it is not necessary to process commercial power supply voltage waveform information conforming to the nonlinear load characteristic of a magnetron, and a frequency modulation signal generator is simplified and simplification and miniaturization can be accomplished. Further, according to the simple configuration, the start time is shortened and safety measures for preventing an excessive voltage from being applied to between the anode 269 and the cathode 270 of the magnetron are also added, so that the reliability of the product improves.

The configuration as described above is adopted, whereby a control loop using the input current waveform information 290 is specialized for waveform shaping of input current and a control loop using the power control information 291 is specialized for power control and they do not interfere with each other in the mixer 281 for holding the conversion efficiency.

### (Embodiment 14)

Embodiment 14 of the invention relates to an input current detection section. In FIG. 16, the input current detection section detects the input current of the inverter with the CT 271 and performs rectification output from the rectifier 272. According to the configuration, the input current is detected using the CT and thus a large signal can be taken out while insulating property is maintained, so that the effect of input current waveform shaping is large and the quality of the input current is improved.

In the example shown in FIG. 17, the input current detection section detects the unidirectional current after rectified in the rectifier 260 of the inverter through the shunt resistor 286 placed between the rectifier 260 and the smoothing circuit 261, amplifies the voltage occurring across the shunt resistor 86 by the amplifier (amplifier) 285, and outputs the voltage. The configuration has the advantage that the input current detection section can be configured at a low cost because the detection section need not be insulated from electronic circuitry and rectification need not be performed either.

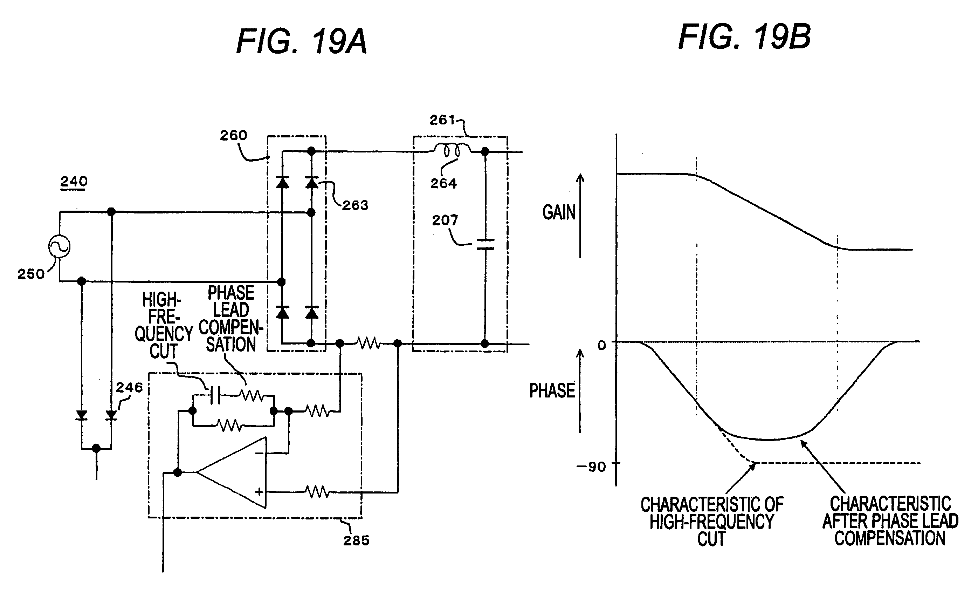

The amplifier 285 of the input current detection section shown in FIG. 17 attenuates the high frequency spectral region of the commercial power supply and the high frequency portion of a high-frequency switching frequency for preventing unnecessary resonance. Specifically, as shown in the detailed diagram of the input current detection section of FIGs. 19A and 19B, the amplifier 285 attenuates the high frequency spectral region of the commercial power supply and the high frequency portion of a high-frequency switching frequency using a high-cut capacitor, as in FIG. 19A.

Further, for a phase delay occurring as shown in the phase characteristic drawing of FIG 19B by inserting the high-cut capacitor of the amplifier 285, a resistor is inserted in series with the capacitor and phase lead compensation is added for preventing a transient time delay to ensure the stability of a control loop. Also in the rectifier 272 in FIG. 16, the configuration to attenuate the high frequency portion and the configuration to add phase lead compensation for preventing a transient time delay can be used. A similar configuration can also be used in a shaping circuit 247 of an input voltage waveform information creation section as shown in FIG. 24.

### (Embodiment 15)

Embodiment 15 relates to the mixer 281 shown in FIGs. 16 and 17. The mixer is provided with three terminals to which the input current waveform information 290, the input voltage waveform information 249, and the power control information 291 are input as shown in FIG. 20A.

The input current waveform information 290 and the input voltage waveform information 249 are input to an addition and inversion circuit as shown in FIG. 23 and are added and inverted. The signal after subjected to the processing and the power control information 291 are input to a filter circuit made up of C, R1, and R2 and are filtered and then are output to a sawtooth wave generator as a switching frequency control signal 292. The filter circuit cuts the high-frequency component of the power control output 291 as shown in the equivalent circuit diagram of FIG. 20B. Such a configuration is adopted, whereby the high-frequency component hindering input current waveform shaping is cut, so that the quality of the input current waveform improves. On the other hand, a low-cut filter is formed for the input current waveform information 290 and the input voltage waveform information 249 to preserve the waveform, as shown in the equivalent circuit diagram of FIG. 20C.

### (Embodiment 16)

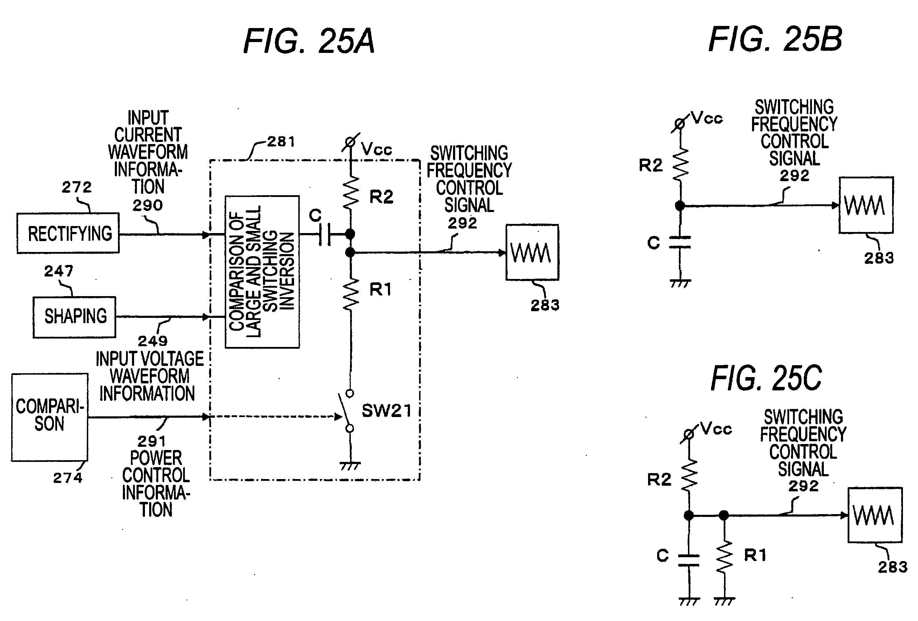

Embodiment 16 of the invention controls the characteristic of a mixer for combining input current waveform information of an input current detection section, input voltage waveform information of an input voltage detection section, and power control information to control so that output of the input current detection section becomes a predetermined value by providing a difference between the input current increase control time and decrease control time, as shown in a configuration diagram of the mixer concerning embodiment 16 in FIG. 25.

In the configuration diagram of FIG. 25A, an SW21 is turned on/off according to power control information 291 for lowering/raising a switching frequency control signal 292. At the input current increase control time, the SW21 is turned off and the switching frequency control signal is gradually raised according to a time constant of C*R2 for lowering the switching frequency of a semiconductor switching element, as shown in an equivalent circuit in FIG. 25B.

At the input current decrease control time, the SW21 is turned on and the switching frequency control signal is rapidly lowered according to a time constant of C*{R1*R2/(R1+R2)} for raising the switching frequency of the semiconductor switching element, as shown in an equivalent circuit in FIG. 25C. That is, the circuit configuration of the mixer 281 is switched between the input current increase control time and the input current decrease control time. Particularly, at the input current increase control time, the time constant is set large and at the input current decrease control time, the time constant is set small.

The difference is thus provided, whereby the control characteristic for moderately responding usually and the control characteristic for decreasing the input current in a prompt response for preventing component destruction if the input current transiently rises for some reason can be realized. Safety of the control characteristic for a nonlinear load of a magnetron can also be ensured.

### (Embodiment 17)

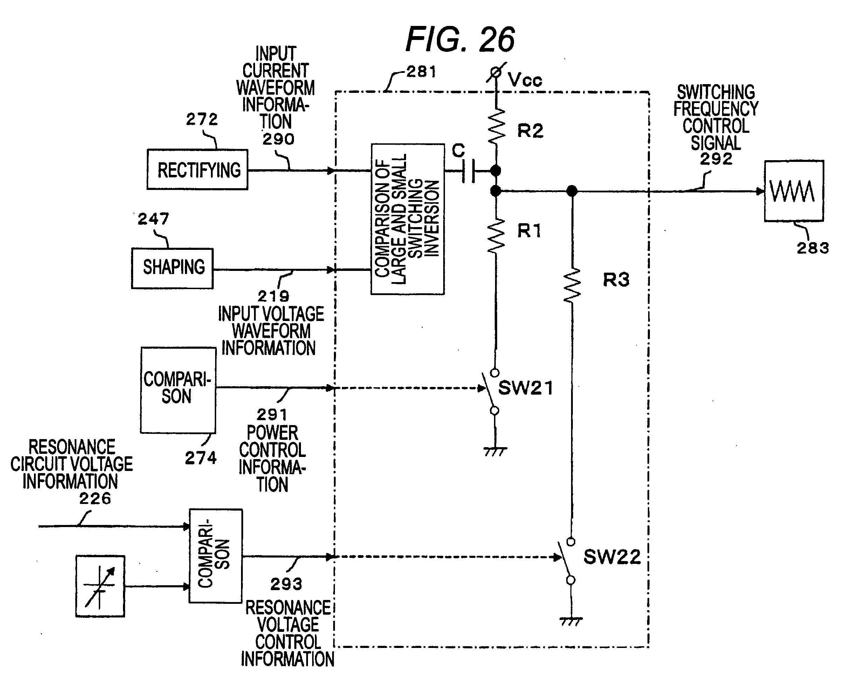

Embodiment 17 of the invention inputs resonance voltage control information 293 for controlling resonance circuit voltage information 226 of a resonance circuit to a predetermined circuit to a mixer 281, as shown in a configuration diagram of the mixer concerning embodiment 27 in FIG. 26.

As shown in FIG. 26, an SW22 is turned on/off according to the resonance voltage control information 293 provided by making a comparison between the resonance voltage of the resonance circuit and a reference value. If the resonance voltage is low, the SW22 is turned off and a switching frequency control signal is gradually raised according to a time constant of C*R2 for lowering the switching frequency of a semiconductor switching element. If the resonance voltage is high, the SW22 is turned on and the switching frequency control signal is rapidly lowered according to a time constant of C*{R2*R3/(R2+R3)} for raising the switching frequency of the semiconductor switching element. That is, the circuit configuration of the mixer 281 is switched in response to the magnitude of the resonance voltage of the resonance circuit. Particularly, if the resonance voltage is low, the time constant increases and if the resonance voltage is high, the time constant decreases.

This control is effective for preventing an excessive voltage from being applied to a magnetron when the magnetron does not oscillate, namely, the power control does not function. After oscillation of the magnetron starts, preferably the reference value compared with the resonance voltage is set large as compared with that before oscillation of the magnetron starts to invalidate the control and produce no effect on the power control.

### (Embodiment 18)

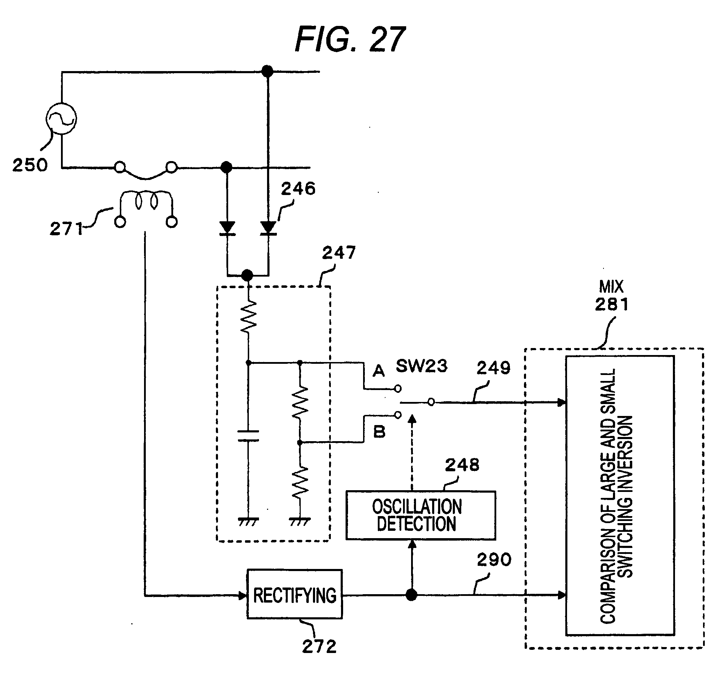

Embodiment 18 of the invention shown in FIG 27 adopts a configuration wherein the addition amount of input voltage waveform information to input current waveform information is switched between before and after oscillation of a magnetron. In embodiment 18, a changeover switch S23 is provided between the shaping circuit 247 and the mixer 281 in FIG. 16 and an oscillation detector 248 for detecting the oscillation start of a magnetron from output of a rectifier 272 is provided. Connection points A and B of the changeover switch S23 with the shaping circuit 247 are switched according to output of the oscillation detector 248. The shaping circuit 247 is provided with three voltage dividing resistors connected in series between a diode 246 and ground for dividing and outputting power supply voltage information from commercial power supply voltage. The power supply voltage information at the connection point A nearer to a commercial power supply 250 is large because the attenuation amount from the commercial power supply voltage is small as compared with that at the connection point B near to the ground. A capacitor provided in the shaping circuit 247 suppresses entry of noise into the power supply voltage information from the commercial power supply.

When the magnetron being started is detected from the output of the oscillation detector 248, the SW23 is switched to the connection point A. In this case, a larger signal (input voltage waveform information) is input to the mixer 281 and the start time is shortened as compared with switching the SW23 to the connection point B, as described above.

When the oscillation detector 248 detects the oscillation start, the SW23 is switched to the connection point B for attenuating the signal, so that input current waveform shaping when the input current is large is not hindered and the power factor when the input current is small is improved. Thus, the amplitude switching means of the power supply voltage information between before and after the magnetron oscillation start is included, so that if the amplitude of the power supply voltage information after the oscillation start is set the same as that in the case where the amplitude switching means is not included, the amplitude before the oscillation start can be set large and thus the effect of shorting the start time described above becomes larger.

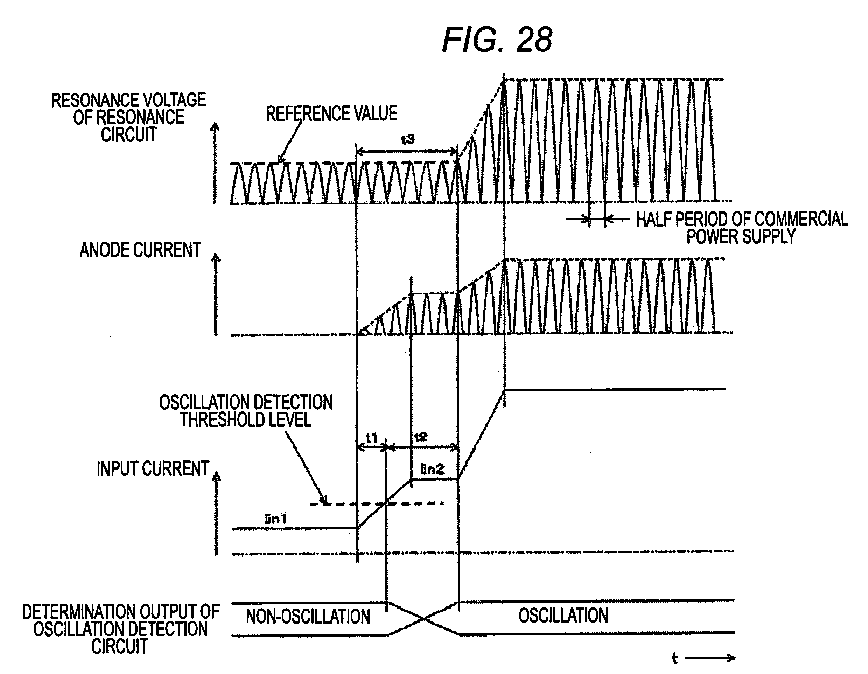

FIG. 28 is a time-series chart relevant to oscillation detection of a magnetron and also shows change in anode current and the resonance voltage of a resonance circuit with change in input current. Before the oscillation start of a magnetron 212, the impedance of the secondary side of a transformer 241 is very large, namely, the impedance between the anode and the cathode of the magnetron is infinite. Therefore, power is scarcely consumed in the secondary side load of the transformer and resonance voltage control information 293 reflecting the resonance voltage of the resonance circuit is controlled (limited) to a predetermined value and thus the input current to the oscillation detector 248 is small (lin1 in FIG. 28).

On the other hand, after the oscillation start of the magnetron 212, the impedance between the anode and the cathode of the magnetron lessens and the impedance of the secondary side of the transformer also lessens. Therefore, the heavy load (magnetron) is driven with the resonance voltage of the resonance circuit controlled (limited) to the predetermined value and thus the input current to the oscillation detector 248 becomes large as compared with that before the oscillation start (lin2 in FIG. 28).

There is a configuration of the oscillation detector 248 using the characteristic that a clear difference occurs between before and after the oscillation start of the magnetron while the resonance voltage of the resonance circuit is maintained at a given level and making a comparison between the preset oscillation detection threshold level between lin1 and lin2 as shown in FIG. 28 and the output of an input current detection section by a comparator and latching the output.

### (Embodiment 19)

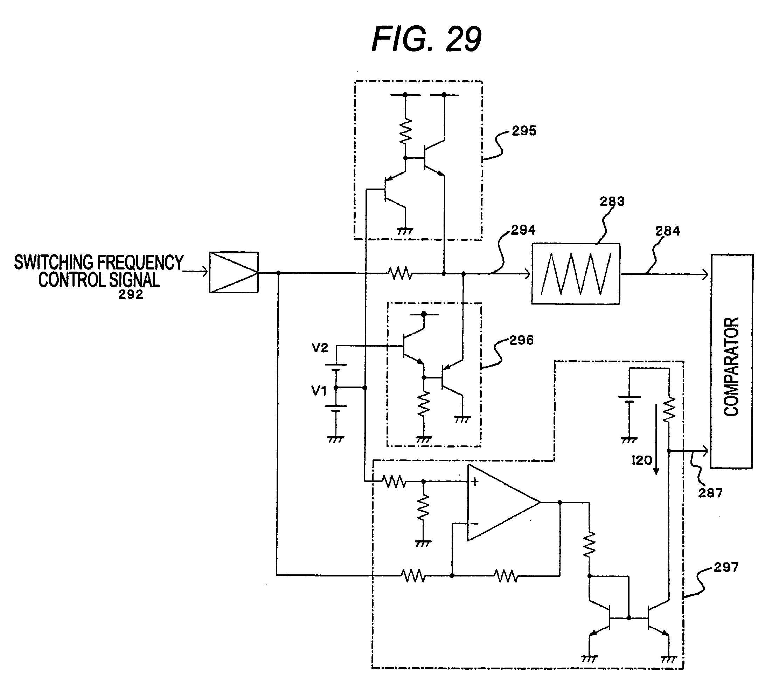

Embodiment 19 of the invention imposes a limitation on a switching frequency, as shown in a configuration diagram of a switching frequency limitation circuit concerning embodiment 19 in FIG. 29.

A frequency modulation signal 294 input to a sawtooth wave generator 283 is created as a switching frequency control signal 292 receives limitations of the lowest potential and the highest potential through a first limitation circuit 295 depending on a fixed voltage V1 and a second limitation circuit 296 depending on a fixed voltage V2.

As the potential limitations, in the former, the highest switching frequency is limited and in the latter, the lowest switching frequency is limited from the relationship between the switching frequency control signal 292 and the switching frequency.

The first limitation circuit 295 limits the highest frequency for preventing a switching loss increase of semiconductor switching elements 203 and 204 when the switching frequency raises.

If the switching frequency approaches a resonance frequency, a resonance circuit 262 abnormally resonates and the semiconductor switching element is destroyed. The second limitation circuit 296 has a function of limiting the lowest frequency for preventing the phenomenon.

### (Embodiment 20)

Embodiment 20 of the invention complements the range in which the highest frequency is limited by a first limitation circuit 295 by power control of on duty control of a semiconductor switching element (transistor), as shown in a configuration diagram of a slice control signal creation circuit concerning embodiment 20 in FIG. 29.

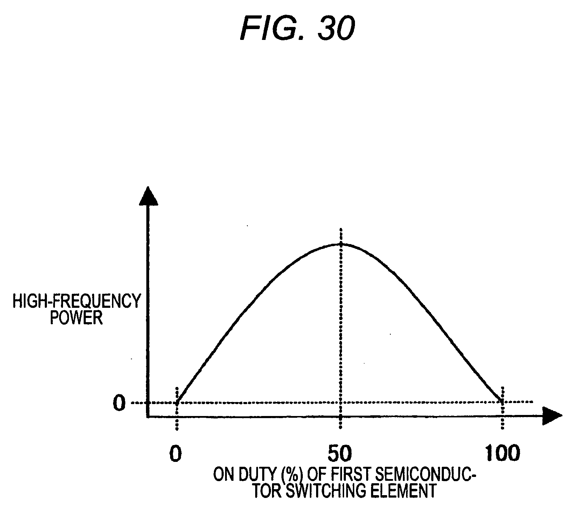

FIG. 30 is a drawing to show the relationship between the on duty of a first semiconductor switching element (transistor) 203 and high-frequency power of a bridge resonant-type inverter. When the on duty is 50%, the high-frequency power becomes a peak and as the on duty falls below or exceeds 50%, the high-frequency power decreases.

The on duty of a second semiconductor switching element and the on duty of the first semiconductor switching element are complementary to each other and therefore 0 and 100 of X axis numeric values in FIG. 30 are replaced in read.

To lessen high-frequency output, namely, to lessen the input current, a switching frequency control signal 292 is changed in a direction for increasing a switching frequency as described above, but this power control does not function in a time period during which a frequency limitation is imposed on a frequency modulation signal 294 by the first limitation circuit 295. Upon reception of the same fixed voltage V1 and switching frequency control signal 292 as the first limitation circuit 295, a slice control signal creation circuit 297 allows a current I20 to flow during the above-mentioned time period so that a slice control signal 287 changes.

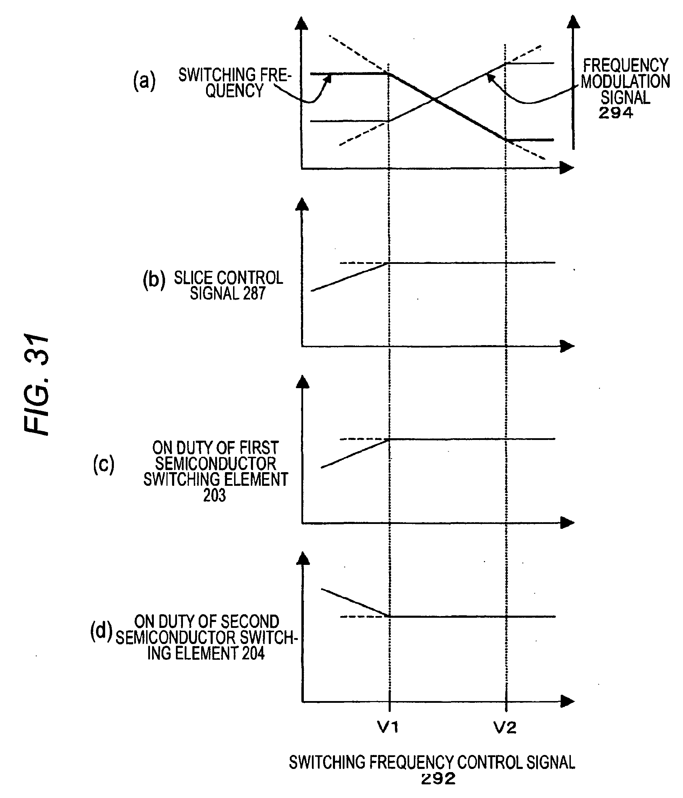

In FIG. 31, the potential of the switching frequency control signal 292 is taken on an X axis and various signals affected by the signal are taken on a Y axis. (a) shows the switching frequency and the frequency modulation signal 294; the highest frequency is limited at the voltage V1 or less and the lowest frequency is limited at V2 or more. (b) shows that the slice control signal 287 changes in the range of the voltage V1 or less. (c) and (d) show the on duties of first and second semiconductor switching elements 203 and 204 changing upon reception of the slice control signal 287 as described later.

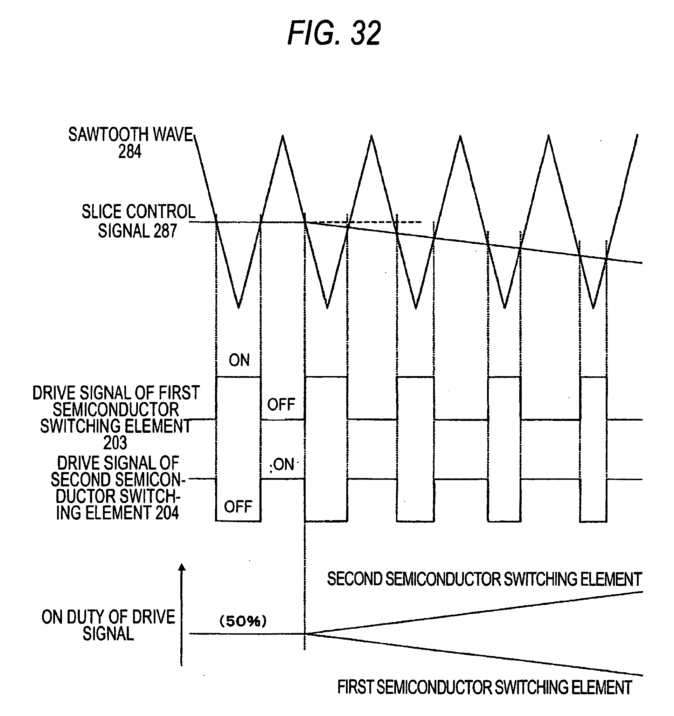

FIG. 32 visualizes the duty changes in FIG. 31 (c) and (d); following change in the slice control signal 287, the on duties of the first and second semiconductor switching elements 203 and 204 derived through a comparator 282 from the signal and a sawtooth wave 284 change.

Since the slice control signal 287 does not change either in a time period during which a frequency limitation is not imposed by the first limitation circuit 295 mentioned above, the on duty is kept in the proximity of 50%; the high-frequency power is lowered by lowering the on duty in the range in which the frequency limitation is imposed, namely, the range in which the power control based on frequency modulation does not function for complementing.

To complete the complementing, the change start point of the slice control signal 287 relative to the potential of the switching frequency control signal 292 may include above-mentioned V1 at which the power control based on frequency modulation does not function, and is not limited to V1.

Although a reference potential newly becomes necessary, if change is made from a potential higher than V1, the percentage of high switching frequencies decreases and thus the switching loss of the semiconductor switching element can be lightened.

### (Embodiment 21)

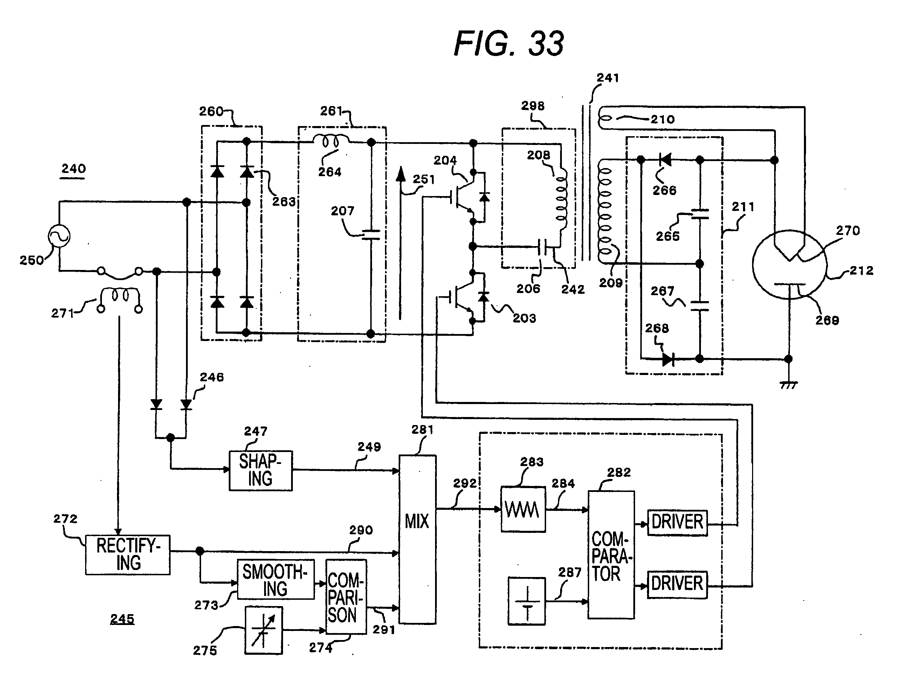

Embodiment 21 of the invention relates to a resonance circuit; a resonance circuit 298 is provided by eliminating a first capacitor 205 from a resonance circuit 236 made up of the first capacitor 205, a second capacitor 206, and a primary winding 208 of a transformer 241, as shown in a configuration diagram of FIG. 33.

Also in the embodiment, as in the embodiment described above, input current waveform information 290 or input voltage waveform information 249, whichever is larger, is selected and the selected information is converted into a switching frequency control signal and the switching frequency of a semiconductor switching element of an inverter is modulated, whereby it is made possible to suppress a power supply harmonic current.

### (Embodiment 22)

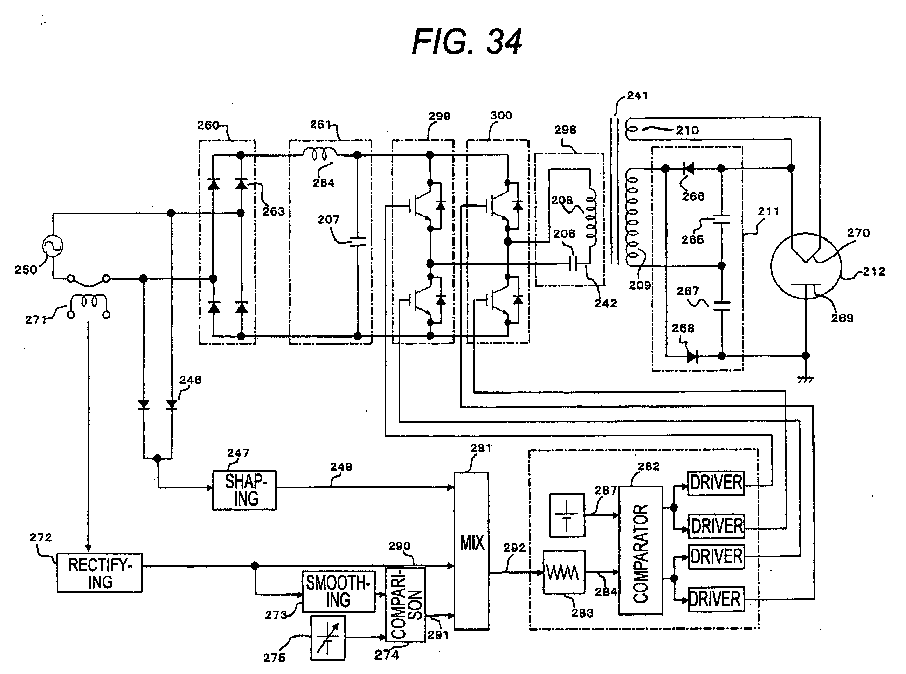

Embodiment 22 of the invention relates to the configuration of an inverter; first and second series circuits 299 and 300 each made up of two semiconductor switching elements are connected in parallel to a DC power supply provided by rectifying a commercial power supply and a resonance circuit 298 wherein a primary winding 208 of a transformer 241 and a second capacitor 206 are connected has one end connected to the midpoint of one series circuit and an opposite end connected to the midpoint of the other series circuit, as shown in FIG. 34.

Also in the embodiment, as in the embodiment described above, input current waveform information 290 or input voltage waveform information 249, whichever is larger, is selected and the selected information is converted into a switching frequency control signal and the switching frequency of a semiconductor switching element of an inverter is modulated, whereby it is made possible to suppress a power supply harmonic current.

### (Embodiment 23)

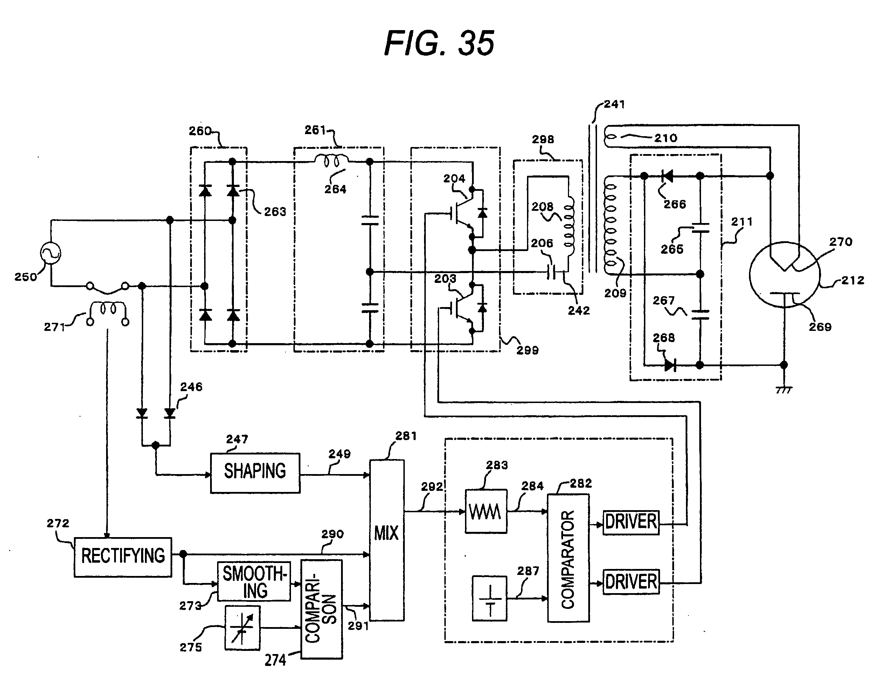

Embodiment 23 of the invention relates to the configuration of an inverter; a first series circuit 299 made up of two semiconductor switching elements is connected in parallel to a DC power supply provided by rectifying a commercial power supply and a resonance circuit 298 wherein a primary winding 208 of a transformer 241 and a second capacitor 206 are connected has one end connected to the midpoint of the first series circuit 299 and an opposite end connected to one end of the DC power supply in an AC equivalent circuit, as shown in FIG. 35.

Also in the embodiment, as in the embodiment described above, input current waveform information 290 or input voltage waveform information 249, whichever is larger, is selected and the selected information is converted into a switching frequency control signal and the switching frequency of a semiconductor switching element of an inverter is modulated, whereby it is made possible to suppress a power supply harmonic current.

### (Embodiment 24)

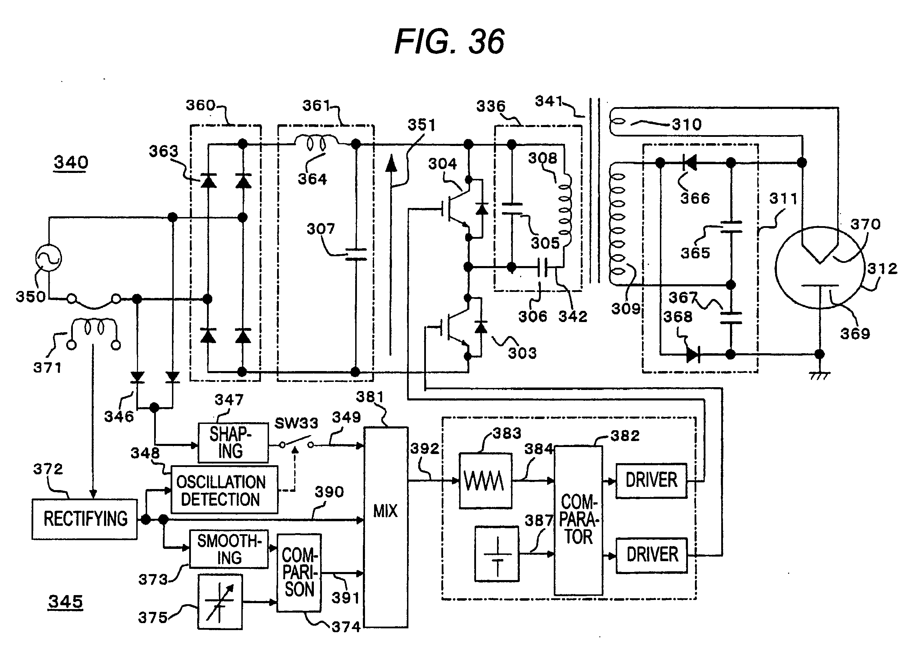

FIG. 36 is a block diagram to describe a high-frequency heating apparatus according to embodiment 24 of the invention. In FIG. 36, the high-frequency heating apparatus is made up of an inverter 340, a controller 345 for controlling first and second semiconductor switching elements 303 and 304 of the inverter, and a magnetron 312. The inverter 340 contains an AC power supply 350, a diode bridge type rectifier 360, a smoothing circuit 361, a resonance circuit 336, the first and second semiconductor switching elements 303 and 304, and a voltage-doubling rectifier 311.

An AC voltage of the AC power supply 350 is rectified in the diode bridge type rectifier 360 made up of four diodes 363 and is converted into a DC power supply 351 through the smoothing circuit 361 made up of an inductor 364 and a third capacitor 307. Then, it is converted into a high-frequency AC by the resonance circuit 336 made up of a first capacitor 305, a second capacitor 306, and a primary winding 308 of a transformer 341 and the first and second semiconductor switching elements 303 and 304, and a high frequency high voltage is induced in a secondary winding 309 of the transformer through the transformer 341.

The high frequency high voltage is induced in the secondary winding 309 is applied to between an anode 369 and a cathode 370 of the magnetron 312 through the voltage-doubling rectifier 311 made up of a capacitor 365, a diode 366, a capacitor 367, and a diode 368. The transformer 341 also includes a tertiary winding 310 for heating the heater (cathode) 370 of the magnetron 312. The inverter 340 has been described.

Next, the controller 345 for controlling the first and second semiconductor switching elements 303 and 304 of the inverter 340 will be discussed. To begin with, a current detection section made up of a CT (Current Transformer) 371 provided between the AC power supply 350 and the diode bridge type rectifier 360 is connected to a rectifier 372 and the CT 371 and the rectifier 372 make up an input current detection section for detecting an input current to the inverter. The input current to the inverter is insulated and detected in the CT 371 and output is rectified in the rectifier 372 to generate input current waveform information 390.

A current signal provided by the rectifier 372 is smoothed in the smoothing circuit 373 and a comparator 374 makes a comparison between the current signal and a signal from an output setting section 375 for outputting an output setting signal corresponding to the other heating output setting. To control the magnitude of the power, the comparator 374 makes a comparison between the input current signal smoothed in the smoothing circuit 373 and the setting signal from the output setting section 375. Therefore, an anode current signal of the magnetron 312, a collector current signal of the first, second semiconductor switching element 303, 304 can also be used as an input signal in place of the input current signal smoothed in the smoothing circuit 373. That is, the comparator 374 outputs power control information 391 for controlling so that the output of the input current detection section becomes a predetermined value, but the comparator 374 and the power control information 391 are not indispensable for the invention as described later.

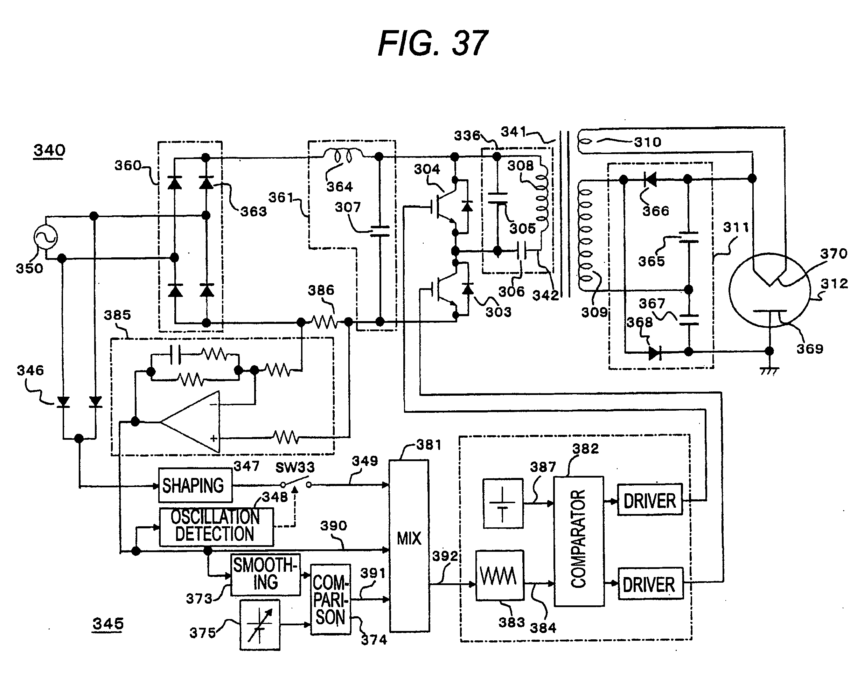

Likewise, as in an example shown in FIG. 37, a current detection section made of a shunt resistor 386 provided between the diode bridge type rectifier 360 and the smoothing circuit 361 and an amplifier 385 for amplifying a voltage across the current detection section may make up an input current detection section and output thereof may be used as the input current waveform information 390. The shunt resistor 386 detects an input current after rectified in a signal direction by the diode bridge type rectifier 360.

On the other hand, in the embodiment, the controller 345 also includes an input voltage detection section made up of a pair of diodes 346 for detecting voltage of the AC power supply 350 and rectifying the voltage and a shaping circuit 347 for shaping the waveform of the rectified voltage to generate input voltage waveform information 349. The controller 345 further includes an oscillation detector 348 implementing an oscillation detection section for detecting whether or not the current signal provided by the rectifier 372 is at a predetermined level and whether or not the magnetron is oscillated. The oscillation detector 348 detects the magnetron starting to oscillate according to the level of the current signal and classifies the state before the detection into a non-oscillation state and the state after the detection into an oscillation state with the point in time as the boundary. If the state is determined the non-oscillation, the oscillation detector 348 turns on a changeover switch SW33 placed between the shaping circuit 347 and a mixer 381. In other words, the changeover switch SW33 causes the input voltage detection section to output the input voltage waveform information 349 in the time period until the oscillation detector 348 detects oscillation of the magnetron. It is to be noted that although the magnetron repeats oscillation and non-oscillation conforming to the cycle of the commercial power supply still after starting oscillation, turning on the changeover switch SW33 according to the non-oscillation mentioned here, namely, the non-oscillation after the oscillation start does not relate to the invention.

In the embodiment, a mixer 381 mixes and filters the input current waveform information 390 and the power control information 391 from the comparator 374 and also the input voltage waveform information 349 (when the SW33 is on) and outputs a switching frequency control signal 392. A sawtooth wave 384 output by a sawtooth wave generator 383 is frequency-modulated by the switching frequency control signal 392.

A comparator 382 makes a comparison between the sawtooth wave 384 and a slice control signal 387 described later, converts into a square wave, and feeds the provided square wave to a gate of the first, second semiconductor switching element 303, 304 through a driver. In this case, the sawtooth wave from the sawtooth wave generator 383 frequency-modulated by the switching frequency control signal 392 is compared by the comparator 382 and turning on/off control of the semiconductor switching element of the inverter is performed for simplifying the input current waveform information detection system. Particularly, in the embodiment, the simplified configuration wherein the input current waveform information 390 is directly input to the mixer 381 is adopted.

The portion for generating a drive signal of the first, second semiconductor switching element 303, 304 from the switching frequency control signal 392 may be configured as a conversion section for converting the switching frequency control signal 392 into a drive signal of the semiconductor switching element of the inverter so that the switching frequency becomes high in a part where the input current from the AC power supply 350 is large and the switching frequency becomes low in a part where the input current is small, and the embodiment is not limited to the configuration.

Particularly, in the invention, the conversion section converts the input current waveform information 390 and the input voltage waveform information 349 output in the time period until oscillation of the magnetron 312 is detected into the drive signal of the semiconductor switching element 303, 304 of the inverter

To control turning on/off the semiconductor switching element 303, 304 relative to the input current waveform information 390, it is converted at a polarity to raise the switching frequency when the input current is large and to lower the switching frequency when the input current is small. Therefore, to make such a waveform, the input current waveform information is subjected to inversion processing in the mixer 381 for use.

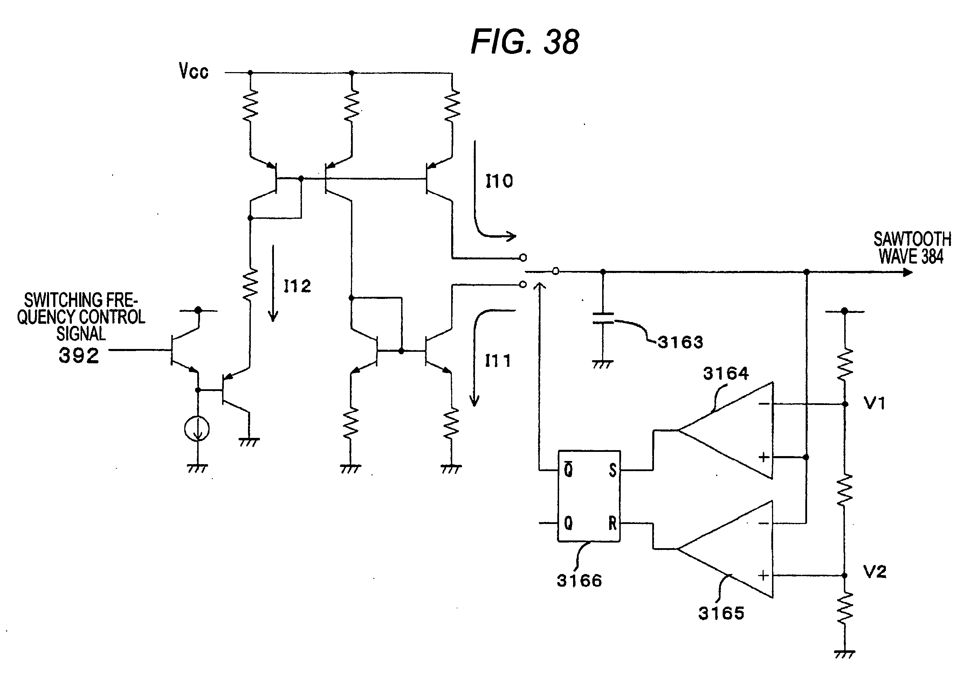

FIG. 38 is a detailed circuit diagram of the sawtooth wave (carrier wave) generator 383. Outputs of comparators 3164 and 3165 are input to an S terminal and an R terminal of an SR flip-flop 3166. Charge and discharge of a capacitor 3163 are switched according to the output polarity of a non-Q terminal of the SR flip-flop 3166; when the terminal is high, the capacitor 3163 is charged in a current I10 and when the terminal is low, the capacitor 3163 is discharged in a current I11. When the potential of the capacitor 3163 exceeds V1, the non-Q terminal of the SR flip-flop 3166 is set to low upon reception of output high of the comparator 3164; when the potential of the capacitor 3163 falls below V2, the non-Q terminal is reset to high upon reception of output high of the comparator 3165.

According to the configuration, the potential of the capacitor 3163 becomes like a sawtooth wave (triangular wave) and the signal is transported to the comparator 382.

The charge and discharge currents I10 and I11 of the capacitor 3163 are determined as a current I12 resulting from dividing the potential difference between the voltage of the switching frequency control signal 392 and Vcc by a resistance value is reflected, and the gradient of the triangular wave changes with the magnitude of the current. Therefore, the switching frequency is determined by the magnitude of 110, I11 on which the switching frequency control signal is reflected.

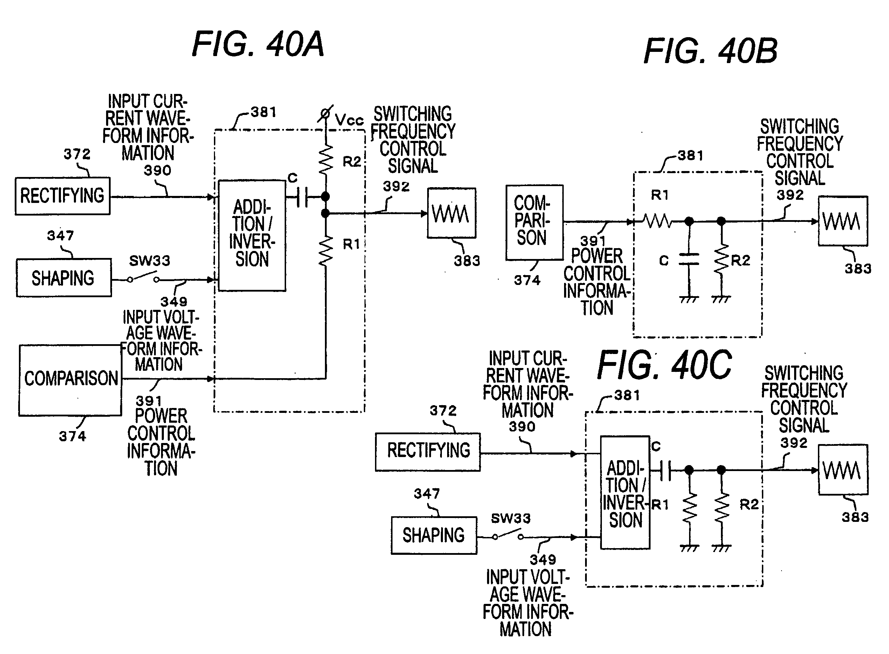

FIG. 40A shows an example of the mixer 381. The mixer 381 has three input terminals; the power control information 391 is added to one terminal, the input current waveform information 390 is added to another terminal, and the input voltage waveform information 349 is added through the SW33 to another terminal and they are mixed in an internal circuit as shown in the figure. The input current waveform information 390 is input to the mixer 381 and is inverted in an inversion circuit to generate a correction signal.

As in FIG. 40B, a high-cut filter is formed between outputs from the power control information 391 as shown in an AC equivalent circuit in the mixer 381. Accordingly, a high-frequency component contained in power control as an obstacle to the input current waveform information 390 to shape the input current waveform is cut through the filter.

As in FIG. 40C, a low-cut filter is formed between outputs from the input current waveform information 390 and the input voltage waveform information 349 as shown in an AC equivalent circuit in the mixer 381. Therefore, the power control information 391 is converted into a DC component of output of the mixer 381 and the input current waveform information 390 and the input voltage waveform information 349 are converted into an AC component.

In embodiment 24, as described above, the input current waveform information 390 or the signal provided by adding the input voltage waveform information 349 to the input current waveform information 390 at the non-oscillation time of the magnetron is converted into the switching frequency of the semiconductor switching elements 303 and 304 of the inverter for use.

The inverter generally used with a microwave oven is known; a commercial AC power supply of 50 to 60 cycles is rectified to a direct current, the provided DC power supply is converted into a high frequency of about 20 to 50 KHz, for example, by the inverter, and a high voltage provided by boosting the provided high frequency by a transformer and further rectifying it in a voltage-doubling rectifier is applied to a magnetron.

There are two types of inverter systems, for example, of an on time modulation system using a so-called single-ended voltage resonant-type circuit for using one semiconductor switching element for switching and changing the on time of a switching pulse for changing output, often used in a region where the commercial power supply is 100 V and a (half) bridge type voltage resonant-type circuit system for alternately turning on two semiconductor switching elements 303 and 304 connected in series and controlling the switching frequency for changing output, as shown in FIG. 36 of the invention. The bridge type voltage resonant-type circuit system is a system capable of adopting a simple configuration and control in such a manner that if the switching frequency is raised, output lowers and if the switching frequency is lowered, output increases.

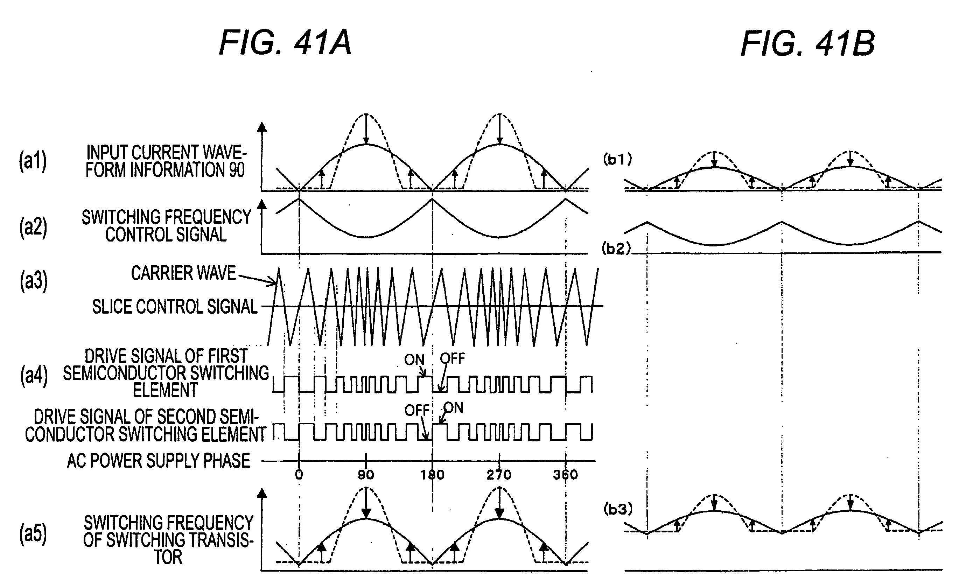

FIG. 41 is a drawing to describe waveforms provided according to embodiment 24 of the invention. This example is applied when the magnetron oscillates normally, namely, shows the state at the ordinary running time. At this time, the oscillation detector 348 determines that the magnetron is under ordinary running according to the current value provided by the rectifier 372, and turns off the SW33. Therefore, at the running time, the diode 346 and the shaping circuit 347 do not operate and input voltage waveform information 349 is not generated.

In FIGs. 41A and 41B, FIG. 41A shows the case where input current is large and FIG. 41B shows the case where input current is small. The solid line represents the signal shape after correction by the power control unit of the invention mainly used in the description to follow, and the dashed line represents the signal shape of instantaneously fluctuating output before correction from the AC power supply 350, as described later.

In FIG. 41A, the waveform of the input current waveform information in (a1) from the top is the input current waveform information 390 output by the rectifier 372 in FIG. 36 and output by the amplifier 385 in FIG. 37, and the dotted line shows a waveform before correction, caused by the nonlinear load characteristic of the magnetron. (a2) of FIG. 41A shows the switching frequency control signal 392 of correction output of the mixer 381. The switching frequency control signal 392 has the size changed following the input current waveform information 390 and the power control information 391 and further is output as an inversion waveform of (a1) to complement and correct the distortion component of the input current.
(a3) of FIG. 41A shows the sawtooth wave (carrier wave) frequency-modulated according to the switching frequency control signal shown in (a2) and slice control signal, and drive signals of on and off signals of the first and second semiconductor switching elements 303 and 304 shown in (a4) are generated. The two drive signals have on and off complementary relationship to each other.

The drive signals of the first and second semiconductor switching elements provided by inputting the sawtooth wave 384 (carrier wave) frequency-modulated and the slice control signal 387 to the comparator 382 and making a comparison therebetween by the comparator 382 undergo frequency modulation like the sawtooth wave as in (a4) of FIG. 41A.

That is, as shown in the figure, the frequency of the sawtooth wave is low in a portion where the amplitude value of the switching frequency control signal is large (in the proximity of 0 degrees, 180 degrees; the input current is small) and thus is corrected to the polarity to raise the input current from the resonance characteristic described above. Since the frequency of the sawtooth wave is high in a portion where the amplitude value of the switching frequency control signal is small (in the proximity of 90 degrees, 270 degrees; the input current is large), a pulse string of a frequency as in (a4) to correct to the polarity to lower the input current from the resonance characteristic described above is output as the drive signal of the semiconductor switching element. That is, since the switching frequency control signal (a2) is inverted as a correction waveform relative to the input current waveform information (a1), conversion is executed to inversion output opposite to (a1) in such a manner that the frequency is raised like the pulse string signal in (a4) in a portion where input of the input current waveform information (a1) is large (in the proximity of 90 degrees, 270 degrees) and the frequency is lowered in a portion where input of the input current waveform information (a1) is small (in the proximity of zero cross at 0 degrees, 180 degrees). Accordingly, the correction effect of the input waveform is provided; this effect is large particularly in the proximity of zero cross.

The waveform in (a5) at the bottom stage shows the switching frequency of the first, second semiconductor switching element 303, 304. A high-frequency sawtooth wave is frequency-modulated according to the switching frequency control signal (a2) of the correction waveform provided by inverting the input current waveform information shown in (a1) and a comparison is made between the frequency-modulated sawtooth wave and the slice control signal, whereby inverter conversion into a high frequency of 20 KHz to 50 KHz is executed and the drive signal in (a4) is generated. A semiconductor switching element 303, 304 is turned on and off in response to the drive signal (a4) and high-frequency power is input to the primary side of the transformer and a boosted high voltage is generated on the secondary side of the transformer. In (a5), to visualize how the frequency of each pulse of the on and off signals (a4) changes within the period of the commercial power supply, frequency information is plotted on the Y axis and the points are connected.

The description given above shows the same signals as in the state in which the input current from the AC power supply 350 is provided in an identical state (for example, sine wave). However, generally the input current from the AC power supply 350 deviates from the ideal sine wave and fluctuates from the instantaneous viewpoint. The dashed line signal indicates such an actual state. Generally, the actual signal deviates from the state of the ideal signal and instantaneous fluctuation occurs from the viewpoint of an instantaneous time period of a half period of the commercial power supply (0 to 180 degrees) as indicated by the dashed line. Such a signal shape occurs due to the boosting action of a transformer and a voltage-doubler circuit, the smoothing characteristic of a voltage-doubler circuit, the magnetron characteristic that an anode current flows only when the voltage is ebm or more. That is, it can be the that the fluctuation is indispensable in the inverter for the magnetron.

In the power control unit of the invention, the input current detection section provides the input current waveform information indicated by the dashed line on which the fluctuation state of the input current is reflected (see FIG. 41A (a1)) and the later control is performed based on the input current waveform information. This control is performed so that the instantaneous fluctuation of the input current waveform information occurring in a time period such as a half period, for example, is suppressed so as to approach an ideal signal as indicated by the arrow. This suppression is accomplished by adjusting the drive signal of the first, second semiconductor switching element 303, 304. Specifically, if the input current waveform information 390 is smaller than the ideal signal, the above-described frequency becomes lower and a correction is made for increasing the input current. If the input current waveform information is larger than the ideal signal, the above-described frequency becomes higher and a correction is made for decreasing the input current. Also in the instantaneous fluctuation in a shorter time period, the fluctuating waveform is reflected on frequency information and a similar correction to that described above is made.

A correction as indicated by the arrow is made to the input current waveform information 390 by the instantaneous fluctuation suppression action of the first, second semiconductor switching element 303, 304 to which the drive signal is given, and input close to the ideal wave is given to the magnetron at all times. The signals in (a2) and (a3) after the correction are not shown in the figure. The ideal signal is a virtual signal and the signal becomes a sine wave.

That is, in a short time period such as a half period of the commercial power supply, the sum total of instantaneous error or correction amount between the ideal signal waveform and the input current waveform information is roughly zero because the magnitude of the input current is controlled (power control) by another means. The portion wherein the input current does not flow due to a nonlinear load is corrected in the direction in which the input current is allowed to flow and thus the portion wherein the input current is large is decreased and the above-mentioned roughly zero is accomplished. This means that a correction is made so that the current waveform of even a nonlinear load can be assumed to be a linear load and since the commercial power supply voltage waveform is a sine wave, the ideal waveform becomes a sine wave like the current waveform flowing into a linear load.

Thus, to cancel out a change in the input current waveform and excess and deficiency relative to the ideal waveform, the input current is corrected at the opposite polarity to the waveform. Therefore, a rapid current change in the commercial power supply period caused by a nonlinear load of the magnetron, namely, distortion is canceled out in the control loop and input current waveform shaping is performed.

Further, since the control loop thus operates according to the input current waveform information following the instantaneous value of the input current, even if there are variations in the magnetron type or the magnetron characteristic or even if ebm (anode-to-cathode voltage) fluctuation caused by the magnetron anode temperature or the load in the microwave oven or power supply voltage fluctuation occurs, input current waveform shaping can be performed independently of the effects.

Particularly, in the invention, the semiconductor switching element is controlled based on instantaneously fluctuating input current waveform information. Instantaneous fluctuation of the input current is input directly to the mixer 381 in the form of the input current waveform information and is also reflected on the switching frequency control signal 392, so that the drive signal of the semiconductor switching element excellent in the tracking performance for suppression of input current waveform distortion and instantaneous fluctuation can be provided.

The subject of the invention is to convert the input current waveform information having the information for suppressing distortion of the input current waveform and instantaneous fluctuation into the drive signal of the semiconductor switching element of the inverter. The power control information 391 is not indispensable for accomplishing the purpose, because the power control information 391 is information to control power fluctuation in a long time period, namely, in a period longer than the commercial power supply period or so and is not information for correcting instantaneous fluctuation in a short time period such as a half period of AC that the invention aims at. Therefore, adoption of the mixer 381, the comparator 382, and the sawtooth wave generator 383 is also only one example of the embodiment and an equivalent to the conversion section for performing the conversion described above may exist between the input current detection section and the semiconductor switching element.

To use the power control information, it is not indispensable either to input the power control information 391 for controlling so that the output of the input current detection section becomes a predetermined value into the mixer 381 as in the embodiment described above. That is, in the embodiment described above, the power control information 391 originates from the current detection section 371 for detecting the input current and the rectifier 372 (in FIG. 36) or the shunt resistor 386 and the amplifier 385 (in FIG. 37), but information for controlling so that the current or the voltage at an arbitrary point of the inverter 340 becomes a predetermined value can be input to the mixer 381 as the power control information. For example, resonance circuit voltage information 342 of the resonance circuit 362 as shown in FIGs. 36 and 37 can be used intact as the power control information or information provided after undergoing smoothing by the smoothing circuit 373 and comparison with the output setting signal in the comparator 374 can be used as the power control information.

Next, FIG. 41 B shows the case where the input current is small relative to FIG. 41A by comparison; (b1) shows the input current waveform information when input is small and corresponds to (a1) of FIG. 41A, (b2) shows the switching frequency control signal and corresponds to (a2) of FIG. 41A, and (b3) shows the switching frequency of the semiconductor switching element and corresponds to (a5) of FIG. 41A. Although not shown in the figure, the same processing is also performed as comparison processing of sawtooth wave shown in (a3) and (a4) of FIG. 41A, of course.

The description based on FIGs 41A and 41B given above concerns the ordinary running time of the magnetron. Next, the operation at the starting time of the magnetron will be discussed. The starting time refers to the state of the preparation stage before the magnetron starts to oscillate although a voltage is applied to the magnetron.

At the magnetron starting time (corresponding to the non-oscillation time), unlike the ordinary running time, the impedance between the anode and the cathode of the magnetron becomes equal to infinity. Since the difference between the ordinary running time and the starting time has the effect on the state of the input current through the transformer 341, the oscillation detector 348 can determine whether or not the magnetron is at the starting time according to the current value provided by the rectifier 372. If the oscillation detector 348 determines that the magnetron is at the starting time, it turns off the SW33. Therefore, at the starting time, the diode 346 and the shaping circuit 347 operate and input voltage waveform information 349 is generated.

By the way, in the invention, the voltage from the commercial AC power supply 350 is multiplied by power control based on the switching frequency control system, namely, the commercial AC power supply voltage is amplitude-modulated under the power control based on the switching frequency control system and is applied to the primary side of the transformer 341. The peak value of the applied voltage to the primary side is associated with the applied voltage to the magnetron 312 and the area defined from the applied voltage and the elapsed time is associated with the supplied power to the heater.

In the invention, at the starting time at which the input current waveform information 390 is small, the input voltage waveform information 349 is input to the mixer 381 through the changeover switch SW33. That is, the mode in which the input voltage makes up for a shortage of the input current as a reference signal particularly at the starting time is adopted.

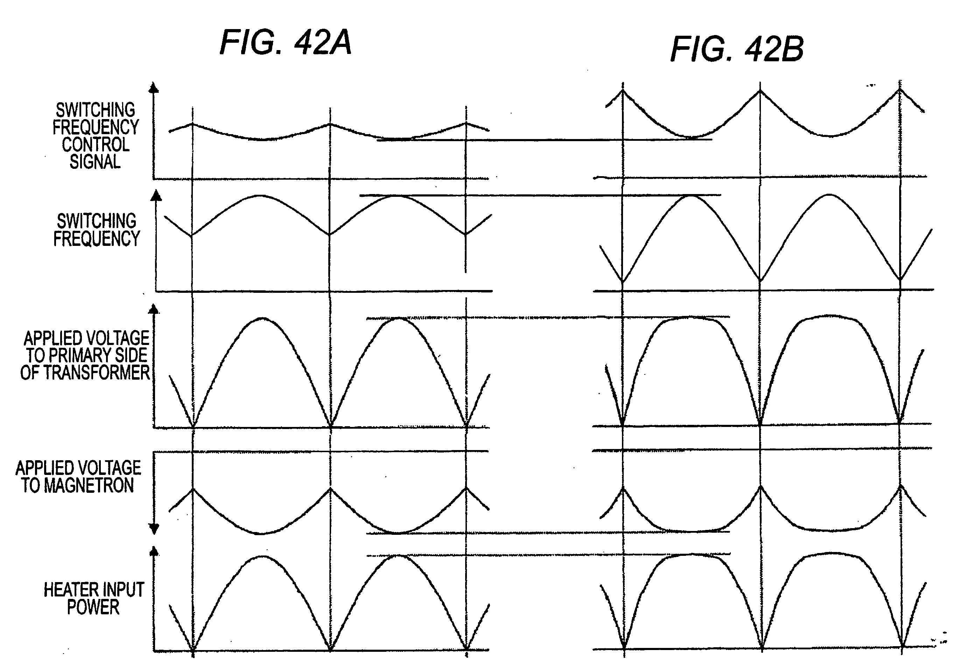

FIG. 42 is a drawing to describe by comparison the operation when the input voltage waveform information is added and the operation when the input voltage waveform information is not added; FIG. 42A shows the waveforms of the switching frequency control signal, the switching frequency, the applied voltage to the primary side of the transformer, the applied voltage to the magnetron, and the heater input power in order from the top when the input voltage waveform information is not added.

FIG. 42B describes the operation when the input voltage waveform information is added (at the starting time). Both FIGs. 42A and 42B show the case where the peak value of the applied voltage to the primary side of the transformer is limited according to the configuration of embodiment 30 described later. Further, in FIG. 42B, the peaks of the applied voltage to the primary side of the transformer and the applied voltage to the magnetron are suppressed by the action of the added input voltage waveform information and the waveforms show trapezoids. Like FIG. 41A, FIG. 42B also shows the waveforms of the switching frequency control signal, the switching frequency, the applied voltage to the primary side of the transformer, the applied voltage to the magnetron, and the heater input power in order from the top.

As shown in FIGs. 42A and 42B, the switching frequency of the semiconductor switching element is low in the vicinity of phases of 0 degrees and 180 degrees, and thus the amplification widths of the applied voltage to the primary side of the transformer and the applied voltage to the magnetron become comparatively large. On the other hand, since the switching frequency of the semiconductor switching element is high in the vicinity of phase 90 degrees, 270 degrees, the amplitude width is comparatively suppressed and the whole figure of the waveform becomes a trapezoid and a shape with a peak suppressed is shown from the relative relationship with the amplitude width at phases of 0 degrees and 180 degrees.

Making a comparison between the applied voltage to the magnetron in FIG. 42A and that in FIG. 42B, if the applied voltage to the magnetron is the same, the waveform area indicating the heater input power in FIG. 42B is larger. That is, the heater input power in FIG. 42B grows as compared with that in FIG. 42A, so that the heater is heated in a short time and it is made possible to shorten the start time.

There is a configuration of the oscillation detector in this case using the characteristic that when the magnetron starts to oscillate, the input current increases and comparing the output of the input current detection section with the oscillation detection threshold level by a comparator and latching the output.

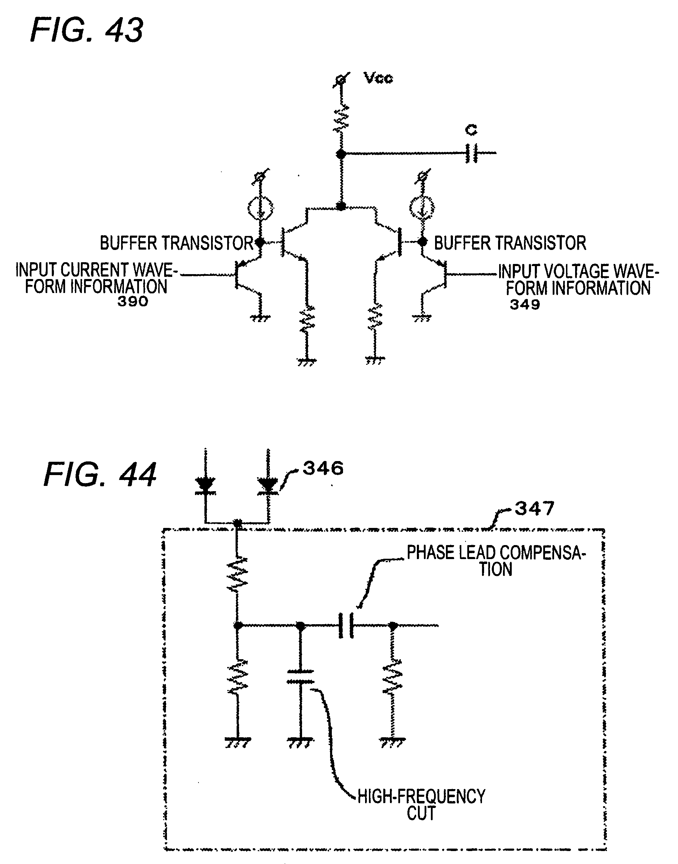

FIG. 43 is a drawing to show an example of an addition and inversion circuit for adding the input current waveform information and the input voltage waveform information, used in embodiment 24 of the invention. This addition and inversion circuit is provided in the mixer 381 as shown in FIGs. 40A to 40C,45A to 45C, and 46.

The input current waveform information 390 and the input voltage waveform information 349 are input to buffer transistors and outputs thereof are input to two transistors having a common collector resistor. The buffer transistors are provided for preventing interference of the input current waveform information 390 and the input voltage waveform information 349. The current (emitter current) responsive to the magnitude of the input signal flows into emitter resistors of the two transistors, and a voltage drop occurs in the common collector resistor in response to the adding value of the emitter currents.

When the emitter voltage becomes high, the above-mentioned current increases and the voltage drop increases. That is, the collector voltage lowers and thus has the polarity inverted relative to the input signal. The signal conversion coefficient also changes according to the resistance value ratio between the collector resistor and the emitter resistor. From the viewpoint of interference with the power control signal, it is more effective to execute impedance conversion of the signal of the common collector resistor through a buffer and then connect the signal to a capacitor. Thus, the circuit adds the two signals and inverts and outputs the resultant signal.

### (Embodiment 25)

Embodiment 25 of the invention relates to the configuration of a controller (conversion section) and has the configuration wherein input current waveform information and at the non-oscillation time of a magnetron, a signal provided by further adding input voltage waveform information and power control information from a comparator 74 are mixed and filtered and converted into on and off drive signals of semiconductor switching element 303, 304 of an inverter for use.

According to the configuration, it is not necessary to process commercial power supply voltage waveform information conforming to the nonlinear load characteristic of a magnetron, a frequency modulation signal generator is simplified, and simplification and miniaturization can be accomplished. Further, according to the simple configuration, input voltage waveform information 349 is added to input current waveform information 390 and the heater power at the starting time is increased for shortening the start time and safety measures for preventing an excessive voltage from being applied to between an anode 369 and a cathode 370 of the magnetron are also added, so that the reliability of the product improves.

The configuration as described above is adopted, whereby a control loop using the input current waveform information 390 is specialized for waveform shaping of input current and a control loop using the power control information 391 is specialized for power control and they do not interfere with each other in the mixer 381 for holding the conversion efficiency.

### (Embodiment 26)

Embodiment 26 relates to an input current detection section. As shown in FIG. 36, the input current detection section detects the input current of the inverter with a CT 371 and performs rectification output from a rectifier 372. According to the configuration, the input current is detected using the CT and thus a large signal can be taken out while insulating property is maintained, so that the effect of input current waveform shaping is large and the quality of the input current is improved.

In the example shown in FIG. 37, the input current detection section detects the unidirectional current after rectified in a rectifier 360 of the inverter through a shunt resistor 386 placed between the rectifier 360 and a smoothing circuit 361, amplifies the voltage occurring across the shunt resistor 386 by an amplifier (amplifier) 385, and outputs the voltage. The configuration has the advantage that the input current detection section can be configured at a low cost because the detection section need not be insulated from electronic circuitry and rectification need not be performed either.

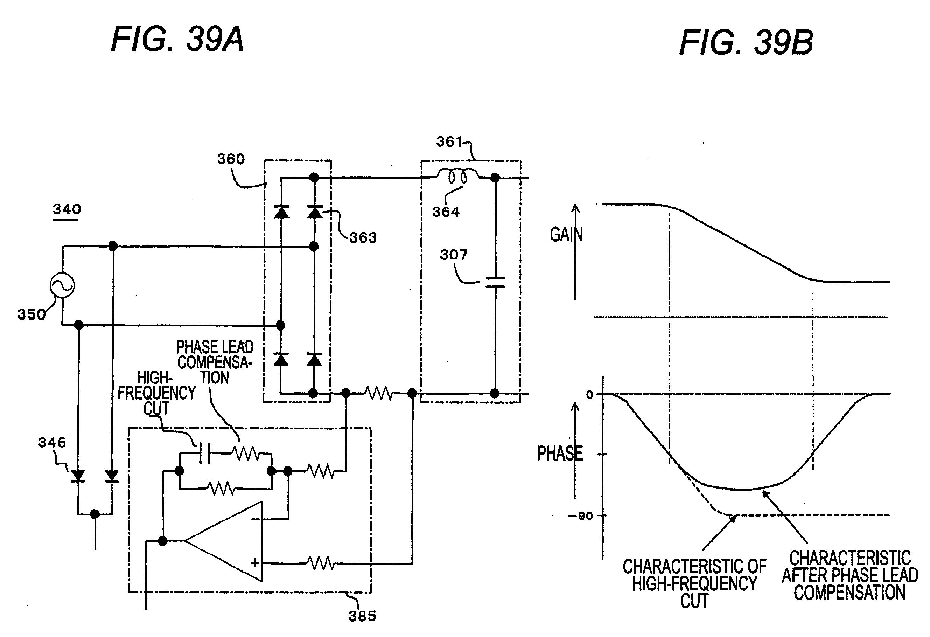

The amplifier 385 of the input current detection section shown in FIG. 37 attenuates the high frequency spectral region of the commercial power supply and the high frequency portion of a high-frequency switching frequency for preventing unnecessary resonance. Specifically, as shown in the detailed diagram of the input current detection section of FIGs. 39A and 39B, the amplifier 385 attenuates the high frequency spectral region of the commercial power supply and the high frequency portion of a high-frequency switching frequency using a high-cut capacitor, as in FIG. 39A.

Further, for a phase delay occurring as shown in the phase characteristic drawing of FIG. 39B by inserting the high-cut capacitor of the amplifier 385, a resistor is inserted in series with the capacitor and phase lead compensation is added for preventing a transient time delay to ensure the stability of a control loop. Also in the rectifier 372 in FIG. 36, the configuration to attenuate the high frequency portion and the configuration to add phase lead compensation for preventing a transient time delay can be used. A similar configuration can also be used in a shaping circuit 347 of an input voltage waveform information creation section as shown in FIG. 44.

### (Embodiment 27)

Embodiment 27 relates to the mixer 381 shown in FIGs. 36 and 37. The mixer 381 is provided with three input terminals for inputting input current waveform information 390, input voltage waveform information 349, and power control information 391, as shown in FIG. 40A. According to the configuration, heater input power is compensated for and the start time can be shortened.

The input current waveform information 390 and the input voltage waveform information 349 (when SW3 is on) are input to an addition and inversion circuit as shown in FIG. 43 and are added and inverted. The signal after subjected to the processing and the power control information 391 are input to a filter circuit made up of C, R1, and R2 and are filtered and then are output to a sawtooth wave generator as a switching frequency control signal 392. The filter circuit cuts the high-frequency component of the power control output 391 as shown in the equivalent circuit diagram of FIG. 40B. Such a configuration is adopted, whereby the high-frequency component hindering input current waveform shaping is cut, so that the quality of the input current waveform improves. On the other hand, a low-cut filter is formed for the input current waveform information 390 and the input voltage waveform information 349 to preserve the waveform, as shown in the equivalent circuit diagram of FIG. 40C.

### (Embodiment 28)

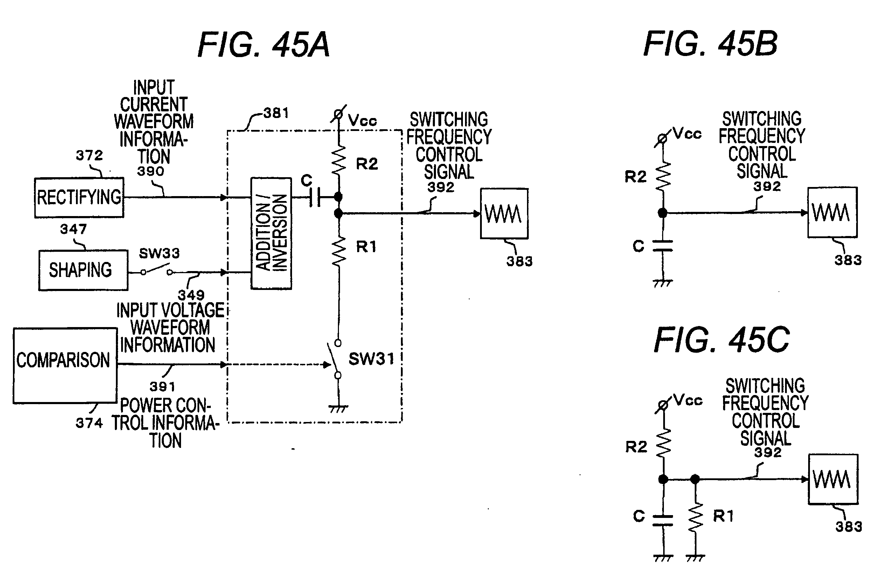

Embodiment 28 of the invention controls the characteristic of a mixer for combining input current waveform information of an input current detection section, input voltage waveform information of an input voltage detection section, and power control information to control so that output of the input current detection section becomes a predetermined value by providing a difference between the input current increase control time and decrease control time, as shown in a configuration diagram of the mixer concerning embodiment 28 in FIGs. 45A to 45C.

In the configuration diagram of FIG. 45A, an SW1 is turned on/off according to power control information 391 for lowering/raising a switching frequency control signal 392. At the input current increase control time, the SW31 is turned off and the switching frequency control signal is gradually raised according to a time constant of C*R2 for lowering the switching frequency of a semiconductor switching element, as shown in an equivalent circuit in FIG. 45B.

At the input current decrease control time, the SW31 is turned on and the switching frequency control signal is rapidly lowered according to a time constant of C*{R1*R2/(R1+R2)} for raising the switching frequency of the semiconductor switching element, as shown in an equivalent circuit in FIG. 45C. That is, the circuit configuration of the mixer 381 is switched between the input current increase control time and the input current decrease control time. Particularly, at the input current increase control time, the time constant is set large and at the input current decrease control time, the time constant is set small.

The difference is thus provided, whereby the control characteristic for moderately responding usually and the control characteristic for decreasing the input current in a prompt response for preventing component destruction if the input current transiently rises for some reason can be realized. Safety of the control characteristic for a nonlinear load of a magnetron can also be ensured.

### (Embodiment 29)

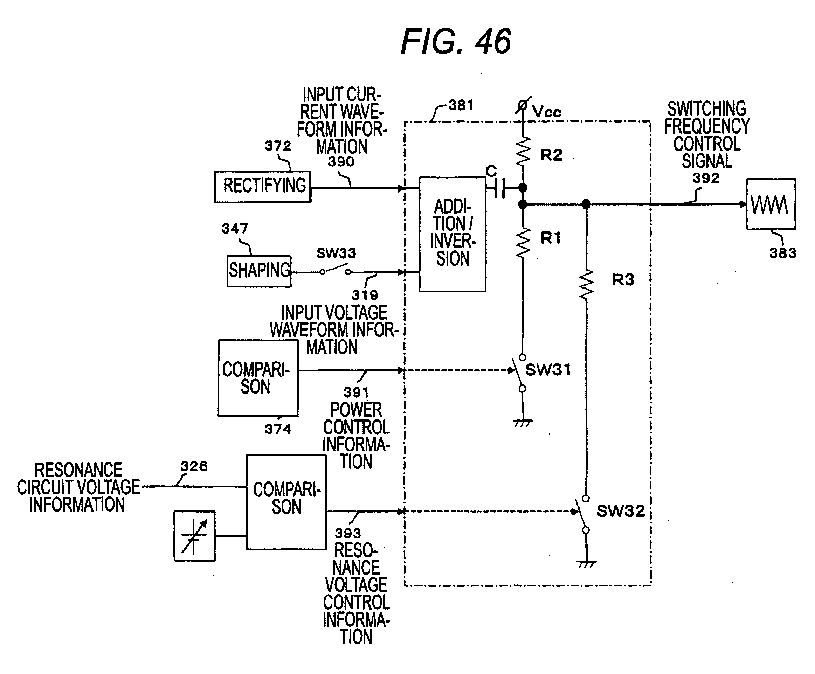

Embodiment 29 of the invention inputs resonance voltage control information 393 for controlling resonance circuit voltage information 326 of a resonance circuit to a predetermined circuit to a mixer 381, as shown in a configuration diagram of the mixer concerning embodiment 29 in FIG. 46.

As shown in FIG. 46, an SW32 is turned on/off according to the resonance voltage control information 393 provided by making a comparison between the resonance voltage of the resonance circuit and a reference value. If the resonance voltage is low, the SW32 is turned off and a switching frequency control signal is gradually raised according to a time constant of C*R2 for lowering the switching frequency of a semiconductor switching element. If the resonance voltage is high, the SW32 is turned on and the switching frequency control signal is rapidly lowered according to a time constant of C*{R2*R3/(R2+R3)} for raising the switching frequency of the semiconductor switching element. That is, the circuit configuration of the mixer 381 is switched in response to the magnitude of the resonance voltage of the resonance circuit. Particularly, if the resonance voltage is low, the time constant increases and if the resonance voltage is high, the time constant decreases.

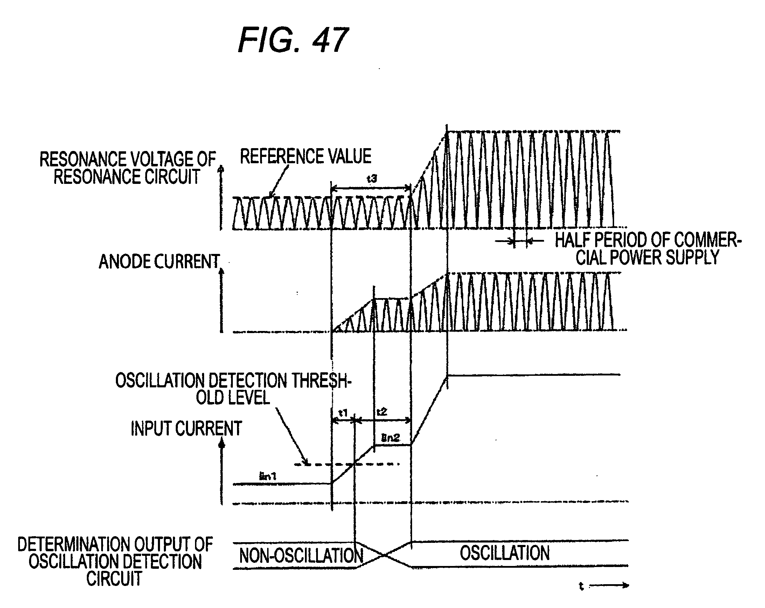

FIG. 47 is a time-series chart relevant to oscillation detection of a magnetron and also shows change in anode current and the resonance voltage of a resonance circuit with change in input current. Before the oscillation start of a magnetron 312, the impedance of the secondary side of a transformer 341 is very large, namely, the impedance between the anode and the cathode of the magnetron is infinite. Therefore, power is scarcely consumed in the secondary side load of the transformer and resonance voltage control information 393 reflecting the resonance voltage of the resonance circuit is controlled (limited) to a predetermined value and thus the input current to the oscillation detector 348 is small (lin1 in FIG. 47).

On the other hand, after the oscillation start of the magnetron 312, the impedance between the anode and the cathode of the magnetron lessens and the impedance of the secondary side of the transformer also lessens. Therefore, the heavy load (magnetron) is driven with the resonance voltage of the resonance circuit controlled (limited) to the predetermined value and thus the input current to the oscillation detector 348 becomes large as compared with that before the oscillation start (lin2 in FIG. 47).

The oscillation detection threshold level of the oscillation detector 348 described above is preset between lin1 and lin2 mentioned above. That is, occurrence of a clear difference in the input current between before the oscillation start and after the oscillation start while the resonance voltage of the resonance circuit is maintained at a given level is adopted as the determination material. In the example shown in the figure, it is assumed that the time required for arriving at the threshold level after starting an increase in the input current to the oscillation detector 348 with an increase in the anode current is t1 and that the time required for the oscillation detector 348 to then determine the oscillation start is t2. At this time, the resonance voltage control of the resonance circuit functions for the time of t3 = t1 + t2 until the oscillation start is determined although the oscillation starts.

This control is effective for preventing an excessive voltage from being applied to a magnetron when the magnetron does not oscillate, namely, the power control does not function. After oscillation of the magnetron starts, preferably the reference value compared with the resonance voltage is set large as compared with that before oscillation of the magnetron starts to invalidate the control and produce no effect on the power control.

### (Embodiment 30)

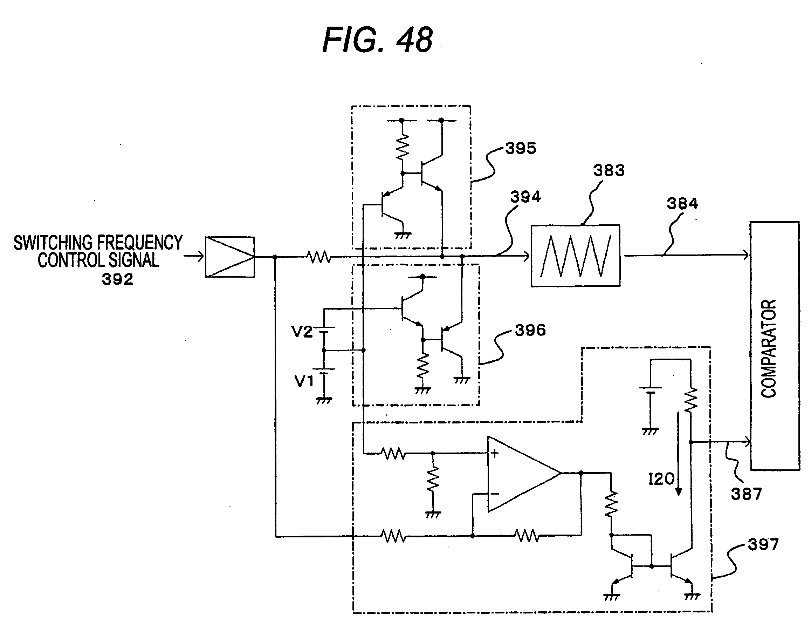

Embodiment 30 of the invention imposes a limitation on a switching frequency, as shown in a configuration diagram of a switching frequency limitation circuit concerning embodiment 30 in FIG. 48.

A frequency modulation signal 394 input to a sawtooth wave generator 383 is created as a switching frequency control signal 392 receives limitations of the lowest potential and the highest potential through a first limitation circuit 395 depending on a fixed voltage V1 and a first limitation circuit 396 depending on a fixed voltage V2.

As the potential limitations, in the former, the highest switching frequency is limited and in the latter, the lowest switching frequency is limited from the relationship between the switching frequency control signal 392 and the switching frequency.

The first limitation circuit 395 limits the highest frequency for preventing a switching loss increase of semiconductor switching elements 303 and 304 when the switching frequency raises.

If the switching frequency approaches a resonance frequency, a resonance circuit 362 abnormally resonates and the semiconductor switching element is destroyed. The second limitation circuit 396 has a function of limiting the lowest frequency for preventing the phenomenon.

### (Embodiment 31)

Embodiment 31 of the invention complements the range in which the highest frequency is limited by a first limitation circuit 395 by power control of on duty control of a semiconductor switching element (transistor), as shown in a configuration diagram of a slice control signal creation circuit concerning embodiment 31 in FIG. 48.

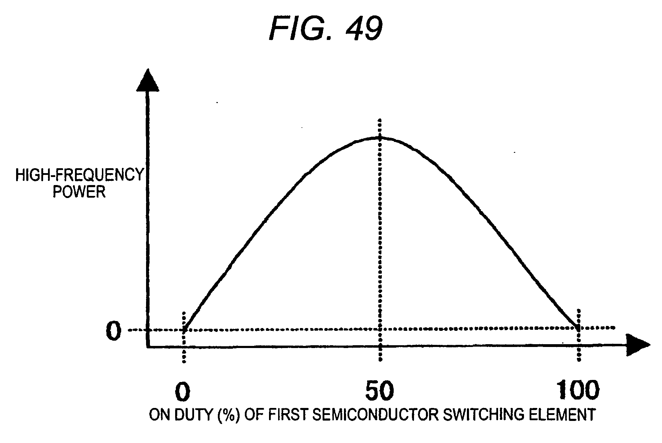

FIG. 49 is a drawing to show the relationship between the on duty of a first semiconductor switching element (transistor) 303 and high-frequency power of a bridge resonant-type inverter. When the on duty is 50%, the high-frequency power becomes a peak and as the on duty falls below or exceeds 50%, the high-frequency power decreases.

The on duty of a second semiconductor switching element and the on duty of the first semiconductor switching element are complementary to each other and therefore 0 and 100 of X axis numeric values in FIG. 49 are replaced in read.

To lessen high-frequency output, namely, to lessen the input current, a switching frequency control signal 392 is changed in a direction for increasing a switching frequency as described above, but this power control does not function in a time period during which a frequency limitation is imposed on a frequency modulation signal 394 by the first limitation circuit 395. Upon reception of the same fixed voltage V1 and switching frequency control signal 392 as the first limitation circuit 395, a slice control signal creation circuit 397 allows a current I20 to flow during the above-mentioned time period so that a slice control signal 387 changes.

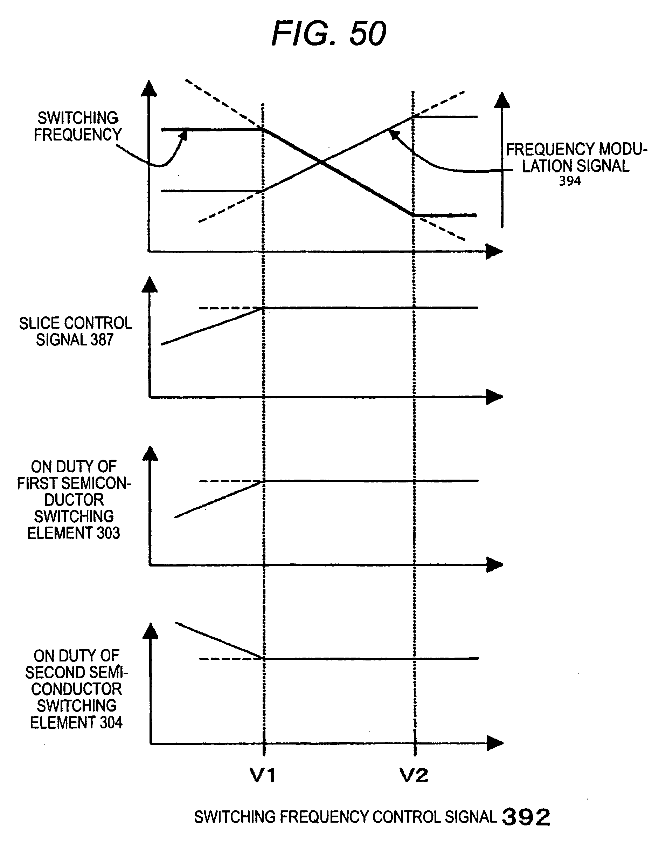

In FIG. 50, the potential of the switching frequency control signal 392 is taken on an X axis and various signals affected by the signal are taken on a Y axis. (a) shows the switching frequency and the frequency modulation signal 394; the highest frequency is limited at the voltage V1 or less and the lowest frequency is limited at V2 or more. (b) shows that the slice control signal 387 changes in the range of the voltage V1 or less. (c) and (d) show the on duties of first and second semiconductor switching elements 303 and 304 changing upon reception of the slice control signal 387 as described later.

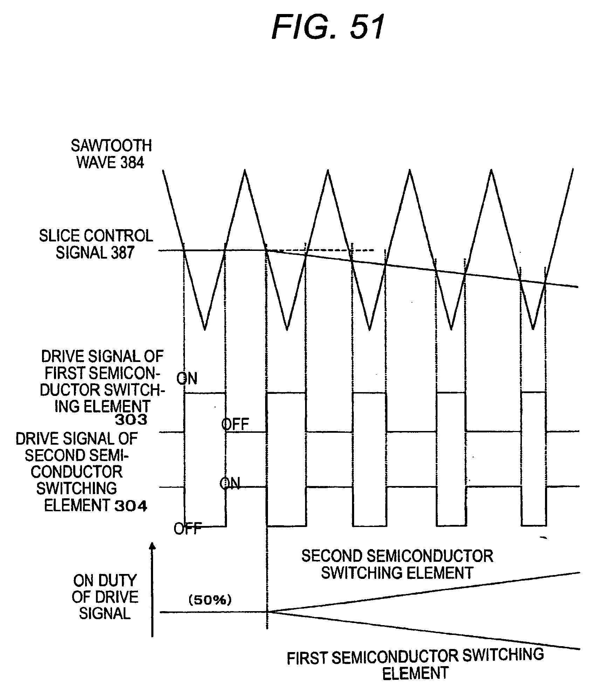

FIG. 51 visualizes the duty changes in FIG. 50 (c) and (d); following change in the slice control signal 387, the on duties of the first and second semiconductor switching elements 303 and 304 derived through a comparator 382 from the signal and a sawtooth wave 384 change.

Since the slice control signal 387 does not change either in a time period during which a frequency limitation is not imposed by the first limitation circuit 395 mentioned above, the on duty is kept in the proximity of 50%; the high-frequency power is lowered by lowering the on duty in the range in which the frequency limitation is imposed, namely, the range in which the power control based on frequency modulation does not function for complementing.

To complete the complementing, the change start point of the slice control signal 387 relative to the potential of the switching frequency control signal 392 may include above-mentioned V1 at which the power control based on frequency modulation does not function, and is not limited to V1.

Although a reference potential newly becomes necessary, if change is made from a potential higher than V1, the percentage of high switching frequencies decreases and thus the switching loss of the semiconductor switching element can be lightened.

### (Embodiment 32)

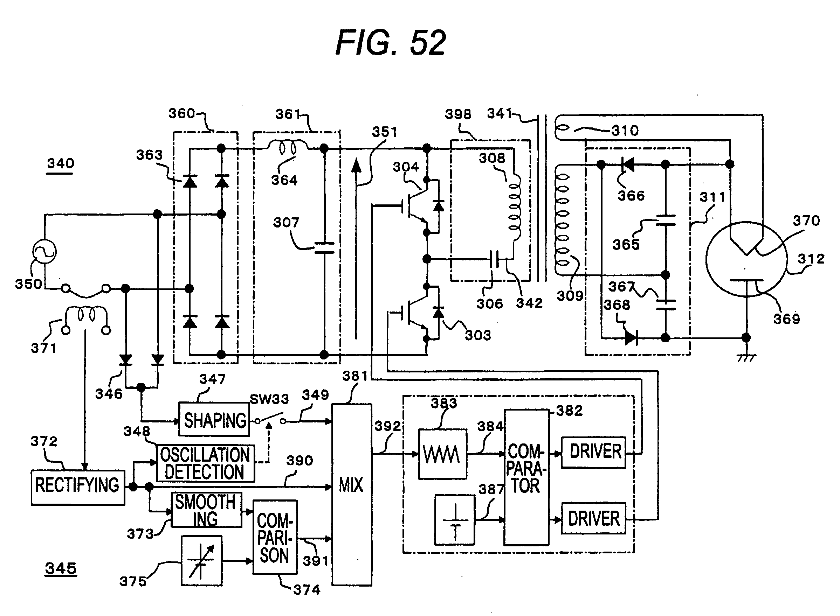

Embodiment 32 of the invention relates to a resonance circuit; a resonance circuit 398 is provided by eliminating a first capacitor 305 from a resonance circuit 336 made up of the first capacitor 305, a second capacitor 306, and a primary winding 308 of a transformer 341, as shown in a configuration diagram of FIG. 52.

Also in the embodiment, as in the embodiment described above, input current waveform information is converted into a switching frequency control signal and the switching frequency of a semiconductor switching element of an inverter is modulated, whereby it is made possible to suppress a power supply harmonic current.

### (Embodiment 33)

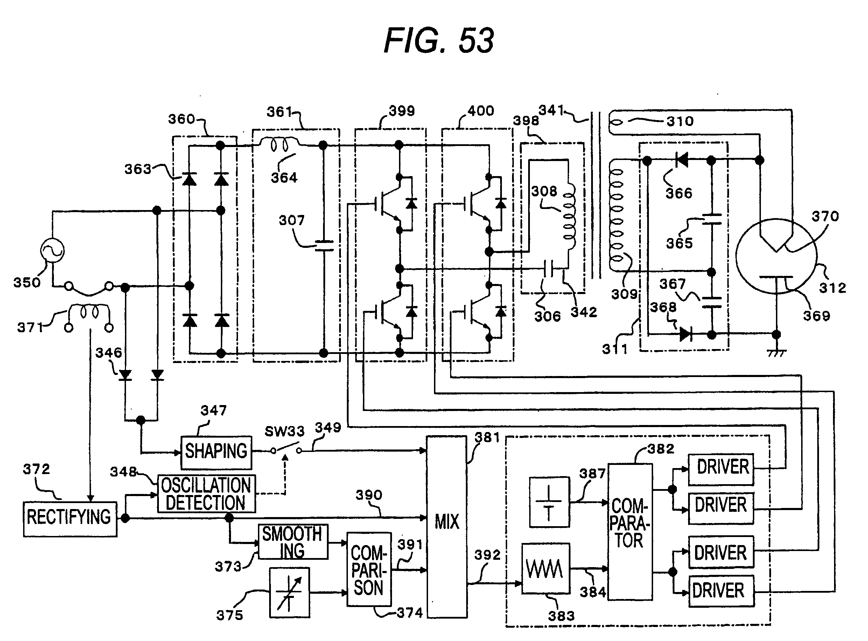

Embodiment 33 of the invention relates to the configuration of an inverter; first and second series circuits 399 and 400 each made up of two semiconductor switching elements are connected in parallel to a DC power supply provided by rectifying a commercial power supply and a resonance circuit 398 wherein a primary winding 308 of a transformer 341 and a second capacitor 306 are connected has one end connected to the midpoint of one series circuit and an opposite end connected to the midpoint of the other series circuit, as shown in FIG. 53.

Also in the embodiment, as in the embodiment described above, input current waveform information is converted into a switching frequency control signal and the switching frequency of a semiconductor switching element of an inverter is modulated, whereby it is made possible to suppress a power supply harmonic current.

### (Embodiment 34)

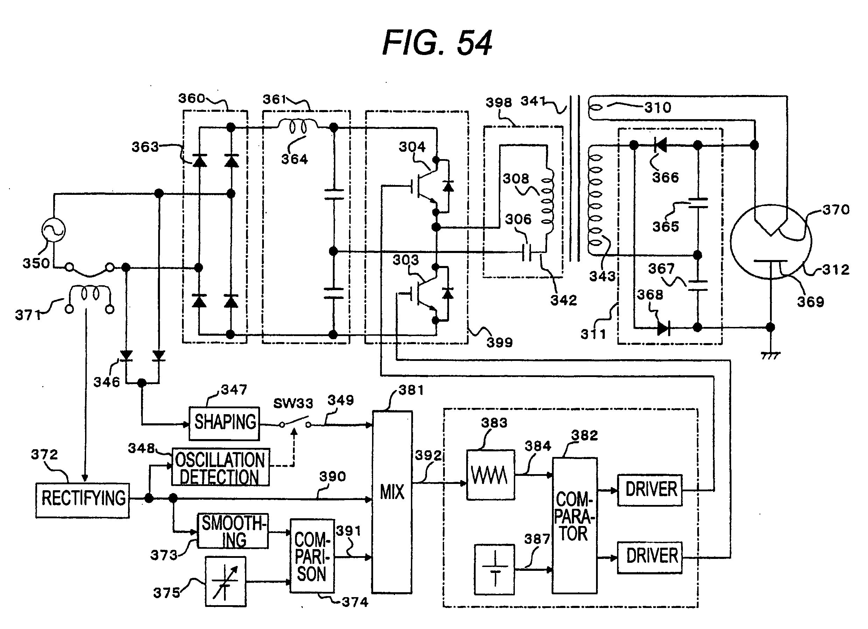

Embodiment 34 of the invention relates to the configuration of an inverter; a first series circuit 399 made up of two semiconductor switching elements is connected in parallel to a DC power supply provided by rectifying a commercial power supply and a resonance circuit 398 wherein a primary winding 308 of a transformer 341 and a second capacitor 306 are connected has one end connected to the midpoint of the first series circuit 399 and an opposite end connected to one end of the DC power supply in an AC equivalent circuit, as shown in FIG. 54.

Also in the embodiment, as in the embodiment described above, input current waveform information is converted into a switching frequency control signal and the switching frequency of a semiconductor switching element of an inverter is modulated, whereby it is made possible to suppress a power supply harmonic current.

### (Embodiment 35)

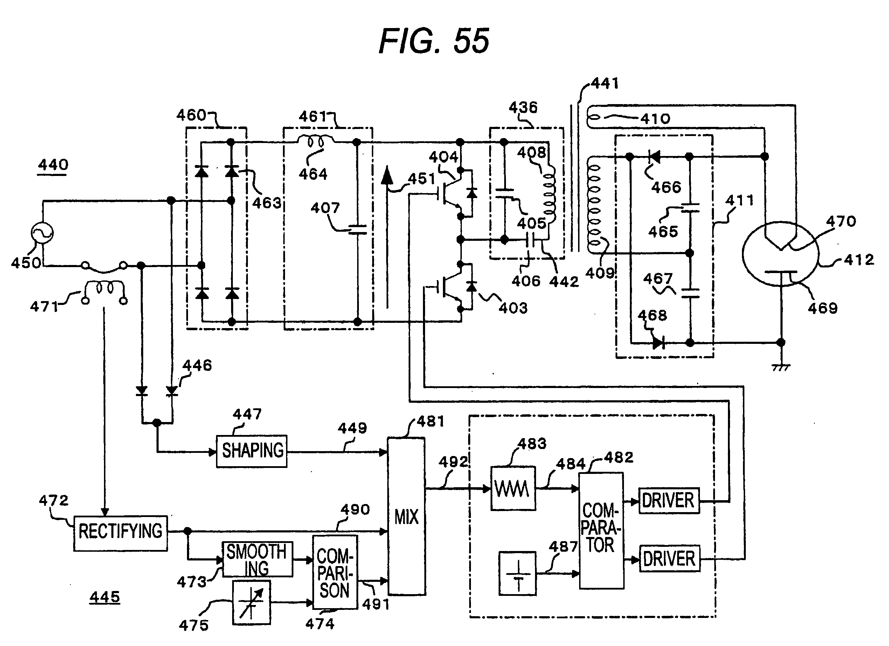

FIG. 55 is a block diagram to describe a high-frequency heating apparatus according to embodiment 35 of the invention. Embodiments 35 to 37 described below are examples wherein the configurations of embodiments 24 to 34 described above are partially changed and the switch operating at the starting time is deleted and direction connection is made. That is, the switch portions of embodiments 24 to 34 are made similar to those of embodiments 12 to 23 described above. Portions that can be quoted according to the embodiments will not be discussed again and only the basic portions will be discussed. In FIG. 55, the high-frequency heating apparatus is made up of an inverter 440, a controller 445 for controlling first and second semiconductor switching elements 403 and 404 of the inverter, and a magnetron 412. The inverter 440 contains an AC power supply 450, a diode bridge type rectifier 460, a smoothing circuit 461, a resonance circuit 436, the first and second semiconductor switching elements 403 and 404, and a voltage-doubling rectifier 411.

An AC voltage of the AC power supply 450 is rectified in the diode bridge type rectifier 460 made up of four diodes 463 and is converted into a DC power supply 451 through the smoothing circuit 461 made up of an inductor 464 and a third capacitor 407. Then, it is converted into a high-frequency AC by the resonance circuit 436 made up of a first capacitor 405, a second capacitor 406, and a primary winding 408 of a transformer 441 and the first and second semiconductor switching elements 403 and 404, and a high frequency high voltage is induced in a secondary winding 409 of the transformer through the transformer 441.

The high frequency high voltage is induced in the secondary winding 409 is applied to between an anode 469 and a cathode 470 of the magnetron 412 through the voltage-doubling rectifier 411 made up of a capacitor 465, a diode 466, a capacitor 467, and a diode 468. The transformer 441 also includes a tertiary winding 410 for heating the heater (cathode) 470 of the magnetron 412. The inverter 440 has been described.

Next, the controller 445 for controlling the first and second semiconductor switching elements 403 and 404 of the inverter 440 will be discussed. To begin with, a current detection section made up of a CT (Current Transformer) 471 provided between the AC power supply 450 and the diode bridge type rectifier 460 is connected to a rectifier 472 and the CT 471 and the rectifier 472 make up an input current detection section for detecting an input current to the inverter. The input current to the inverter is insulated and detected in the CT 471 and output is rectified in the rectifier 472 to generate input current waveform information 490.

A current signal provided by the rectifier 472 is smoothed in the smoothing circuit 473 and a comparator 474 makes a comparison between the current signal and a signal from an output setting section 475 for outputting an output setting signal corresponding to the other heating output setting. To control the magnitude of the power, the comparator 474 makes a comparison between the input current signal smoothed in the smoothing circuit 473 and the setting signal from the output setting section 475. Therefore, an anode current signal of the magnetron 412, a collector current signal of the first, second semiconductor switching element 403, 404 can also be used as an input signal in place of the input current signal smoothed in the smoothing circuit 473. That is, the comparator 474 outputs power control information 491 for controlling so that the output of the input current detection section becomes a predetermined value, but the comparator 474 and the power control information 491 are not indispensable for the invention as described later.

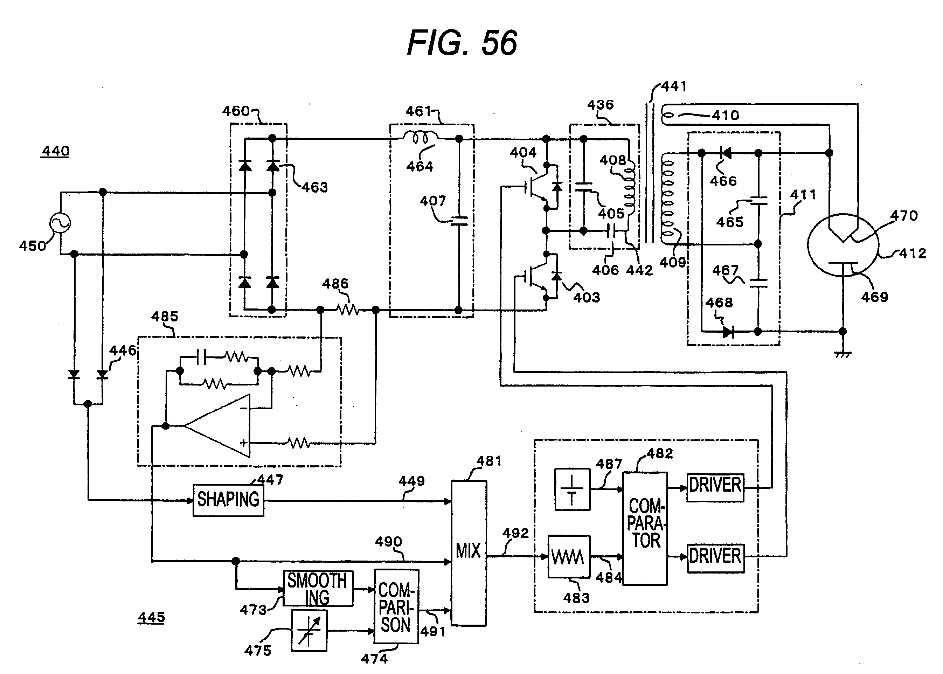

Likewise, as shown in FIG. 56, a current detection section made of a shunt resistor 486 provided between the diode bridge type rectifier 460 and the smoothing circuit 461 and an amplifier 485 for amplifying a voltage across the current detection section may make up an input current detection section and output thereof may be used as the input current waveform information 490. The shunt resistor 486 detects an input current after rectified in a signal direction by the diode bridge type rectifier 460.

On the other hand, in the embodiment, the controller 445 also includes an input voltage detection section made up of a pair of diodes 446 for detecting voltage of the AC power supply 450 and rectifying the voltage and a shaping circuit 447 for shaping the waveform of the rectified voltage to generate input voltage waveform information 449.

In the embodiment, a mixer 481 mixes and filters the input current waveform information 490 and the power control information 491 from the comparator 474 and also the input voltage waveform information 449 and outputs a switching frequency control signal 492. A sawtooth wave 484 output by a sawtooth wave generator 483 is frequency-modulated by the switching frequency control signal 492.

A comparator 482 makes a comparison between the sawtooth wave 484 and a slice control signal 487 described later, converts into a square wave, and feeds the provided square wave to a gate of the first, second semiconductor switching element 403, 404 through a driver.

In this case, the sawtooth wave from the sawtooth wave generator 483 frequency-modulated by the switching frequency control signal 492 is compared by the comparator 482 and turning on/off control of the semiconductor switching element of the inverter is performed for simplifying the input current waveform information detection system. Particularly, in the embodiment, the simplified configuration wherein the input current waveform information 490 is directly input to the mixer 481 is adopted.

The portion for generating a drive signal of the first, second semiconductor switching element 403, 404 from the switching frequency control signal 492 may be configured as a conversion section for converting the switching frequency control signal 492 into a drive signal of the semiconductor switching element of the inverter so that the switching frequency becomes high in a part where the input current from the AC power supply 450 is large and the switching frequency becomes low in a part where the input current is small, and the embodiment is not limited to the configuration.

To control turning on/off the semiconductor switching element 403, 404 relative to the input current waveform information 490, it is converted at a polarity to raise the switching frequency when the input current is large and to lower the switching frequency when the input current is small. Likewise, the input voltage waveform information 449 is also converted at a polarity to raise the switching frequency when the input voltage is large and to lower the switching frequency when the input voltage is small. Therefore, to make such a waveform, the input current waveform information is subjected to inversion processing in the mixer 481 for use.

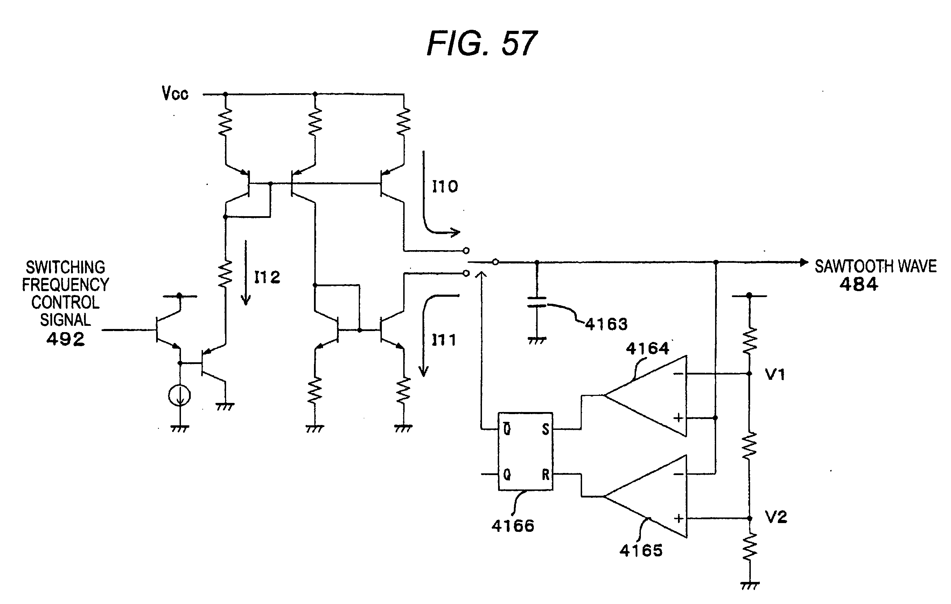

FIG. 57 is a detailed circuit diagram of the sawtooth wave (carrier wave) generator 483. Outputs of comparators 4164 and 4165 are input to an S terminal and an R terminal of an SR flip-flop 4166. Charge and discharge of a capacitor 4163 are switched according to the output polarity of a non-Q terminal of the SR flip-flop 4166; when the terminal is high, the capacitor 4163 is charged in a current I10 and when the terminal is low, the capacitor 4163 is discharged in a current I11. When the potential of the capacitor 4163 exceeds V1, the non-Q terminal of the SR flip-flop 4166 is set to low upon reception of output high of the comparator 4164; when the potential of the capacitor 4163 falls below V2, the non-Q terminal is reset to high upon reception of output high of the comparator 4165.

According to the configuration, the potential of the capacitor 4163 becomes like a sawtooth wave (triangular wave) and the signal is transported to the comparator 482.

The charge and discharge currents I10 and I11 of the capacitor 4163 are determined as a current I12 resulting from dividing the potential difference between the voltage of the switching frequency control signal 492 and Vcc by a resistance value is reflected, and the gradient of the triangular wave changes with the magnitude of the current. Therefore, the switching frequency is determined by the magnitude of I10, I11 on which the switching frequency control signal is reflected.

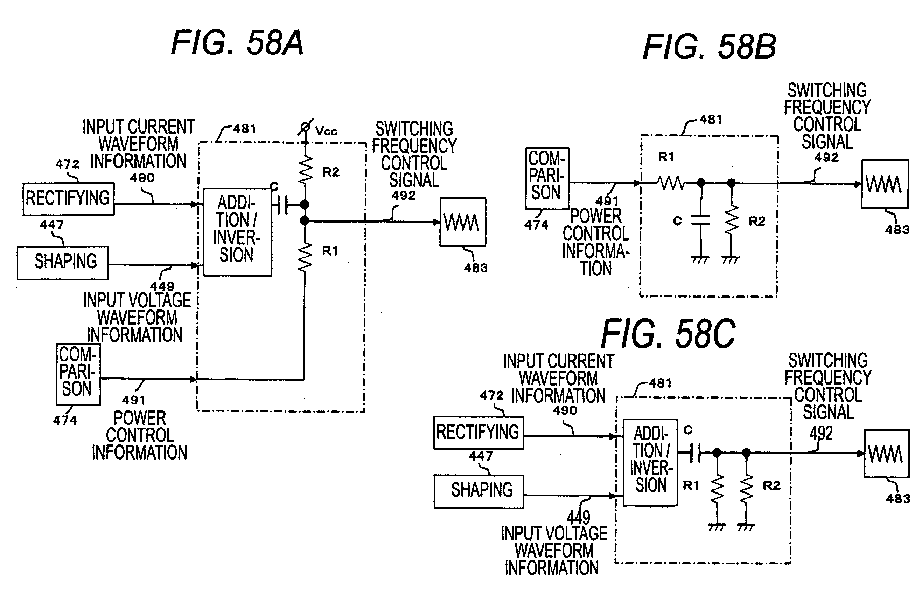

FIG. 58A shows an example of the mixer 481. The mixer 481 has three input terminals; the power control information 491, the input current waveform information 490, and the input voltage waveform information 449 are added to the terminals and are mixed in an internal circuit as shown in the figure. The input current waveform information 490 and the input voltage waveform information 449 are added to the mixer 481 and are inverted in an inversion circuit to generate a correction signal.

As in FIG. 58B, a high-cut filter is formed between outputs of the mixer 481 from the power control information 491 as shown in an AC equivalent circuit. Accordingly, a high-frequency component contained in power control as an obstacle to the input current waveform information 490 to shape the input current waveform is cut through the filter.

As in FIG. 58C, a low-cut filter is formed between outputs from the input current waveform information 490 and the input voltage waveform information 449 as shown in an AC equivalent circuit in the mixer 481. Therefore, the power control information 491 is converted into a DC component of output of the mixer 481 and the input current waveform information 490 and the input voltage waveform information 449 are converted into an AC component.

In embodiment 35, as described above, the input current waveform information 490 and the input voltage waveform information 449 are converted into the switching frequency of the semiconductor switching elements 403 and 404 of the inverter for use. The inverter generally used with a microwave oven is known; a commercial AC power supply of 50 to 60 cycles is rectified to a direct current, the provided DC power supply is converted into a high frequency of about 20 to 50 KHz, for example, by the inverter, and a high voltage provided by boosting the provided high frequency by a transformer and further rectifying it in a voltage-doubling rectifier is applied to a magnetron.

There are two types of inverter systems, for example, of an on time modulation system using a so-called single-ended voltage resonant-type circuit for using one semiconductor switching element for switching and changing the on time of a switching pulse for changing output, often used in a region where the commercial power supply is 100 V and a (half) bridge type voltage resonant-type circuit system for alternately turning on two semiconductor switching elements 403 and 404 connected in series and controlling the switching frequency for changing output, as shown in FIG. 55 of the invention. The bridge type voltage resonant-type circuit system is a system capable of adopting a simple configuration and control in such a manner that if the switching frequency is raised, output lowers and if the switching frequency is lowered, output increases.

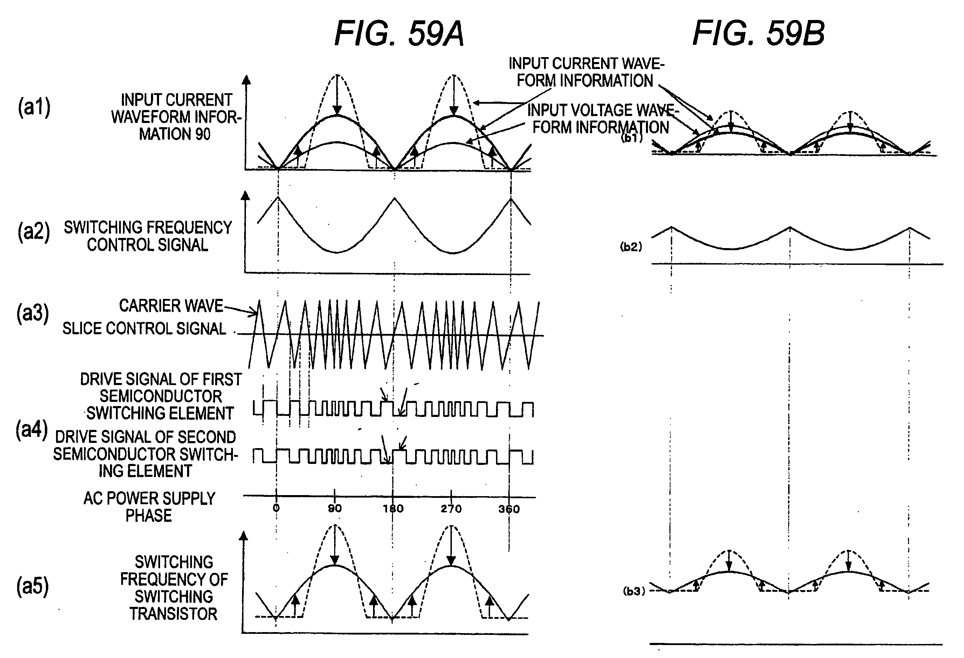

FIGs. 59A and 59B are drawings to describe waveforms provided according to embodiment 35 of the invention. This example is applied when the magnetron oscillates normally, namely, shows the state at the ordinary running time and both the input current waveform information and the input voltage waveform information are converted into drive signals of the semiconductor switching elements (switching transistors) 403 and 404 for use.

In FIGs. 59A and 59B, FIG. 59A shows the case where input current is large and FIG. 59B shows the case where input current is small. The solid line represents the signal shape after correction by the power control unit of the invention mainly used in the description to follow, and the dashed line represents the signal shape of instantaneously fluctuating output before correction from the AC power supply 450, as described later.

In FIG. 59A, the waveform of the input current waveform information in (a1) from the top is the input current waveform information 490 output by the rectifier 472 in FIG. 55 and output by the amplifier 485 in FIG. 56, and the dotted line shows a waveform before correction, caused by the nonlinear load characteristic of the magnetron. (a2) of FIG. 59A shows the switching frequency control signal 492 of correction output of the mixer 481. The switching frequency control signal 492 has the size changed following the input current waveform information 490 and the power control information 491 and further is output as an inversion waveform of (a1) to complement and correct the distortion component of the input current.
(a3) of FIG. 59A shows the sawtooth wave (carrier wave) frequency-modulated according to the switching frequency control signal shown in (a2) and slice control signal, and drive signals of on and off signals of the first and second semiconductor switching elements 403 and 404 shown in (a4) are generated. The two drive signals have on and off complementary relationship to each other.

The drive signals of the first and second semiconductor switching elements provided by inputting the sawtooth wave 484 (carrier wave) frequency-modulated and the slice control signal 487 to the comparator 482 and making a comparison therebetween by the comparator 482 undergo frequency modulation like the sawtooth wave as in (a4) of the figure.

That is, as shown in the figure, the frequency of the sawtooth wave is low in a portion where the amplitude value of the switching frequency control signal is large (in the proximity of 0 degrees, 180 degrees; the input current is small) and thus is corrected to the polarity to raise the input current from the resonance characteristic described above. Since the frequency of the sawtooth wave is high in a portion where the amplitude value of the switching frequency control signal is small (in the proximity of 90 degrees, 270 degrees; the input current is large), a pulse string of a frequency as in (a4) to correct to the polarity to lower the input current from the resonance characteristic described above is output as the drive signal of the semiconductor switching element. That is, since the switching frequency control signal (a2) is inverted as a correction waveform relative to the input current waveform information (a1), conversion is executed to inversion output opposite to (a1) in such a manner that the frequency is raised like the pulse string signal in (a4) in a portion where input of the input current waveform information (a1) is large (in the proximity of 90 degrees, 270 degrees) and the frequency is lowered in a portion where input of the input current waveform information (a1) is small (in the proximity of zero cross at 0 degrees, 180 degrees). Accordingly, the correction effect of the input waveform is provided; this effect is large particularly in the proximity of zero cross.

The waveform in (a5) at the bottom stage shows the switching frequency of the first, second semiconductor switching element 403, 404. A high-frequency sawtooth wave is frequency-modulated according to the switching frequency control signal (a2) of the correction waveform provided by inverting the input current waveform information shown in (a1) and a comparison is made between the frequency-modulated sawtooth wave and the slice control signal, whereby inverter conversion into a high frequency of 20 KHz to 50 KHz is executed and the drive signal in (a4) is generated. A semiconductor switching element 403, 404 is turned on and off in response to the drive signal (a4) and high-frequency power is input to the primary side of the transformer and a boosted high voltage is generated on the secondary side of the transformer. In (a5), to visualize how the frequency of each pulse of the on and off signals (a4) changes within the period of the commercial power supply, frequency information is plotted on the Y axis and the points are connected.

The description given above shows the same signals as in the state in which the input current from the AC power supply 450 is provided in an identical state (for example, sine wave). However, generally the input current from the AC power supply 450 deviates from the ideal sine wave and fluctuates from the instantaneous viewpoint. The dashed line signal indicates such an actual state. Generally, the actual signal deviates from the state of the ideal signal and instantaneous fluctuation occurs from the viewpoint of an instantaneous time period of a half period of the commercial power supply (0 to 180 degrees) as indicated by the dashed line. Such a signal shape occurs due to the boosting action of a transformer and a voltage-doubler circuit, the smoothing characteristic of a voltage-doubler circuit, the magnetron characteristic that an anode current flows only when the voltage is ebm or more. That is, it can be the that the fluctuation is indispensable in the inverter for the magnetron.

In the power control unit of the invention, the input current detection section provides the input current waveform information indicated by the dashed line on which the fluctuation state of the input current is reflected (see FIG. 59A (a1)) and the later control is performed based on the input current waveform information. This control is performed so that the instantaneous fluctuation of the input current waveform information occurring in a time period such as a half period, for example, is suppressed so as to approach an ideal signal as indicated by the arrow. This suppression is accomplished by adjusting the drive signal of the first, second semiconductor switching element 403, 404. Specifically, if the input current waveform information 490 is smaller than the ideal signal, the above-described frequency becomes lower and a correction is made for increasing the input current. If the input current waveform information is larger than the ideal signal, the above-described frequency becomes higher and a correction is made for decreasing the input current. Also in the instantaneous fluctuation in a shorter time period, the fluctuating waveform is reflected on frequency information and a similar correction to that described above is made.

A correction as indicated by the arrow is made to the input current waveform information 490 by the instantaneous fluctuation suppression action of the first, second semiconductor switching element 403, 404 to which the drive signal is given, and input close to the ideal wave is given to the magnetron at all times. The signals in (a2) and (a3) after the correction are not shown in the figure. The ideal signal is a virtual signal and the signal becomes a sine wave.

That is, in a short time period such as a half period of the commercial power supply, the sum total of instantaneous error or correction amount between the ideal signal waveform and the input current waveform information is roughly zero because the magnitude of the input current is controlled (power control) by another means. The portion wherein the input current does not flow due to a nonlinear load is corrected in the direction in which the input current is allowed to flow and thus the portion wherein the input current is large is decreased and the above-mentioned roughly zero is accomplished. This means that a correction is made so that the current waveform of even a nonlinear load can be assumed to be a linear load and since the commercial power supply voltage waveform is a sine wave, the ideal waveform becomes a sine wave like the current waveform flowing into a linear load.

Thus, to cancel out a change in the input current waveform and excess and deficiency relative to the ideal waveform, the input current is corrected at the opposite polarity to the waveform. Therefore, a rapid current change in the commercial power supply period caused by a nonlinear load of the magnetron, namely, distortion is canceled out in the control loop and input current waveform shaping is performed.

Further, since the control loop thus operates according to the input current waveform information following the instantaneous value of the input current, even if there are variations in the magnetron type or the magnetron characteristic or even if ebm (anode-to-cathode voltage) fluctuation caused by the magnetron anode temperature or the load in the microwave oven or power supply voltage fluctuation occurs, input current waveform shaping can be performed independently of the effects.

Particularly, in the invention, the semiconductor switching element is controlled based on instantaneously fluctuating input current waveform information. Instantaneous fluctuation of the input current is input directly to the mixer 481 in the form of the input current waveform information and is also reflected on the switching frequency control signal 492, so that the drive signal of the semiconductor switching element excellent in the tracking performance for suppression of input current waveform distortion and instantaneous fluctuation can be provided.

The subject of the invention is to convert the input current waveform information having the information into the drive signal of the semiconductor switching element of the inverter so as to suppress distortion of the input current waveform and instantaneous fluctuation. The power control information 391 is not indispensable for accomplishing the purpose, because the power control information 491 is information to control power fluctuation in a long time period, namely, in a period longer than the commercial power supply period or so and is not information for correcting instantaneous fluctuation in a short time period such as a half period of AC that the invention aims at. Therefore, adoption of the mixer 481, the comparator 482, and the sawtooth wave generator 483 is also only one example of the embodiment and an equivalent to the conversion section for performing the conversion described above may exist between the input current detection section and the semiconductor switching element.

To use the power control information, it is not indispensable either to input the power control information 491 for controlling so that the output of the input current detection section becomes a predetermined value into the mixer 481 as in the embodiment described above. That is, in the embodiment described above, the power control information 491 originates from the current detection section 471 for detecting the input current and the rectifier 472 (in FIG. 55) or the shunt resistor 486 and the amplifier 485 (in FIG. 56), but information for controlling so that the current or the voltage at an arbitrary point of the inverter 440 becomes a predetermined value can be input to the mixer 481 as the power control information. For example, resonance circuit voltage information 442 of the resonance circuit 462 as shown in FIGs. 55 and 56 can be used intact as the power control information or information provided after undergoing smoothing by the smoothing circuit 373 and comparison with the output setting signal in the comparator 474 can be used as the power control information.

Next, FIG. 59B shows the case where the input current is small relative to FIG. 59A by comparison; (b1) shows the input current waveform information when input is small and corresponds to (a1) of FIG. 59A, (b2) shows the switching frequency control signal and corresponds to (a2) of FIG. 59A, and (b3) shows the switching frequency of the semiconductor switching element and corresponds to (a5) of FIG. 59A. Although not shown in the figure, the same processing is also performed as comparison processing of sawtooth wave shown in (a3) and (a4) of FIG. 59A, of course.

By the way, when the input current is comparatively small as in FIG. 59B, the value of the input current waveform information also becomes small and thus the input current waveform shaping performance degrades. Here, again attention is focused on the input voltage waveform information. It is considered that the input voltage substantially is constant if the input current is lessened. Therefore, it can be expected that the input voltage waveform information can always be acquired in given magnitude regardless of whether the input current is small or large (comparison between (a1) of FIG. 59A and (b1) of FIG. 59B).

In the invention, not only the input current waveform information, but also the input voltage waveform information is input to the mixer 481. Therefore, if the input current is comparatively small, while rough input current waveform shaping (correction of fluctuation in a long time period) is performed according to the input voltage waveform information, fine input current waveform shaping (correction of fluctuation in a short time period such as a half period) is performed according to the input current waveform information and degradation of the input current waveform shaping performance is suppressed. That is, the actual input current fluctuation is kept track of by referencing the input voltage fluctuation and phase shift of the input current relative to the input voltage decreases. Therefore, if the input current is small, degradation of the power factor can also be prevented.

The description based on FIGs. 59A and 59B given above concerns the ordinary running time of the magnetron. Next, the operation at the starting time of the magnetron will be discussed. The starting time refers to the state of the preparation stage before the magnetron starts to oscillate although a voltage is applied to the magnetron (corresponding to the non-oscillation time). At this time, unlike the ordinary running time, the impedance between the anode and the cathode of the magnetron becomes equal to infinity.

By the way, in the invention, the voltage from the commercial AC power supply 450 is multiplied by power control based on the switching frequency control system, namely, the commercial AC power supply voltage is amplitude-modulated under the power control based on the switching frequency control system and is applied to the primary side of the transformer 441. The peak value of the applied voltage to the primary side is associated with the applied voltage to the magnetron 412 and the area defined from the applied voltage and the elapsed time is associated with the supplied power to the heater.

In the invention, at the starting time at which the input current waveform information 490 is small, the input voltage waveform information 449 is input to the mixer 481. That is, the mode in which the input voltage makes up for a shortage of the input current as a reference signal particularly at the starting time is adopted.

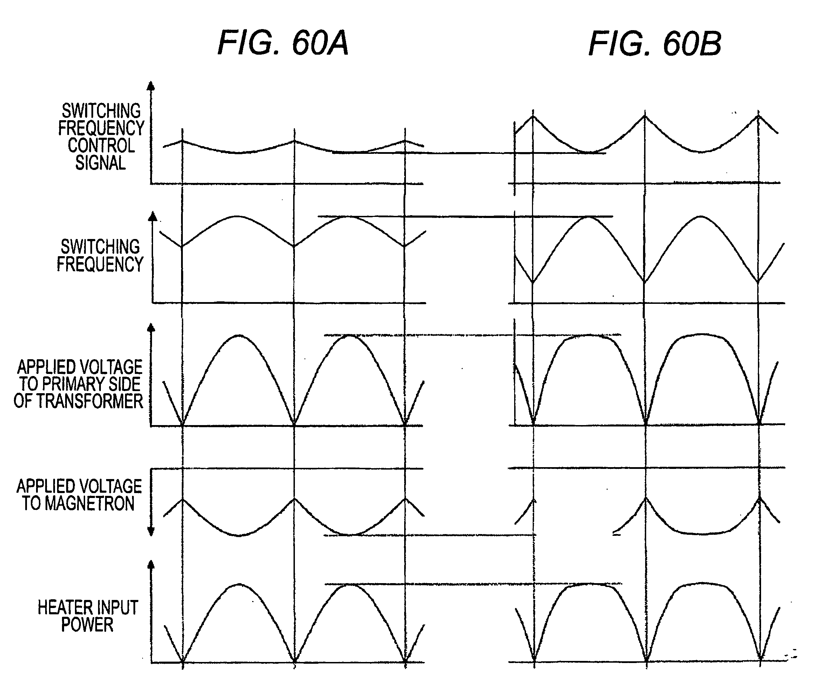

FIGs. 60A and 60B are drawings to describe by comparison the operation when the input voltage waveform information is added and the operation when the input voltage waveform information is not added; FIG. 60A shows the waveforms of the switching frequency control signal, the switching frequency, the applied voltage to the primary side of the transformer, the applied voltage to the magnetron, and the heater input power in order from the top when the input voltage waveform information is not added.

FIG. 60B describes the operation when the input voltage waveform information is added (at the starting time). Both FIGs. 60A and 60B show the case where the peak value of the applied voltage to the primary side of the transformer is limited according to the configuration of embodiment 41 described later. Further, in FIG. 60B, the peaks of the applied voltage to the primary side of the transformer and the applied voltage to the magnetron are suppressed by the action of the added input voltage waveform information and the waveforms show trapezoids. Like FIG. 59A, FIG. 60B also shows the waveforms of the switching frequency control signal, the switching frequency, the applied voltage to the primary side of the transformer, the applied voltage to the magnetron, and the heater input power in order from the top.

As shown in FIGs. 60A and 60B, the switching frequency of the semiconductor switching element is low in the vicinity of phases of 0 degrees and 180 degrees, and thus the amplification widths of the applied voltage to the primary side of the transformer and the applied voltage to the magnetron become comparatively large. On the other hand, since the switching frequency of the semiconductor switching element is high in the vicinity of phase 90 degrees, 270 degrees, the amplitude width is comparatively suppressed and the whole figure of the waveform becomes a trapezoid and a shape with a peak suppressed is shown from the relative relationship with the amplitude width at phases of 0 degrees and 180 degrees.

Making a comparison between the applied voltage to the magnetron in FIG. 60A and that in FIG. 60B, if the applied voltage to the magnetron is the same, the waveform area indicating the heater input power in FIG. 60B is larger. That is, the heater input power in FIG. 60B grows as compared with that in FIG. 60A, so that the heater is heated in a short time and it is made possible to shorten the start time.

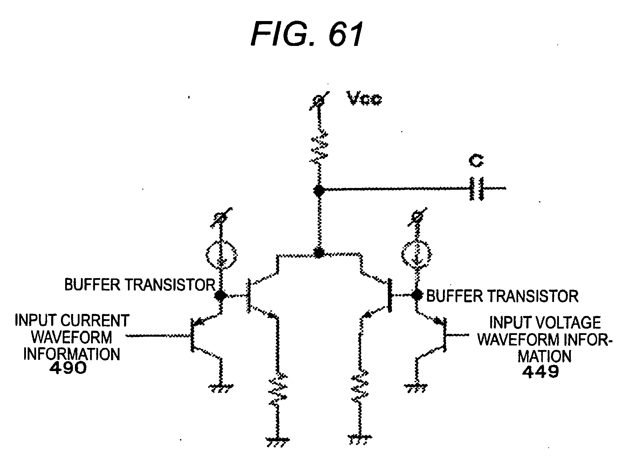

FIG. 61 is a drawing to show an example of an addition and inversion circuit for adding the input current waveform information and the input voltage waveform information, used in embodiment 35 of the invention. This addition and inversion circuit is provided in the mixer 481 as shown in FIG. 58.

The input current waveform information 490 and the input voltage waveform information 449 are input to buffer transistors and outputs thereof are input to two transistors having a common collector resistor. The buffer transistors are provided for preventing interference of the input current waveform information 490 and the input voltage waveform information 449. The current (emitter current) responsive to the magnitude of the input signal flows into emitter resistors of the two transistors, and a voltage drop occurs in the common collector resistor in response to the adding value of the emitter currents.

When the emitter voltage becomes high, the above-mentioned current increases and the voltage drop increases. That is, the collector voltage lowers and thus has the polarity inverted relative to the input signal. The signal conversion coefficient also changes according to the resistance value ratio between the collector resistor and the emitter resistor. From the viewpoint of interference with the power control signal, it is more effective to execute impedance conversion of the signal of the common collector resistor through a buffer and then connect the signal to a capacitor. Thus, the circuit adds the two signals and inverts and outputs the resultant signal.

### (Embodiment 36)

Embodiment 36 of the invention relates to the configuration of a controller (conversion section) and has the configuration wherein input current waveform information, input voltage waveform information, and power control information from a comparator 474 are mixed and filtered and converted into on and off drive signals of semiconductor switching element 403, 404 of an inverter for use.

According to the configuration, it is not necessary to process commercial power supply voltage waveform information conforming to the nonlinear load characteristic of a magnetron, a frequency modulation signal generator is simplified, and simplification and miniaturization can be accomplished. Further, according to the simple configuration, input voltage waveform information 449 is added to input current waveform information 490 and the heater power at the starting time is increased for shortening the start time and safety measures for preventing an excessive voltage from being applied to between an anode 469 and a cathode 470 of the magnetron are also added, so that the reliability of the product improves.

The configuration as described above is adopted, whereby a control loop using the input current waveform information 490 is specialized for waveform shaping of input current and a control loop using the power control information 491 is specialized for power control and they do not interfere with each other in the mixer 481 for holding the conversion efficiency.

### (Embodiment 37)

Embodiment 37 relates to the mixer 481 shown in FIGs. 55 and 56. The mixer is provided with three terminals to which the input current waveform information 490, the input voltage waveform information 449, and the power control information 491 are input as shown in FIG. 58A.

The input current waveform information 490 and the input voltage waveform information 449 are input to an addition and inversion circuit as shown in FIG. 61 and are added and inverted. The signal after subjected to the processing and the power control information 491 are input to a filter circuit made up of C, R1, and R2 and are filtered and then are output to a sawtooth wave generator as a switching frequency control signal 492. The filter circuit cuts the high-frequency component of the power control output 491 as shown in the equivalent circuit diagram of FIG. 58B. Such a configuration is adopted, whereby the high-frequency component hindering input current waveform shaping is cut, so that the quality of the input current waveform improves. On the other hand, a low-cut filter is formed for the input current waveform information 490 and the input voltage waveform information 449 to preserve the waveform, as shown in the equivalent circuit diagram of FIG. 58C.

While the various embodiments of the invention have been described, it is to be understood that the invention is not limited to the items disclosed in the embodiments and the invention also intends that those skilled in the art make changes, modifications, and application based on the Description and widely known arts, and the changes, the modifications, and the application are also contained in the scope to be protected.

While the invention has been described in detail with reference to the specific embodiments, it will be obvious to those skilled in the art that various changes and modifications can be made without departing from the scope of the invention.

This application is based on
Japanese Patent Application (No. 2006-154275) filed on June 2, 2006, Japanese Patent Application (No. 2006-158196) filed on June 7, 2006, Japanese Patent Application (No. 2006-158197) filed on June 7, 2006, and Japanese Patent Application (No. 2006-158198) filed on June 7, 2006.

### Industrial Applicability

According to the high-frequency dielectric heating power control of the invention, the control loop for correcting the input current by inverting so as to lessen the portion where the input current is large and increase the portion where the input current is small is formed. Therefore, if variations in the magnetron type or characteristic, anode-to-cathode voltage fluctuation or power supply voltage fluctuation exists, input current waveform shaping not affected by the variations or the fluctuation can be carried out according to the simple configuration and stable output of the magnetron can be accomplished according to the simple configuration. Since the input voltage waveform information is also input to the correction loop, the start time of the magnetron is shortened and the power factor at the low input current time is improved.

## Claims

1. A power control unit for a high-frequency dielectric heating for controlling an inverter (240) for driving a magnetron (212) wherein a series circuit made up of at least one set or more of at least two semiconductor switching elements (203,204), a resonance circuit (236), and a leakage transformer (241) are connected to a DC power supply provided by rectifying a voltage of an AC power supply, a switching frequency of the semiconductor switching element (203,204) is modulated to be converted into high-frequency power, and output occurring on the secondary side of the leakage transformer (241) is applied to the magnetron (212) for energizing the magnetron (212), the power control unit for a high-frequency dielectric heating comprising:
an input current detection section (271,286) which detects an input current input to the inverter (240) from the AC power supply and outputs input current waveform information (290);
an input voltage detection section (246,247) which detects an input voltage input to the inverter (240) from the AC power supply and outputs input voltage waveform information (249);
an addition section for adding the input current waveform information (290) and the input voltage waveform information (249); and
a conversion section (282,283) which converts the input current waveform information (290) and the input voltage waveform information (249), which are added, into a drive signal of the switching element (203, 204) of the inverter (240); wherein
the addition section includes a mixer (281) being connected between the input current detection section (271,286) and the conversion section (282,283) to mix the input current waveform information (290), the input voltage waveform information (249), and power control information (291) for controlling so that the current or the voltage at an arbitrary point of the inverter (240) becomes a predetermined value to generate a switching frequency control signal, and
the conversion section (282,283) is adapted to convert the switching frequency control signal into the drive signal so as to suppress the peak of the voltage applied to the magnetron (212).

2. The power control unit for a high-frequency dielectric heating as claimed in claim 1, further comprising:
wherein the conversion section (282,283) converts the switching frequency control signal into the drive signal so as to raise the switching frequency in a portion where the input current is large and lower the switching frequency in a portion where the input current is small.

3. The power control unit for a high-frequency dielectric heating as claimed in claim 1,
wherein the conversion section (282,283) includes a frequency limitation section which sets an upper limit and a lower limit to the high-frequency switching frequency.

4. The power control unit for a high-frequency dielectric heating as claimed in claim 1,
wherein the conversion section (282,283) further includes a duty control section which controls the on-duty of the high-frequency switching, and
wherein an operation range of the duty control section is set so as to complement by duty control at least a range in which the high-frequency switching frequency is limited to an upper limit of a frequency limitation section.

5. The power control unit for a high-frequency dielectric heating as claimed in claim 1, wherein the mixer (281) mixes the input current waveform information (290) and power control information (291) for controlling so that output of the input current detection section (271,286) becomes a predetermined value to generate a switching frequency control signal.

6. The power control unit for a high-frequency dielectric heating as claimed in claim 1,
wherein the input current detection section (271,286) has a current transformer (271) which detects the input current and a rectifier which rectifies the detected input current and outputs the rectified current.

7. The power control unit for a high-frequency dielectric heating as claimed in claim 1, further comprising:
a comparator which makes a comparison between the input current and an output setting signal to output the power control information (291).

8. The power control unit for a high-frequency dielectric heating as claimed in claim 1,
wherein the input current detection section (271,286) detects and outputs a unidirectional current after rectifying the input current of the inverter (240).

9. The power control unit for a high-frequency dielectric heating as claimed in claim 1, wherein the input current detection section (271,286) has a shunt resistor (286) which detects a unidirectional current after the input current of the inverter (240) is rectified and an amplifier (285) which amplifies a voltage occurring across the shunt resistor (286),
wherein output provided by the amplifier (285) is input directly to the mixer (281) as the input current waveform information (290), and
wherein the power control unit for a high-frequency dielectric heating further comprises a comparator (274) which makes a comparison between the output provided by the amplifier (285) and an output setting signal and outputs the power control information (291).

10. The power control unit for a high-frequency dielectric heating as claimed in claim 1, wherein the mixer (281) has a configuration which cuts a high-frequency component of the power control information (291).

11. The power control unit for a high-frequency dielectric heating as claimed in claim 1, wherein the mixer (281) has a circuit configuration switched between an increase control time of the input current and a decrease control time of the input current.

12. The power control unit for a high-frequency dielectric heating as claimed in claim 1, wherein in the mixer (281), a time constant increases at an increase control time of the input current and decreases at a decrease control time of the input current.

13. The power control unit for a high-frequency dielectric heating as claimed in claim 1, wherein resonance circuit voltage control information for controlling the resonance circuit voltage to a predetermined value is input to the mixer (281) and a circuit configuration of the mixer (281) is switched in response to the magnitude of the resonance circuit voltage.

14. The power control unit for a high-frequency dielectric heating as claimed in claim 1, wherein in the mixer (281), a time constant increases when the resonance circuit voltage is low, and decreases when the resonance circuit voltage is high.

15. The power control unit for a high-frequency dielectric heating as claimed in claim 1,
wherein the input current detection section (271) has a filter circuit which attenuates a high frequency spectral region of the AC power supply and a high-frequency portion of a high switching frequency.

16. The power control unit for a high-frequency dielectric heating as claimed in claim 1, wherein the input voltage detection section (246,247) includes:
a set of diodes (246) for detecting an input voltage input to the inverter (240) from the AC power supply; and
a shaping circuit (247) for shaping the waveform of the input voltage detected by the diodes and outputting the shaped voltage.

17. The power control unit for a high-frequency dielectric heating as claimed in claim 16,
wherein the shaping circuit has a configuration for attenuating a high frequency spectral region of the input voltage.

18. The power control unit for a high-frequency dielectric heating as claimed in claim 1,
wherein the conversion section (282,283) is implemented as a frequency modulation circuit for superposing a carrier wave having a frequency set according to the switching frequency control signal and a slice control signal to generate the drive signal of the semiconductor switching element.

19. The power control unit for a high-frequency dielectric heating as claimed in claim 1, further comprising:
an oscillation detector which detects the oscillation of the magnetron (212),
wherein the magnitude of the input voltage waveform information (249) from the input voltage detection section (246,247) is switched in response to the oscillation of the magnetron (212) or non-oscillation of the magnetron (212) detected by the oscillation detector.

## Patentansprüche

1. Leistungs-Steuereinheit für eine dielektrische Hochfrequenz-Heizeinrichtung zum Steuern eines Wechselrichters (240), mit dem ein Magnetron (212) angesteuert wird, wobei eine Reihenschaltung, die aus wenigstens einer oder mehreren Gruppe/n aus wenigstens zwei Halbleiter-Schaltelementen (203, 204) besteht, ein Resonanzkreis (236) und ein Streufeldtransformator (241) mit einer Gleichstromquelle verbunden sind, die bereitgestellt wird, indem eine Spannung einer Wechselstromquelle gleichgerichtet wird, wobei eine Schaltfrequenz des Halbleiter-Schaltelements (203, 204) moduliert wird, um in Hochfrequenzleis-tung umgewandelt zu werden, und Ausgang, der an der Sekundärseite des Streufeldtransformators (241) auftritt, an das Magnetron (212) angelegt wird, um dem Magnetron (212) Energie zuzuführen, und wobei die Leistungs-Steuereinheit für eine dielektrische Hochfrequenz-Heizeinrichtung **dadurch gekennzeichnet ist, dass** sie umfasst:
einen Eingangsstrom-Erfassungsabschnitt (271, 286), der einen Eingangsstrom erfasst, der von der Wechselstromquelle in den Wechselrichter (240) eingegeben wird, und eine Eingangsstrom-Wellenforminformation (290) ausgibt,
einen Eingangsspannung-Erfassungsabschnitt (246, 247), der eine Eingangsspannung erfasst, die von der Wechselstromquelle in den Wechselrichter (240) eingegeben wird, und eine Eingangsspannung-Wellenforminformation (249) ausgibt,
einen Additionsabschnitt zum Addieren der Eingangsstrom-Wellenforminformation (290) und der Eingangsspannung-Wellenforminformation (249), und
einen Umwandlungsabschnitt (282, 283), der die Eingangsstrom-Wellenforminformation (290) und die Eingangsspannung-Wellenforminformation (249), die addiert wurden, zu einem Ansteuersignal für das Schalten des Schaltelements (203, 204) des Wechselrichters (240) umwandelt,
wobei der Additionsabschnitt einen Mischer (281) enthält, der zwischen den Eingangsstrom-Erfassungsabschnitt (271, 286) und den Umwandlungsabschnitt (282, 283) geschaltet ist, um die Eingangsstrom-Wellenforminformation (290), die Eingangsspannung-Wellenforminformation (249) und eine Leistungs-Steuerinformation (291) zu mischen und so zu steuern, dass der Strom oder die Spannung an einem beliebigen Punkt des Wechselrichters (240) einen vorgegebenen Wert annimmt, um ein Schaltfrequenz-Steuersignal zu erzeugen, und
wobei der Umwandlungsabschnitt (282, 283) ausgebildet ist, um das Schaltfrequenz-Steuersignal in das Ansteuersignal umzuwandeln, um so die Spitze der an dem Magnetron (212) angelegten Spannung zu vermindern.

2. Leistungs-Steuereinheit für eine dielektrische Hochfrequenz-Heizeinrichtung nach Anspruch 1,
wobei der Umwandlungsabschnitt (282, 283) das Schaltfrequenz-Steuersignal zu dem Ansteuersignal umwandelt, um so die Schaltfrequenz in einem Abschnitt zu erhöhen, in dem der Eingangsstrom stark ist, und die Schaltfrequenz in einem Abschnitt zu senken, in dem der Eingangsstrom schwach ist.

3. Leistungs-Steuereinheit für eine dielektrische Hochfrequenz-Heizeinrichtung nach Anspruch 1,
wobei der Umwandlungsabschnitt (282, 283) einen Frequenz-Begrenzungsabschnitt enthält, der einen oberen Grenzwert und einen unteren Grenzwert für die Hochfrequenz-Schaltfrequenz festlegt.

4. Leistungs-Steuereinheit für eine dielektrische Hochfrequenz-Heizeinrichtung nach Anspruch 1,
wobei der Umwandlungsabschnitt (282, 283) des Weiteren einen Schaltdauer-Steuerabschnitt (duty control section) enthält, der die Ein-Schaltdauer (on-duty) des Hochfrequenz-Schaltens steuert, und
ein Betriebsbereich des Schaltdauer-Steuerabschnitts so eingestellt ist, dass er über Schaltdauer-Steuerung (duty control) wenigstens einen Bereich ergänzt, in dem die Hochfrequenz-Schaltfrequenz auf eine obere Grenze eines Frequenz-Begrenzungsabschnitts begrenzt ist.

5. Leistungs-Steuereinheit für eine dielektrische Hochfrequenz-Heizeinrichtung nach Anspruch 1, wobei der Mischer (281) die Eingangsstrom-Wellenforminformation (290) und eine Leistungs-Steuerinformation (291) mischt und so steuert, dass die Ausgabe des Eingangsstrom-Erfassungsabschnitts (271, 286) einen vorgegebenen Wert annimmt, um ein Schaltfrequenz-Steuersignal zu erzeugen.

6. Leistungs-Steuereinheit für eine dielektrische Hochfrequenz-Heizeinrichtung nach Anspruch 1, wobei:
der Eingangsstrom-Erfassungsabschnitt (271, 286) einen Stromumwandler (271), der den Eingangsstrom erfasst, und einen Gleichrichter aufweist, der den erfassten Eingangsstrom gleichrichtet und den gleichgerichteten Strom ausgibt.

7. Leistungs-Steuereinheit für eine dielektrische Hochfrequenz-Heizeinrichtung nach Anspruch 1, die des Weiteren umfasst:
einen Komparator, der einen Vergleich zwischen dem Eingangsstrom und einem Ausgangs-Einstellsignal anstellt und Leistungs-Steuerinformation (291) ausgibt.

8. Leistungs-Steuereinheit für eine dielektrische Hochfrequenz-Heizeinrichtung nach Anspruch 1, wobei:
der Eingangsstrom-Erfassungsabschnitt (271, 286) nach Gleichrichten des Eingangsstroms des Wechselrichters (240) einen unidirektionalen Strom erfasst und ausgibt.

9. Leistungs-Steuereinheit für eine dielektrische Hochfrequenz-Heizeinrichtung nach Anspruch 1, wobei der Eingangsstrom-Erfassungsabschnitt (271, 286) einen Nebenschlusswiderstand (286), der einen unidirektionalen Strom erfasst, nachdem der Eingangsstrom des Wechselrichters gleichgerichtet ist, und einen Verstärker (285) aufweist, der eine Spannung verstärkt, die über den Nebenschlusswiderstand (286) auftritt,
wobei durch den Verstärker (285) bereitgestellter Ausgang in den Mischer (281) direkt als die Eingangsstrom-Welleninformation (290) eingegeben wird, und
wobei die Leistungs-Steuereinheit für eine dielektrische Hochfrequenz-Heizeinrichtung des Weiteren einen Komparator (274) umfasst, der einen Vergleich zwischen dem durch den Verstärker (285) bereitgestellten Ausgang und einem Ausgangs-Einstellsignal anstellt und die Leistungs-Steuerinformation (291) ausgibt.

10. Leistungs-Steuereinheit für eine dielektrische Hochfrequenz-Heizeinrichtung nach Anspruch 1, wobei der Mischer (281) eine Konfiguration hat, die eine Hochfrequenzkomponente der Leistungs-Steuerinformation (291) abschneidet.

11. Leistungs-Steuereinheit für eine dielektrische Hochfrequenz-Heizeinrichtung nach Anspruch 1, wobei der Mischer (281) eine Schaltungskonfiguration hat, die zwischen einer Erhöhungs-Steuerzeit des Eingangsstroms und einer Verringerungs-Steuerzeit des Eingangsstroms umgeschaltet wird.

12. Leistungs-Steuereinheit für eine dielektrische Hochfrequenz-Heizeinrichtung nach Anspruch 1, wobei in dem Mischer (281) eine Zeitkonstante zu einer Erhöhungs-Steuerzeit des Eingangsstroms zunimmt und zu einer Verringerungs-Steuerzeit des Eingangsstroms abnimmt.

13. Leistungs-Steuereinheit für eine dielektrische Hochfrequenz-Heizeinrichtung nach Anspruch 1, wobei Resonanzkreisspannungs-Steuerinformation zum Steuern der Resonanzkreisspannung auf einen vorgegebenen Wert in den Mischer (281) eingegeben wird und eine Schaltungskonfiguration des Mischers (281) in Reaktion auf den Betrag der Resonanzkreisspannung umgeschaltet wird.

14. Leistungs-Steuereinheit für eine dielektrische Hochfrequenz-Heizeinrichtung nach Anspruch 1, wobei in dem Mischer (281) eine Zeitkonstante zunimmt, wenn die Resonanzkreisspannung niedrig ist, und abnimmt, wenn die Resonanzkreisspannung hoch ist.

15. Leistungs-Steuereinheit für eine dielektrische Hochfrequenz-Heizeinrichtung nach Anspruch 1,
wobei der Eingangsstrom-Erfassungsabschnitt (271) eine Filterschaltung aufweist, die einen Hochfrequenz-Spektralbereich der Wechselspannungsquelle und einen Hochfrequenzabschnitt einer hohen Schaltfrequenz dämpft.

16. Leistungs-Steuereinheit für eine dielektrische Hochfrequenz-Heizeinrichtung nach Anspruch 1,
wobei der Eingangsspannungs-Erfassungsabschnitt (246, 247) enthält:
eine Gruppe von Dioden (246) zum Erfassen einer Eingangsspannung, die von der Wechselstromquelle in den Wechselrichter (240) eingegeben wird, und
eine Formungsschaltung (247) zum Formen der Wellenform der durch die Dioden erfassten Eingangsspannung und zum Ausgeben der geformten Spannung.

17. Leistungs-Steuereinheit für eine dielektrische Hochfrequenz-Heizeinrichtung nach Anspruch 16,
wobei die Formungsschaltung eine Konfiguration zum Dämpfen eines Hochfrequenz-Spektralbereiches der Eingangsspannung hat.

18. Leistungs-Steuereinheit für eine dielektrische Hochfrequenz-Heizeinrichtung nach Anspruch 1,
wobei der Umwandlungsabschnitt (282, 283) als eine Frequenzmodulationsschaltung implementiert ist, mit der eine Trägerwelle, die eine entsprechend dem Schaltfrequenz-Steuersignal eingestellte Frequenz hat, und ein Slice-Steuersignal (slice control signal) übereinandergelegt werden, um das Ansteuersignal des Halbleiter-Schaltelementes zu erzeugen.

19. Leistungs-Steuereinheit für eine dielektrische Hochfrequenz-Heizeinrichtung nach Anspruch 1, die des Weiteren umfasst:
einen Schwingungsdetektor, der die Schwingung des Magnetrons (212) erfasst,
wobei der Betrag der Eingangsspannungs-Welleninformation (249) von dem Eingangsspannungs-Erfassungsabschnitt (246, 247) in Reaktion auf die Schwingung des Magnetrons (212) oder die Nicht-Schwingung des Magnetrons (212) umgestellt wird, die von dem Schwingungsdetektor erfasst wird.

## Revendications

1. Unité de commande de puissance pour chauffage diélectrique haute fréquence afin de commander un onduleur(240) pour attaquer un magnétron (212), dans lequel un circuit série, composé d'au moins un jeu ou plus d'au moins deux éléments de commutation à semi-conducteur (203, 204), un circuit à résonance (236) et un transformateur de fuite (241) sont reliés à une alimentation en courant continu obtenue en redressant la tension d'une alimentation en courant alternatif, la fréquence de commutation de l'élément de commutation à semi-conducteur (203, 204) étant modulée pour être convertie en une puissance haute fréquence, et une sortie apparaissant sur le secondaire du transformateur de fuite (241) étant appliquée au magnétron (212) pour activer le magnétron (212), l'unité de commande de puissance pour un chauffage diélectrique haute fréquence comprenant :
une section de détection de courant d'entrée (271, 286) qui détecte le courant d'entrée reçu en entrée de l'onduleur (240) à partir de l'alimentation en courant alternatif et délivre en sortie des informations sur la forme d'onde du courant d'entrée (290),
une section de détection de tension d'entrée (246, 247) qui détecte la tension d'entrée reçue en entrée de l'onduleur (240) à partir de l'alimentation en courant alternatif et délivre en sortie des informations sur la forme d'onde de la tension d'entrée (249),
une section d'addition permettant d'additionner les informations sur la forme d'onde du courant d'entrée (290) et les informations sur la forme d'onde de la tension d'entrée (249), et
une section de conversion (282, 283) qui convertit les informations sur la forme d'onde du courant d'entrée (290) et les informations sur la forme d'onde de la tension d'entrée (249), qui sont additionnées, en un signal d'attaque de l'élément de commutation (203, 204) de l'onduleur (240), où
la section d'addition inclut un mélangeur (181) relié entre la section de détection de courant d'entrée (271, 286) et la section de conversion (282, 283) pour mélanger les informations sur la forme d'onde du courant d'entrée (290), les informations sur la forme d'onde de la tension d'entrée (249) et des informations de commande de puissance (291) afin de réaliser une commande de sorte que le courant ou la tension à un point arbitraire de l'onduleur (240) devienne une valeur prédéterminée pour générer un signal de commande de fréquence de commutation, et
la section de conversion (282, 283) est conçue pour convertir le signal de commande de fréquence de commutation en un signal d'attaque de sorte à supprimer la crête de tension appliquée au magnétron (212).

2. Unité de commande de puissance pour chauffage diélectrique haute fréquence selon la revendication 1,
dans laquelle la section de conversion (282, 283) convertit le signal de commande de fréquence de commutation en un signal d'attaque de façon à élever la fréquence de commutation dans une portion où le courant d'entrée est fort et abaisser la fréquence de commutation dans une portion où le courant d'entrée est faible.

3. Unité de commande de puissance pour chauffage diélectrique haute fréquence selon la revendication 1,
dans laquelle la section de conversion (282, 283) inclut une section de limitation de fréquence qui fixe une limite supérieure et une limite inférieure à la fréquence de commutation haute fréquence.

4. Unité de commande de puissance pour chauffage diélectrique haute fréquence selon la revendication 1,
dans laquelle la section de conversion (282, 283) inclut en outre une section de commande de rapport cyclique qui régule l'état conducteur de la commutation à haute fréquence, et
dans laquelle la plage de fonctionnement de la section de commande de rapport cyclique est réglée de sorte à compléter par contrôle cyclique au moins une plage dans laquelle la fréquence de commutation haute fréquence est limitée à une borne supérieure d'une section de limitation de fréquence.

5. Unité de commande de puissance pour chauffage diélectrique haute fréquence selon la revendication 1,
dans laquelle le mélangeur (281) mélange les informations sur la forme d'onde du courant d'entrée (290) et des informations de commande de puissance (291) afin de réaliser une commande de sorte que la sortie de la section de détection de courant d'entrée (271, 286) devienne une valeur prédéterminée pour générer un signal de commande de fréquence de commutation.

6. Unité de commande de puissance pour chauffage diélectrique haute fréquence selon la revendication 1,
dans laquelle la section de détection de courant d'entrée (271, 286) comporte un transformateur de courant (271) qui détecte le courant d'entrée, ainsi qu'un redresseur qui redresse le courant d'entrée détecté et délivre en sortie le courant redressé.

7. Unité de commande de puissance pour chauffage diélectrique haute fréquence selon la revendication 1, comprenant en outre :
un comparateur qui effectue une comparaison entre le courant d'entrée et un signal de réglage de sortie pour délivrer en sortie les informations de commande de puissance (291).

8. Unité de commande de puissance pour chauffage diélectrique haute fréquence selon la revendication 1,
dans laquelle la section de détection de courant d'entrée (271, 286) détecte et délivre en sortie un courant unidirectionnel après redressement du courant d'entrée de l'onduleur (240).

9. Unité de commande de puissance pour chauffage diélectrique haute fréquence selon la revendication 1,
dans laquelle la section de détection de courant d'entrée (271, 286) comporte une résistance de dérivation (286) qui détecte un courant unidirectionnel après que le courant d'entrée de l'onduleur (240) a été redressé, ainsi qu'un amplificateur (285) qui amplifie la tension apparaissant aux bornes de la résistance de dérivation (286),
dans laquelle la sortie délivrée par l'amplificateur (285) est reçue directement en entrée du mélangeur (281) comme informations sur la forme d'onde du courant d'entrée (290), et
dans laquelle l'unité de commande de puissance pour un chauffage diélectrique haute fréquence comprend en outre un comparateur (274) qui effectue une comparaison entre la sortie délivrée par l'amplificateur (285) et un signal de réglage de sortie, et qui délivre en sortie les informations de commande de puissance (291).

10. Unité de commande de puissance pour chauffage diélectrique haute fréquence selon la revendication 1,
dans laquelle le mélangeur (281) présente une configuration qui coupe une composante haute fréquence des informations de commande de puissance (291).

11. Unité de commande de puissance pour chauffage diélectrique haute fréquence selon la revendication 1,
dans laquelle le mélangeur (281) présente une configuration de circuit qui commute entre un instant de commande d'augmentation du courant d'entrée et un instant de commande de diminution du courant d'entrée.

12. Unité de commande de puissance pour chauffage diélectrique haute fréquence selon la revendication 1,
dans laquelle, dans le mélangeur (281), une constante de temps augmente à un instant de commande d'augmentation du courant d'entrée et diminue à un instant de commande de diminution du courant d'entrée.

13. Unité de commande de puissance pour chauffage diélectrique haute fréquence selon la revendication 1,
dans laquelle des informations de commande de tension de circuit à résonance permettant de réguler la tension du circuit à résonance à une valeur prédéterminée sont appliqués en entrée du mélangeur (281) et la configuration de circuit du mélangeur (281) est commutée en réponse à l'amplitude de la tension du circuit à résonance.

14. Unité de commande de puissance pour chauffage diélectrique haute fréquence selon la revendication 1,
dans laquelle, dans le mélangeur (281), une constante de temps augmente lorsque la tension du circuit à résonance est basse et diminue lorsque la tension du circuit à résonance est haute.

15. Unité de commande de puissance pour chauffage diélectrique haute fréquence selon la revendication 1,
dans laquelle la section de détection de courant d'entrée (271) possède un circuit de filtrage qui atténue une zone spectrale de haute fréquence de l'alimentation en courant alternatif ainsi qu'une portion à haute fréquence de la fréquence élevée de commutation.

16. Unité de commande de puissance pour chauffage diélectrique haute fréquence selon la revendication 1,
dans laquelle la section de détection de tension d'entrée (246, 247) inclut :
un jeu de diodes (246) permettant de détecter une tension d'entrée reçue en entrée de l'onduleur (240) à partir de l'alimentation en courant alternatif, et
un circuit de mise en forme (247) permettant de mettre en forme le signal de la tension d'entrée détectée par les diodes et permettant de délivrer en sortie la tension mise en forme.

17. Unité de commande de puissance pour chauffage diélectrique haute fréquence selon la revendication 16,
dans laquelle le circuit de mise en forme présente une configuration destinée à atténuer la zone spectrale haute fréquence de la tension d'entrée.

18. Unité de commande de puissance pour chauffage diélectrique haute fréquence selon la revendication 1,
dans laquelle la section de conversion (282, 283) est mise en oeuvre sous forme d'un circuit de modulation de fréquence destiné à superposer une porteuse présentant une fréquence réglée en fonction du signal de commande de fréquence de commutation et un signal de commande de découpage pour générer le signal d'attaque de l'élément de commutation à semi-conducteur.

19. Unité de commande de puissance pour chauffage diélectrique haute fréquence selon la revendication 1, comprenant en outre :
un détecteur d'oscillation qui détecte l'oscillation du magnétron (212),
dans laquelle l'amplitude des informations sur la forme d'onde de la tension d'entrée (249) provenant de la section de détection de tension d'entrée (246, 247) est commutée en réponse à l'oscillation du magnétron (212) ou du défaut d'oscillation du magnétron (212) détectés par le détecteur d'oscillation.
